# EUROPEAN PATENT APPLICATION

(11) **EP 3 428 872 A1**
(43) Date of publication of application: **16.01.2019**
(21) Application number: 17763466.4
(22) Date of filing: 12.01.2017
(51) Int. Cl.: G06Q 50/22, G06Q 30/06, H04W 4/12, H04L 12/58, G06Q 50/28, G06Q 20/10, A01K 21/00, A01K 29/00

(54) **METHOD FOR BUYING/SELLING PET BY USING CUSTOMIZED PET SELECTIVE MATING AND SERVER FOR EXECUTING SAME**

(30) Priority: 10.03.2016 KR 20160028801
(71) Applicant: Jin, Jeong Sik, Jeonju-si, Jeollabuk-do 54823 (KR)
(72) Inventor: JIN, Jeong Sik, Jeonju-si, Jeollabuk-do 54823 (KR); JIN, So Hui, Jeonju-si, Jeollabuk-do 54823 (KR); CHOI, Eun Suk, Jeonju-si, Jeollabuk-do 54823 (KR)
(74) Representative: Beetz & Partner mbB
(86) International application number: PCT/KR2017/000425
(87) International publication number: WO 2017/155203

(57) **Abstract**

According to one embodiment of the present invention, a pet buying/selling method executed by a pet buying/selling server comprises the steps of: providing a customized pet down payment down payment request message to a customized pet purchaser terminal when customized pet purchasing requisition information including a mother pet and a father pet is received from the customized pet purchaser terminal; providing the customized pet purchasing requisition information to a corresponding customized pet producer terminal so as to request mating of the mother pet and the father pet when customized pet down payment down payment information is received from the customized pet purchaser terminal; receiving information according to the mating of the mother pet and the father pet from the customized pet producer terminal so as to provide the received information to the customized pet purchaser terminal; providing, to the customized pet purchaser terminal and a customized sibling pet purchaser terminal, information on customized sibling pets born according to the mating of the mother pet and the father pet from the customized pet producer terminal; and processing buying/selling when customized sibling pet final selection information is received from the customized pet purchaser terminal or customized sibling pet purchasing requisition information is received from the customized sibling pet purchaser terminal.

## Description

### TECHNICAL FIELD

The present invention relates to a selling/buying method using customized pet selective mating, and more specifically, to a selling/buying method using customized pet selective mating, which allows a buyer to directly pick a pet available for selective mating which has been registered by a producer, to apply for selective mating, and to be sold and bought.

### DISCUSSION OF RELATED ART

The pet market is growing as population ageing accelerates and single-person households increase. With the recent trend of taking pets not simply as animals but as life companions, relevant industry is flourishing.

In adopting a pet, one needs to pick one from among several pets already born through an online or offline shop. Baby pets just born are raised in showcases with a size of 60cm or less.

Baby pets may suffer from severe disease due to poor immunity despite being given ventilation, temperature control, and ultraviolet sanitizer.

As such, many pets may die of disease before adopted, which is not good in terms of economy. Pet shops do not deal with such fundamental showcase problems but just take a passive post measure.

Korean Patent Application Publication No. 10-2002-0085651 discloses a pet registration management system that may catch the root of pets, protect the pets against rare diseases due to disorderly mating, and keep the bloodline pure, but fails to disclose any scheme to resolve the above-problems.

### SUMMARY

### [OBJECTS]

The present invention aims to provide a pet selling/buying method, and a server to execute the method, using customized pet selective mating, in which a buyer may directly select pets available for selective mating and registered by a producer, apply for selective mating, and buy a customized pet, thereby addressing the problem with the convention art that a buyer cannot but to choose, buy, or adopt one from among pets already born.

Another object of the present invention is to provide a pet selling/buying method, and a server to execute the method, using customized pet selective mating, which may save purchase costs of pets by selective mating and hence customized production.

Still another object of the present invention is to provide a pet selling/buying method, and a server to execute the method, using customized pet selective mating, which allows for quick and safe adoption of a customized pet by letting the customized pet live together with its mother pet before adoption, and upon adoption, delivering the customized pet via a customized sibling pet delivery vehicle.

Yet still another object of the present invention is to provide a pet selling/buying method, and a server to execute the method, which may provide the buyer or his terminal with parent pet information considering the kind and breed of parent pets and the condition and region of the mother pet and father pet, thus allowing for purchase of a desired breed of customized pet and breed preservation.

Yet still another object of the present invention is to provide a pet selling/buying method, and a server to execute the method, which may provide a handling fee to the customized pet buyer when he or others buy customized sibling pets born by selective mating at the same time

The present invention is not limited to the foregoing objects, and other unmentioned objects will be apparent to one of ordinary skill in the art from the following description.

### [CONFIGURATION]

According to an embodiment, a method for selling and buying a pet, executed on a pet selling/buying server, comprises providing a customized pet down payment request message to a customized pet buyer terminal upon receiving customized pet purchase request information containing a mother pet and a father pet from the customized pet buyer terminal, requesting to mate the father pet and the mother pet by providing the customized pet purchase request information to a corresponding customized pet producer terminal upon receiving customized pet down payment information from the customized pet buyer terminal; receiving information according to the mating of the father pet and the mother pet from the customized pet producer terminal and providing the information to the customized pet buyer terminal, providing information about customized sibling pets born by the mating of the father pet and the mother pet from the customized pet producer terminal to the customized pet buyer terminal and a customized sibling pet buyer terminal, and processing sale and purchase upon receiving customized sibling pet final selection information from the customized pet buyer terminal or receiving customized sibling pet purchase request information from the customized sibling pet buyer terminal.

According to an embodiment, a pet selling/buying server comprises a producer information DB storing information about parent pets that may be selectively mated and registered by a customized pet producer and information about customized sibling pets born by selective mating performed by the customized sibling pet, a buyer information DB storing information about a customized pet for which a customized pet buyer requests selective mating and information about a customized sibling pet for which a customized sibling pet buyer requests for selective mating, a member information DB storing membership information about each of a normal user, the customized pet producer, the customized pet buyer, and the customized sibling pet buyer, a request information DB used to exchange necessary information among the customized pet producer, the customized pet buyer, and the customized sibling pet buyer, and a controller providing a customized pet down payment request message to a terminal of the customized pet buyer upon receiving customized pet purchase request information containing a mother pet and a father pet, which are retrieved via the producer information DB, from the customized pet buyer terminal, requesting to mate the father pet and the mother pet by providing the customized pet purchase request information to a corresponding terminal of the customized pet producer upon receiving customized pet down payment information from the customized pet buyer terminal, storing the information about the customized pet for which the mating is requested in the buyer information DB, receiving information according to the mating of the father pet and the mother pet from the customized pet producer terminal and providing the information to the customized pet buyer terminal, providing information about customized sibling pets born by the mating of the father pet and the mother pet from the customized pet producer terminal to the customized pet buyer terminal and a terminal of the customized sibling pet buyer, and processing sale and purchase using the member information DB upon receiving customized sibling pet final selection information from the customized pet buyer terminal or receiving customized sibling pet purchase request information from the customized sibling pet buyer terminal.

Details of other embodiments are set forth in the detailed description and the drawings.

Advantages and/or features of the present invention, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

### [EFFECTS OF THE INVENTION]

According to the present invention, a buyer may directly select pets available for selective mating and registered by a producer, apply for selective mating, and buy a customized pet, thereby addressing the problem with the convention art that a buyer cannot but to choose, buy, or adopt one from among pets already born.

According to the present invention, customized production by selective mating may save purchase costs for pets.

According to the present invention, the customized pet, before adoption, may be left with its parent pets, and upon adoption, it together with its mother pet may be delivered to the buyer on the customized pet delivery vehicle, thus allowing for quick and safe adoption.

The present invention may provide the buyer or his terminal with parent pet information considering the kind and breed of parent pets and the condition and region of the mother pet and father pet, thus allowing for purchase of a desired breed of customized pet and breed preservation.

The present invention may provide a handling fee to the customized pet buyer when he or others buy customized sibling pets born by selective mating at the same time in the same place as the customized pet, allowing the customized pet buyer to create a profit.

### BRIEF DESCRIPTION OF DRAWINGS

Fig. 1 is a block diagram illustrating a pet selling/buying system according to an embodiment of the present invention;
Fig. 2 is a block diagram illustrating the pet selling/buying server of Fig. 1;
Figs. 3 and 4 are flowcharts illustrating a pet selling/buying method performed on the pet selling/buying server of Fig. 2;
Figs. 5 to 10 are views illustrating examples of an interface input screen for applying for user membership on a user terminal;
Fig. 11 is a view illustrating an example of a user member login interface input screen on a user terminal;
Figs. 12 to 27 are views illustrating examples of an interface input screen for parent pet information available for selective mating on a customized pet producer terminal;
Figs. 28 to 33 are views illustrating examples of a parent pet search window enabling a search for information about parent pets available for selective mating entered by a customized pet producer on a customized pet buyer terminal;
Figs. 34 to 41 are views illustrating examples of an interface input screen for customized pet buying application information, including information about parent pets available for selective mating, for applying for customized pet purchase after the parent pet information is searched on a customized pet buyer terminal;
Figs. 42 to 47 illustrate examples of interface input screens for customized sibling pet information which is information about the pregnancy and birth of the mother pet, and growth of customized sibling pets and mating information for the parent pets requested for mating by the customized pet buyer on the customized pet producer terminal;
Figs. 48 to 52 illustrate examples of customized sibling pet search windows for searching for information about customized sibling pets that may be bought among the customized sibling pets remaining after the customized pet buyer and customized sibling pet buyer purchase on the customized sibling pet buyer terminal;
Figs. 53 to 57 illustrate examples of interface input screens about customized sibling pet purchase request information for requesting to buy among customized sibling pets available for purchase on the customized sibling pet buyer terminal;
Figs. 58 to 60 are views illustrating examples of interface input screens for information for final selection of a favorite customized pet among customized sibling pets on the customized pet buyer terminal;
Figs. 61 to 63 are views illustrating examples of interface input screens for information of final selection of the favorite customized sibling pet among the customized sibling pets remaining after the customized pet buyer and the customized sibling pet buyer purchase on the customized sibling pet buyer terminal; and
Figs. 64 to 69 are views illustrating examples of interface input screens for information for sale/purchase and management of pets on the website for users by the customized pet producer, customized pet buyer, and customized sibling pet buyer on the customized pet producer terminal, the customized pet buyer terminal, and the customized sibling pet buyer terminal.

### DESCRIPTION OF EXEMPLARY EMBODIMENTS

Hereinafter, embodiments of the present invention are described in detail with reference to the accompanying drawings.

As used herein, the term "customized pet" means an animal that is born as a customized pet buyer directly chooses pets available for selective mating, which have been registered by a customized pet producer, and applies for selective mating.

As used herein, the term "customized pet producer" means a user who has pets available for mating.

As used herein, the term "customized pet buyer" means a user who buys an animal that is born as he directly chooses pets available for selective mating, which have been registered by a customized pet producer, and applies for selective mating.

As used herein, the term "customized sibling pet" means a sibling of an animal which is born as a customized pet buyer directly chooses and applies for selective mating.

As used herein, the term "customized sibling pet buyer" means a user who buys a sibling of an animal which is born as a customized pet buyer directly chooses and applies for selective mating.

As used herein, the term "mother pet" means a female animal of the parents of a customized pet.

As used herein, the term "father pet" means a male animal of the parents of a customized pet.

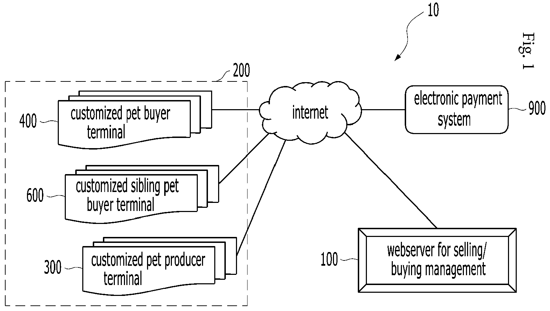

Fig. 1 is a block diagram illustrating a pet selling/buying system according to an embodiment of the present invention.

Referring to Fig. 1, a pet selling/buying system 10 includes a pet selling/buying server 100, a user terminal 200, and an electronic payment system 900.

The pet selling/buying server 100 is used by a customized pet producer terminal 300, a customized pet buyer terminal 400, and a customized sibling pet buyer terminal 500. For example, the pet selling/buying server 100 is a common server computer. The pet selling/buying server 100 includes one or more of a wired communication means and a wireless communication means for accessing the Internet. The pet selling/buying server 100 performs a pet selling/buying method of the present invention. By performing the pet selling/buying method, the pet selling/buying server 100 provides an online buying/selling service among a customized pet producer, a customized pet buyer, and a customized sibling pet buyer who access the Internet.

The user terminal 200 is a terminal of a user (i.e., the customized pet producer, customized pet buyer, or customized sibling pet buyer) of the pet selling/buying service provided from the pet selling/buying server 100. For example, the user terminal 200 may be any kind of wired or wireless device capable of accessing the Internet, such as a desktop personal computer (PC), laptop computer, tablet PC, or smartphone. The customized pet producer terminal 300 includes one or more of a wired communication means and a wireless communication means for accessing the Internet. The Internet corresponds to an example of a communication network.

The user terminal 200 includes the customized pet producer terminal 300, the customized pet buyer terminal 400, and the customized sibling pet buyer terminal 500.

The customized pet producer terminal 300 is used by the customized pet producer who has pets available for mating. The customized pet buyer terminal 400 is used by the customized pet buyer who buys an animal which is born as the customized pet buyer directly chooses pets available for selective mating, which have been registered by the customized pet producer, and applies for selective mating.

The customized pet buyer terminal 400 is used by the customized pet buyer who buys an animal born as the customized pet buyer directly chooses and applies for selective mating.

The customized sibling pet buyer terminal 500 is used by the customized sibling pet buyer who buys a sibling of an animal which is born as the customized pet buyer directly chooses and applies for selective mating.

The electronic payment system 900 provides a service to enable online payment for a pet between the customized pet producer and the customized pet buyer or between the customized pet producer and the customized sibling pet buyer. The electronic payment system 900 may be implemented using the conventional art.

The electronic payment system 900 may include a payment gateway (PG) server. The PG server provides a service to instead process transactions with financial organization on the Internet. The PG server instead provides services for small payments, such as payments using credit cards, cell phones, or automatic response service (ARS).

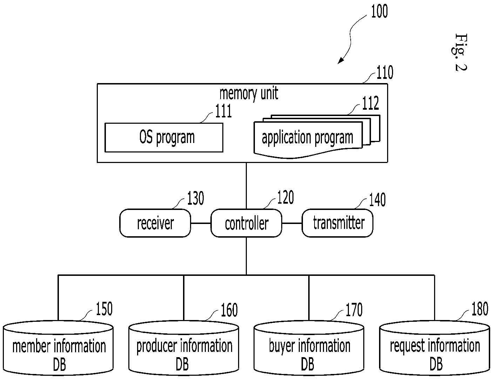

Fig. 2 is a block diagram illustrating the pet selling/buying server of Fig. 1.

Referring to Fig. 2, the pet selling/buying server 100 includes a memory 110, a controller 120, a receiver 130, a transmitter 140, a member information DB 150, a producer information DB 160, a buyer information DB 170, and a request information DB 180.

The memory 110 stores computer programs. The computer programs stored in the memory 110 include an operating system (OS) program 111 and application programs 112. The application programs 112 include a computer program to perform a pet selling/buying method of the present invention. The memory 110 also stores data used to perform the pet selling/buying method of the present invention in addition to the computer programs.

The controller 120 controls the receiver 130, the transmitter 140, the member information DB 150, the producer information DB 160, the buyer information DB 170, and the request information DB 180, performing the pet selling/buying method of the present invention.

The receiver 130 receives data via a wired or wireless circuit line. The wired or wireless circuit line may be connected to the Internet or may directly be connected to another device.

The transmitter 140 transmits data via a wired or wireless circuit line. The wired or wireless circuit line may be connected to the Internet or may directly be connected to another device. The circuit line via which the transmitter 140 transmits data may be the same as the circuit line via which the receiver 130 receives data.

The member information DB 150 is a set of data representing personal information about normal users, customized pet producers, customized pet buyers, and customized sibling pet buyers. The member information DB 150 stores the respective personal information of the normal users, customized pet producers, customized pet buyers, and customized sibling pet buyers, including their IDs, passwords, names, phone numbers, cellphone numbers, email addresses, addresses, zip codes, address 1 and address 2, and member codes automatically generated. The information in the member information DB 150 may be encrypted for security.

The producer information DB 160 is a set of data representing information about the customized pet producer's parent pets available for selective mating. The producer information DB 160 stores various information for each of customized pet producers who have online registered parent pets available for selective mating in the pet selling/buying server 100, the various information including parent pet information, including the type, breed, region, gender, and name of each parent pet, the price of the customized pet, the age, size, weight, and photo of each parent pet, the bloodline certificate photo, the child pet photo, and other information about the parent pets, and parent pet codes, as automatically generated, customized sibling pet information including information about whether each of customized sibling pets born from the mother pet after selective mating is pregnant or mates, the date of mating, the due date, the date born, the date scheduled for delivery, the date delivered, the final selection date, the customized sibling pet count, the image of the customized sibling pet, the photo of the customized sibling pet, and other information about the customized sibling pet, and producer information including customized pet final selection information and customized sibling pet final selection information. The information in the producer information DB 160 may be encrypted for security.

The buyer information DB 170 is a set of data representing information about the customized pet for which the customized pet buyer has requested selective mating. The buyer information DB 170 stores the type of the parent pets, which each customized pet buyer chooses and applies for selective mating for, among the information about the parent pets available for selective mating entered by the customized pet producer, the breed and region of the parent pets, the mother pet, the father pet, the price of the customized pet, the down payment amount for the customized pet, or other information about the parent pets of the customized pet, the fetus name of the customized pet of the customized pet buyer who applied for selective mating, the cost for shipping to the destination, the zip code of the destination for shipping, destination address 1, destination address 2, and bank name, account number, and account holder name of the account for the sale processing fee for the customized pet, or other customized pet buyer information, and customized pet buyer information such as customized pet final selection information and customized pet code automatically generated, and for the customized sibling pet which each customized sibling pet buyer requests to buy among the customized sibling pets born by the selective mating of the customized pet buyer, the type, breed, and the region of the customized sibling pet, the mother pet, the father pet, the price of the customized sibling pet, the down payment amount for the customized sibling pet, the cost for shipping to the destination, the zip code of the destination, destination address 1, destination address 2, or other customized sibling pet information and customized sibling pet buyer information such as the customized sibling pet final selection information, customized sibling pet code, and the customized sibling pet name automatically generated. The information in the buyer information DB 170 may be encrypted for security.

The request information ID 180 is a set of data representing request information used to exchange necessary information among the customized pet producer, the customized pet buyer, and the customized sibling pet buyer. The request information DB 180 stores the member code, the parent pet code, the customized pet code, the customized sibling pet code, names, request information, the date of registration, or other request information. The information in the request information DB 180 may be encrypted for security.

Referring back to Fig. 2, the member information DB 150, the producer information DB 160, the buyer information DB 170, and the request information DB 180 may be stored in the memory 110 or may be stored in an external device connected via the communication network.

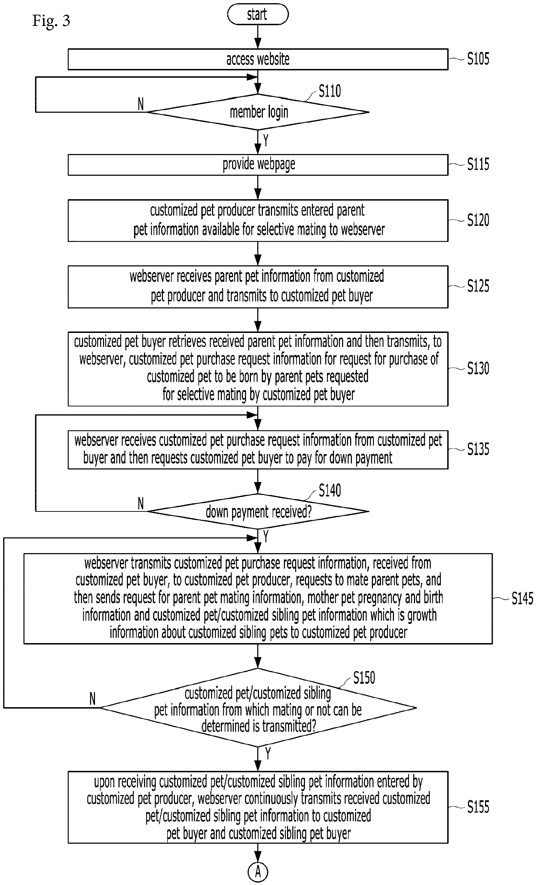

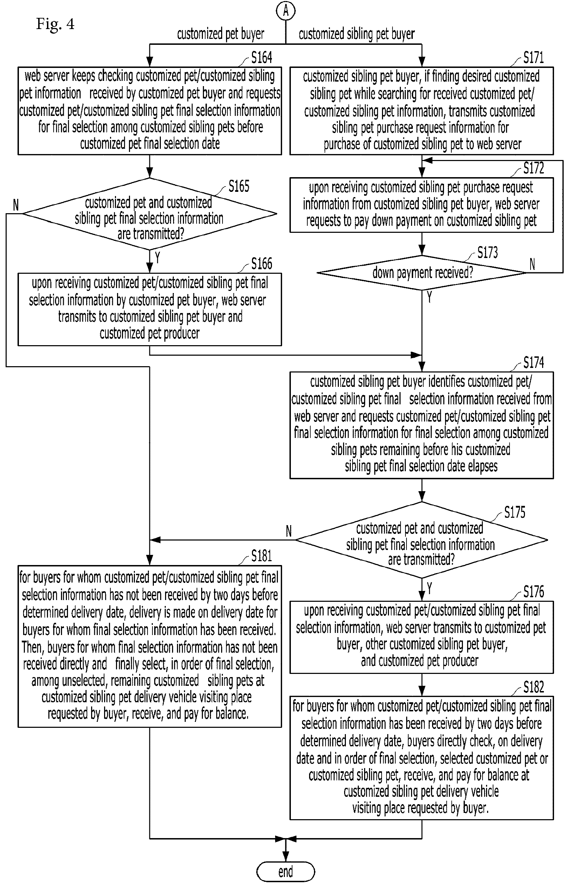

Figs. 3 and 4 are flowcharts illustrating a pet selling/buying method performed on the pet selling/buying server of Fig. 2.

Referring to Figs. 2 to 4, the user drives a browser on the user terminal and accesses, via a search window, a website for users to drive a per-buyer customized pet selective mating and selling/buying system of the present invention (S105).

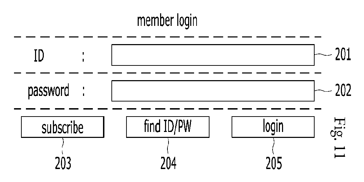

The pet selling/buying server 100 provides a user member login interface to the terminal 200 of the user (i.e., the customized pet producer, customized pet buyer, or customized sibling pet buyer) accessing, online, the website for users and requests the user's ID and password. Here, the user member login interface is described below in greater detail with reference to Fig. 11.

For the ID and password entered by the user, upon detecting an ID matching the ID received from the member information DB 150, the pet selling/buying server 100 determines whether the received password matches the password shown in the same row as the received ID, and if not matching, re-requests an ID and a password (S110).

The pet selling/buying server 100 regards the user as a member only when both the ID and password received from the user match and provides all the webpages of the user website (S115).

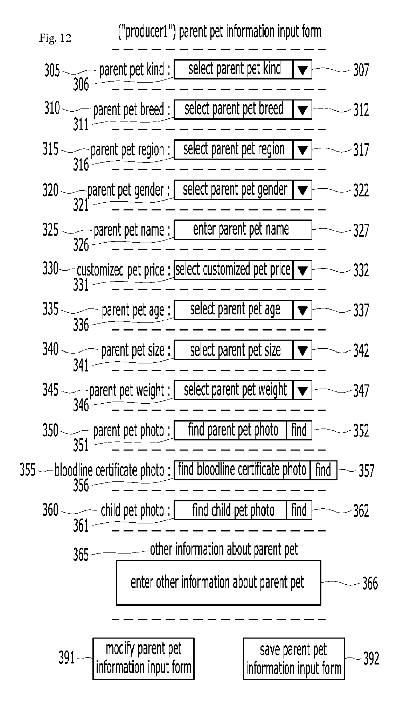

The customized pet producer enters, through the parent pet information input interface of the customized pet producer terminal 300, which is provided from the pet selling/buying server 100, information about the parent pets available for selective mating online, such as the type, breed, region, gender, and name of the parent pets, the price of the customized pet, the age, size, weight, and photo of the parent pets, the bloodline certificate photo, the photo of sibling pets, other information about the parent pets, and other parent pet information such as the parent pet code automatically generated and transmits the information to the pet selling/buying server 100 (S120). At this time, the parent pet information input interface is described below in greater detail with reference to Figs. 12 to 27.

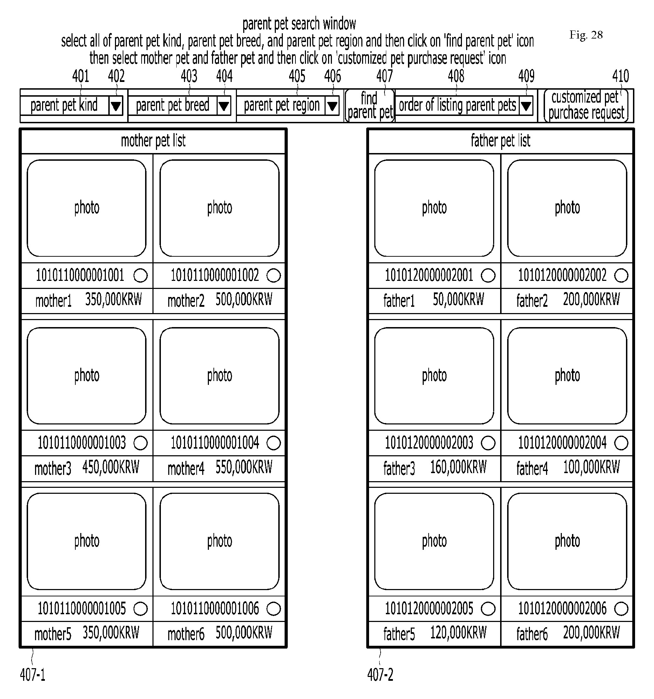

Upon receiving the parent pet information through the parent pet information input interface of the customized pet producer terminal 300 provided from the pet selling/buying server 100, the customized pet producer transmits the parent pet information to a parent pet search interface of the customized pet buyer terminal 400 (S125). At this time, the parent pet search interface is described below in greater detail with reference to Figs. 28 to 33.

A first selling/buying method is described. If the customized pet buyer who is the first buyer selects three conditions (e.g., the parent pets of the same kind, the parent pets of the same breed, and the parent pets of the same region) to which the pet selling/buying server 100 has limited for the best customized pet among the information about the parent pets available for selective mating provided on the parent pet search interface of the customized pet buyer terminal 400 and then searches for the parent pets, then a mother pet list and a father pet list entered by the customized pet producer meeting the three conditions are shown.

At this time, the customized pet buyer selects his desired mother pet and father pet from the mother pet list and the father pet list on the parent pet search interface of the customized pet buyer terminal 400 and clicks on the 'apply for purchase of customized pet' icon.

Then, customized pet purchase request information is entered through the customized pet buyer interface of the customized pet buyer terminal 400, such as the type, breed, and region of the parent pets the purchase of which has been applied for, the mother pet, the father pet, the price of the customized pet, the down payment amount for the customized pet, and information required to be additionally entered, such as the fetus name of the customized pet, the cost for shipping to the destination, the zip code of the destination, destination address 1, destination address 2, bank name, account number, account holder information, and customized pet code automatically generated and is then transmitted to the pet selling/buying server 100 (S130).

Upon receiving the customized pet purchase request information from the customized pet buyer interface of the customized pet buyer terminal 400, the pet selling/buying server 100 sends a request for payment for a down payment for the customized pet to a user pet selling/buying management interface of the customized pet buyer terminal 400 (S135).

When the customized pet buyer pays for the down payment, the pet selling/buying server 100 performs the next step, and if not, re-sends a request for payment for the down payment to the user pet selling/buying management interface of the customized pet buyer terminal 400 (S140).

If no payment is made within three days of the re-request for the down payment, the pet selling/buying server 100 notifies, via the user pet selling/buying management interface of the customized pet buyer terminal 400, which is provided from the pet selling/buying server 100, that the contract for the customized pet is canceled.

Upon identifying the payment information about the down payment from the customized pet buyer, the pet selling/buying server 100 sends the customized pet purchase request information, which has been received from the customized pet buyer interface of the customized pet buyer terminal 400-which is provided from the pet selling/buying server 100-, to the user pet selling/buying management interface of the customized pet producer terminal 300, which is provided from the pet selling/buying server 100 and sends a request for mating of the parent pets as shown in the customized pet purchase request information.

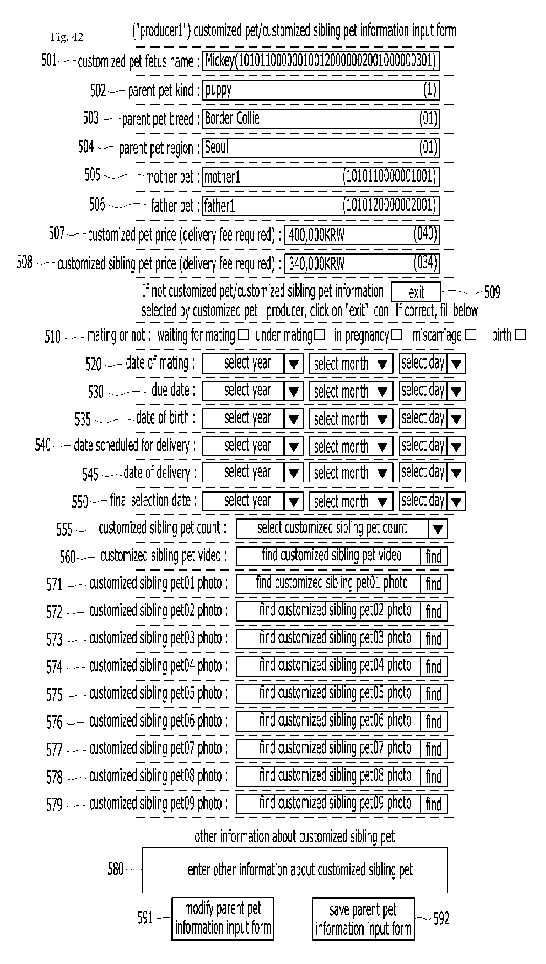

Then, it is requested to enter information as to whether the parent pets mate, the date of mating, the due date, the date of birth, the date scheduled for delivery of the customized pet, date delivered, the final selection date, customized pet count, customized sibling pet images, customized sibling pet photos, and other customized sibling pet information through a customized pet information and customized sibling pet information input interface of the customized pet producer terminal 300 which is provided from the pet selling/buying server 100 (S145). The customized pet information and customized sibling pet information input interface are described below in greater detail with reference to Figs. 42 to 47.

The pet selling/buying server 100 identifies whether the customized pet information and customized sibling pet information by which whether the parent pets which have been applied for mating is received through the customized pet information and customized sibling pet information input interface of the customized pet producer terminal 300, and if the information is not received, determines that the mating of the parent pets has failed, re-requests to mate the selected parent pets, and if the information is received, determines that the parent pets have mated (S150).

Upon receiving the customized sibling pet information from the customized pet information and customized sibling pet input interface of the customized pet producer terminal 300, the pet selling/buying server 100 continuously transmits the received customized sibling pet information to the user pet selling/buying management interface of the customized pet buyer terminal 400.

If there is the customized sibling pet buyer, the pet selling/buying server 100 likewise continues to transmit the received customized sibling pet information to the user pet selling/buying management interface of the customized sibling pet buyer terminal 500. Further, the pet selling/buying server 100 transmits the customized sibling pet information to the customized sibling pet search interface of the customized sibling pet buyer terminal 500 (S155).

The pet selling/buying server 100 continues to identify the customized sibling pet information through the user pet selling/buying management interface of the customized pet buyer terminal 400 and sends, to the customized pet buyer who has top priority in finally choosing the customized sibling pet, a request for customized pet final selection information about the first-in-order customized pet finally selected from among the customized sibling pets before the first-in-order customized pet final selection date passes through the customized pet and customized sibling pet final selection interface of the customized pet buyer terminal 400 (S164).

The pet selling/buying server 100 identifies whether to receive customized pet final selection information by which it may be possible to finally select the customized pet the purchase of which has been applied for from the customized pet and customized sibling pet final selection interface of the customized pet buyer terminal 400.

Upon failing to receive the customized pet final selection information, the pet selling/buying server 100 determines that the customized pet the purchase of which has been applied for has not been chosen and re-requests to finally select the customized pet, and upon receiving the customized pet final selection information, the pet selling/buying server 100 determines that the customized pet has finally been chosen (S165).

Upon receiving the customized pet final selection information from the customized pet and customized sibling pet final selection interface of the customized pet buyer terminal 400, the pet selling/buying server 100 transmits the customized pet final selection information to the user pet selling/buying management interface of the customized sibling pet buyer terminal 500 which is provided from the pet selling/buying server 100.

The pet selling/buying server 100 also transmits the customized pet final selection information to the user pet selling/buying management interface of the customized pet producer terminal 300 which is provided from the pet selling/buying server 100 (S166).

When the determined date for delivery comes, the pet selling/buying server 100 requests the customized pet producer through the user pet selling/buying management interface of the customized pet producer terminal 300, which is provided from the pet selling/buying server 100, to send a customized sibling pet delivery vehicle to the place requested by the customized pet buyer, and if the customized pet buyer checks the customized pet and pays for the balance for the customized pet in the customized sibling pet delivery vehicle, the customized pet purchase ends (S181).

However, upon failing to receive the customized pet final selection information through the customized pet and customized sibling pet final selection interface of the customized pet buyer terminal 400 within two days of the determined delivery date, the pet selling/buying server 100 requests the customized pet producer through the user pet selling/buying management interface of the customized pet producer terminal 300 to send the customized pet delivery vehicle to the place requested by the customized pet buyer on the determined delivery date, and if the customized pet buyer chooses the customized pet and pays for the balance for the customized pet in the vehicle, the customized pet purchase may end. Or, if the customized sibling pet buyer from the customized pet and customized sibling pet final selection interface of the customized sibling pet buyer terminal 500 of which the customized sibling pet final selection information has been received, among the customized sibling pet buyers, chooses and then another of the remaining customized sibling pet buyers finally chooses and pays for the balance for the customized pet, the customized pet purchase ends (S182).

A second selling/buying method is described. A customized sibling pet buyer who is a second buyer keeps searching the customized sibling pet information provided on the customized sibling pet search interface of the customized sibling pet buyer terminal 500 which is provided from the pet selling/buying server 100, and if he finds a customized sibling pet that he likes, clicks the 'apply for purchase of customized pet' icon.

Then, the pet selling/buying server 100 enters the customized sibling pet purchase request information, such as the customized pet fetus name of the customized sibling pet requested for purchase from the customized sibling pet purchase interface of the customized pet producer terminal 300, customized sibling pet kind, customized sibling pet breed, customized sibling pet region, mother pet, father pet, customized sibling pet price, and customized sibling pet down payment information, and information required to be additionally entered, such as destination delivery fee, destination zip code, destination address 1, destination address2, and customized sibling pet name and customized sibling pet code automatically generated, which are then transmitted to the pet selling/buying server 100 (S171).

Upon receiving the customized sibling pet purchase request information from the customized sibling pet buyer interface of the customized sibling pet buyer terminal 500, the pet selling/buying server 100 sends a request for payment for a down payment for the customized sibling pet to a user pet selling/buying management interface of the customized sibling pet buyer terminal 500, which is provided from the pet selling/buying server 100 (S172).

When the customized sibling pet buyer pays for the down payment, the pet selling/buying server 100 performs the next step, and if not, re-sends a request for payment for the down payment to the user pet selling/buying management interface of the customized sibling pet buyer terminal 500 (S173).

If no payment is made within three days of the resending of the request for the customized sibling pet down payment, the pet selling/buying server 100 notifies, via the user pet selling and buying management interface of the customized sibling pet buyer terminal 500 that the contract for the customized sibling pet has been canceled.

Upon identifying payment information about the down payment from the customized sibling pet buyer, the pet selling/buying server 100 sends the customized sibling pet purchase request information, which has been received from the customized sibling pet buyer interface of the customized sibling pet buyer terminal 500 to the user pet selling/buying management interface of the customized pet producer terminal 300, which is provided from the pet selling/buying server 100.

Further, the pet selling/buying server 100 requests the customized sibling pet buyers, who are second-in-order, or subsequent, in final selection for customized sibling pet, to keep checking customized sibling pet information on the user pet selling/buying management interface of the customized sibling pet buyer terminal 500 and input customized sibling pet final selection information, such as, e.g., second-in-order, or subsequent, customized sibling pets of the customized sibling pet for final selection among the customized sibling pets remaining after the customized pet buyer and prior customized sibling pet buyer choose before the date of final selection of customized sibling pet in his turn from the customized pet and customized sibling pet final selection interface of the customized sibling pet buyer terminal 500 (S174).

The pet selling/buying server 100 identifies whether to receive customized sibling pet final selection information that allows it possible to determine whether the customized sibling pet requested for purchase from the customized pet and customized sibling pet final selection interface of the customized sibling pet buyer terminal 500 is finally selected, and if the customized sibling pet final selection information is not received, determines that the customized sibling pet requested for purchase has not been finally selected and re-sends a request for final selection of the customized sibling pet, or if the customized sibling pet final selection information is otherwise received, determines that the customized sibling pet has been finally selected (S175).

Upon receiving the customized pet final selection information from the customized pet and customized sibling pet final selection interface of the customized sibling pet buyer terminal 500, the pet selling/buying server 100 transmits the customized sibling pet final selection information via the user pet selling/buying management interface of the customized sibling pet buyer terminal 500 to the customized sibling pet buyer. The pet selling/buying server 100 also transmits the customized sibling pet final selection information to the user pet selling/buying management interface of the customized pet buyer terminal 400. The pet selling/buying server 100 likewise transmits the customized sibling pet final selection information to the user pet selling/buying management interface of the customized pet producer terminal 300 (S176).

When the determined date for delivery comes, the pet selling/buying server 100 requests the customized pet producer via the user pet selling/buying management interface of the customized pet producer terminal 300 to send a customized sibling pet delivery vehicle to the place requested by the customized sibling pet buyer, and if the customized sibling pet buyer checks the customized pet sibling and pays for the balance for the finally selected customized sibling pet at the customized sibling pet delivery vehicle, the customized pet purchase ends (S181).

However, upon failing to receive the customized sibling pet final selection information through the customized pet and customized sibling pet final selection interface of the customized sibling pet buyer terminal 500 two days before the determined delivery date, the pet selling/buying server 100 requests the customized pet producer via the user pet selling/buying management interface of the customized pet producer terminal 300 to send the customized pet delivery vehicle to the place requested by the customized sibling pet buyer on the determined delivery date, and if the customized sibling pet buyer chooses the customized sibling pet and pays for the balance for the customized sibling pet at the vehicle, the customized sibling pet purchase may end, or if a customized sibling pet buyer finally selects a customized sibling pet from among the customized sibling pets remaining after the selection by the customized pet buyer and the customized sibling pet buyer, from the customized pet and customized sibling pet final selection interfaces of the customized pet buyer terminal 400 and the customized sibling pet buyer terminal 500 of whom the customized pet final selection information and the customized sibling pet final selection information have been received and pays for the balance for the customized sibling pet, the customized sibling pet purchase ends (S182).

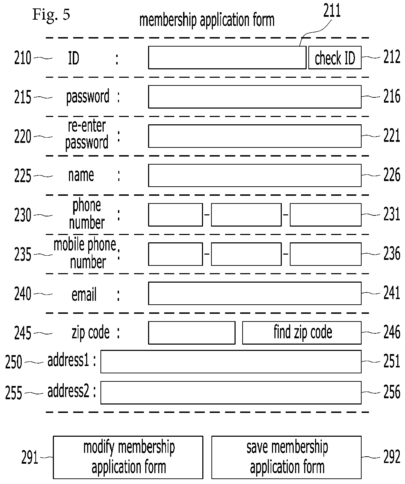

Figs. 5 to 10 are views illustrating examples of an interface input screen for applying for user membership on a user terminal.

Referring to Figs. 5 to 10, a membership application interface allows a user to enter his membership application information regarding the ID 210, password 215, password check 220, name 225, phone number 230, mobile phone number 235, email 240, zip code 245, address1 250, and address2 255 which are items constituting the membership application information.

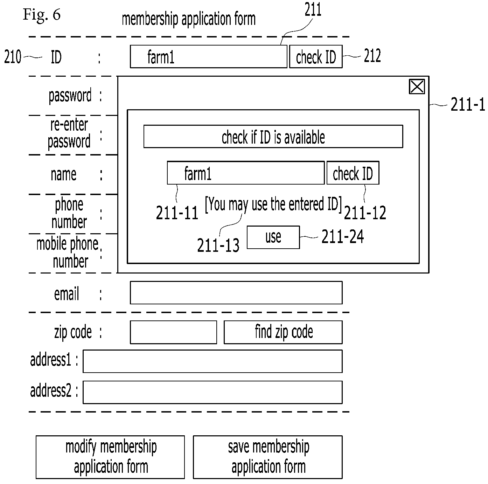

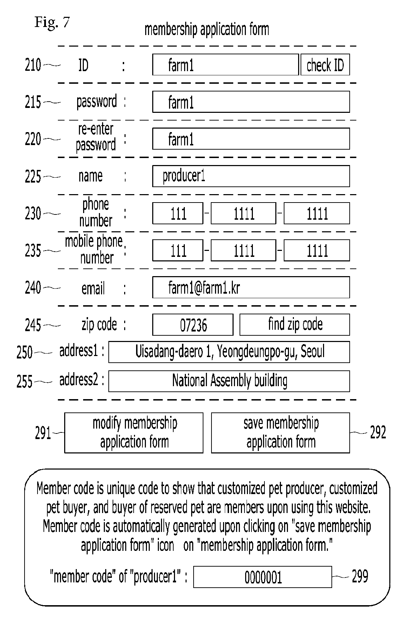

Now described with reference to Figs. 6 and 7 is an embodiment in which a target user enters his membership application information through the membership application information displayed on the user terminal 200 in the case where the ID, password, password check, name, phone number, mobile phone number, email, zip code, address1, and address2, respectively, are 'farm1', 'farm1', 'farm1', 'producer1', '11111111111', '11111111111', 'farm1@farm1.kf, '07236', 'Uisadang-daero 1, Yeongdeungpo-gu, Seoul', and 'National Assembly building.'

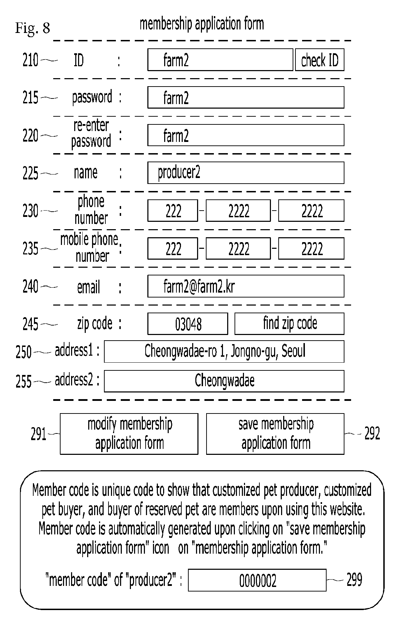

For an efficient description of a method implemented on a computer to selectively mate and sell/buy a pet online which is a pet selling and buying method according to an embodiment of the present invention, an embodiment is shown in Figs. 8, 9, and 10, where the target user enters his own membership application information to the member information DB 150 of the pet selling/buying server 100.

For the ID among the items constituting the membership application information, the user mouse-clicks on the ID input box 211 to enter his membership application information.

Fig. 6 illustrates an example in which the user clicks on the ID input box 211 of the membership application interface and then clicks on the 'ID check' icon 212 to identify whether the entered ID is already in use. Referring to Fig. 6, clicking on the 'ID c heck' icon 212 allows an ID check window 211-1 to pop up on the ID input box 211.

In this embodiment, the target user's ID is assumed to be farm1. Accordingly, if the user clicks on the 'ID check' 212 after entering his ID 'farm 1,' and the pet selling/buying server 100 detects an ID matching the entered ID from the member information DB 150, then the ID check window 211-1 saying "The ID cannot be used" 211-13 pops up to indicate that the entered ID is unavailable. Thus, the entered ID which is already in use cannot be used and the user needs to enter another ID and get through the ID check process. Otherwise, upon failing to detect an ID matching the entered ID from the member information DB 150 of the pet selling/buying server 100, the ID check window 211-1 pops up saying, "The ID can be used," 211-13, to indicate that the entered ID is available. Then, the user clicks on the 'use this ID' icon 211-14 in the ID check window 211-1 and enters the ID. The entered ID 'farm1' is inputted as the user's own membership application information.

Fig. 7 illustrates an example in which the user enters his membership application information to the membership application interface via corresponding input boxes and then clicks on the 'save membership application' icon 292. Referring to Fig. 7, clicking on the 'save membership application' 292 allows each input box value to be stored in the member information DB 150 of the pet selling/buying server 100.

In the instant embodiment, the user's ID, password, password check, name, phone number, mobile phone number, email, zip code, address1, and address2 are assumed to be 'farm1', 'farm1', 'farm1', 'producer1', '11111111111', '11111111111', 'farm1@farm1.kr', '07236', 'Uisadang-daero 1, Yeongdeungpo-gu, Seoul', and 'National Assembly building,' respectively.

Thus, after entering 'farm1', 'farm1', 'farm1', 'producer1', '11111111111', '11111111111', 'farm1@farm1.kr', '07236', 'Uisadang-daero 1, Yeongdeungpo-gu, Seoul', and 'National Assembly building,' as user's ID, password, password check, name, phone number, mobile phone number, email, zip code, address1, and address2, respectively, the user clicks on the save membership application' icon 292, thereby allowing each piece of the membership application information to be transmitted to the pet selling/buying server 100.

At this time, a member code 299, e.g., '0000001,' for the "producer1" member which allows the "producer1" member to be distinguished from the other members is automatically, and sequentially from 0000001 as per the order of membership subscription, generated and stored as membership information about the "producer1" member in the member information DB 150 of the pet selling/buying server 100. The member code is used as a unique code when the user represents himself upon using the website for users.

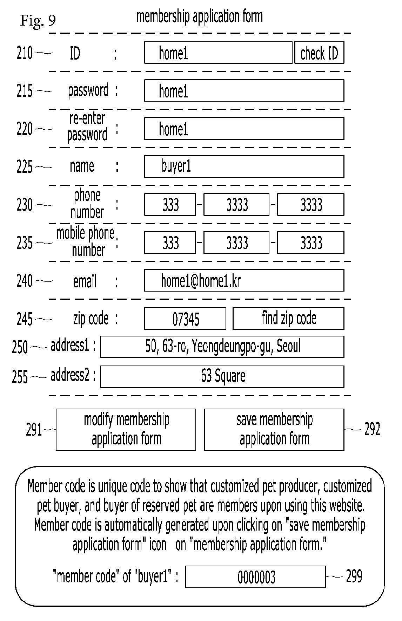

Fig. 8 illustrates an example in which the user enters his membership application information to the membership application interface via corresponding input boxes and then clicks on the 'save membership application' icon 292. Referring to Fig. 9, clicking on the 'save membership application' 292 allows each input box value to be stored in the member information DB 150 of the pet selling/buying server 100.

In the instant embodiment, the user's ID, password, password check, name, phone number, mobile phone number, email, zip code, address1, and address2 are assumed to be 'farm2', 'farm2', 'farm2', 'producer2', '22222222222', '22222222222', 'farm2@farm2.kr', '03048', 'Cheongwadae-ro 1, Jongno-gu, Seoul', and 'Cheongwadae,' respectively. Thus, after entering 'farm2', 'farm2', 'farm2', 'producer2', '22222222222', '22222222222', 'farm2@farm2.kr', '03048', 'Cheongwadae-ro 1, Jongno-gu, Seoul', and 'Cheongwadae,' as user's ID, password, password check, name, phone number, mobile phone number, email, zip code, address1, and address2, respectively, the user clicks on the save membership application' icon 292, thereby allowing each piece of the membership application information to be transmitted to the pet selling/buying server 100.

At this time, a member code 299, e.g., '0000002,' for the "producer2" member which allows the "producer2" member to be distinguished from the other members is automatically, and sequentially from 0000001 as per the order of membership subscription, generated and stored as membership information about the "producer2" member in the member information DB 150 of the pet selling/buying server 100. The member code is used as a unique code when the user represents himself upon using the website for users.

Fig. 9 illustrates an example in which the user enters his membership application information to the membership application interface via corresponding input boxes and then clicks on the 'save membership application' icon 292. Referring to Fig. 9, clicking on the 'save membership application' 292 allows each input box value to be stored in the member information DB 150 of the pet selling/buying server 100.

In the instant embodiment, the user's ID, password, password check, name, phone number, mobile phone number, email, zip code, address1, and address2 are assumed to be 'home1', 'home1', 'home1', 'buyer1', '33333333333', '33333333333', 'home1@home1.kr', '07345', '63-ro 50, Yeongdeungpo-gu, Seoul', and '63 Square,' respectively. Thus, after entering 'home1', 'home1', 'home1', 'buyer1', '33333333333', '33333333333', 'home1@home1.kr', '07345', '63-ro 50, Yeongdeungpo-gu, Seoul', and '63 Square' as user's ID, password, password check, name, phone number, mobile phone number, email, zip code, address1, and address2, respectively, the user clicks on the 'save membership application' icon 292, thereby allowing each piece of the membership application information to be transmitted to the pet selling/buying server 100. At this time, a member code 299, e.g., '0000003,' for the "buyer1" member which allows the "buyer1" member to be distinguished from the other members is automatically, and sequentially from 0000001 as per the order of membership subscription, generated and stored as membership information about the "buyer1" member in the member information DB 150 of the pet selling/buying server 100. The member code is used as a unique code when the user represents himself upon using the website for users.

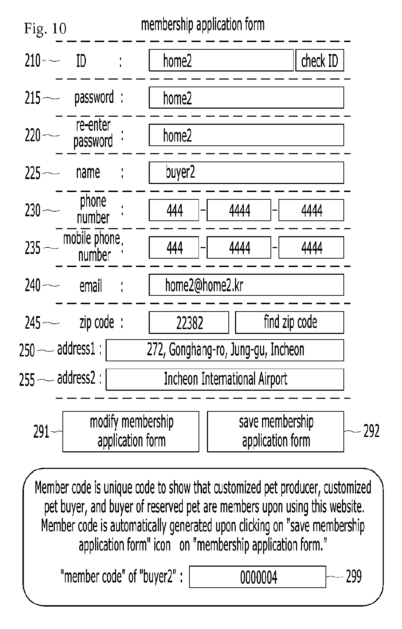

Fig. 10 illustrates an example in which the user enters his membership application information to the membership application interface via corresponding input boxes and then clicks on the 'save membership application' icon 292. Referring to Fig. 10, clicking on the 'save membership application' 292 allows each input box value to be stored in the member information DB 150 of the pet selling/buying server 100.

In the instant embodiment, the user's ID, password, password check, name, phone number, mobile phone number, email, zip code, address1, and address2 are assumed to be 'home2', 'home2', 'home2', 'buyer2', '44444444444', '44444444444', 'home2@home2.kr', '22382', '272 Gonghang-ro, Jung-gu, Incheon', and 'Incheon International Airport,' respectively. Thus, after entering 'home2', 'home2', 'home2', 'buyer2', '44444444444', '44444444444', 'home2@home2.kr', '22382', '272 Gonghang-ro, Jung-gu, Incheon', and 'Incheon International Airport,' as user's ID, password, password check, name, phone number, mobile phone number, email, zip code, address 1, and address2, respectively, the user clicks on the save membership application' icon 292, thereby allowing each piece of the membership application information to be transmitted to the pet selling/buying server 100.

At this time, a member code 299, e.g., '0000004,' for the "buyer2" member which allows the "buyer2" member to be distinguished from the other members is automatically, and sequentially from 0000001 as per the order of membership subscription, generated and stored as membership information about the "buyer2" member in the member information DB 150 of the pet selling/buying server 100. The member code is used as a unique code when the user represents himself upon using the website for users.

Fig. 11 is a view illustrating an example of a user member login interface input screen on a user terminal.

Referring to Fig. 11, upon login, the user enters an ID 201 and a password 202 through a membership login interface and clicks on the 'login' icon 205.

For the ID and password entered by the user, upon detecting an ID matching the ID received from the member information DB 150, the pet selling/buying server 100 determines whether the received password matches the password shown in the same row as the received ID (S110).

When the passwords match, the pet selling/buying server 100 regards the user as a member and provides a webpage of user interface input screen (S115). However, if the received ID and password do not match, the pet selling/buying server 100 determines that the user is not a member and re-requests membership information without providing the webpage of user interface input screen.

As such, since users without membership 203 cannot use the webpage of user interface input screen, they are required to subscribe to be able to use the webpage. Where a user who has membership for the website for users forgot his ID 201 or password 202, the user may click on the "Find ID/PW" icon 204 to see his ID or password through the mobile phone number or email that he entered upon subscription.

Figs. 12 to 27 are views illustrating examples of an interface input screen for parent pet information available for selective mating on a customized pet producer terminal.

Referring to Figs. 12 to 27, a customized pet producer may enter parent pet information input form information regarding the kind 305 of parent pets, breed 310, region 315, gender 320, name 325, customized pet price 330, age 335, size 340, weight 345, photo 350, bloodline certificate photo 355, child pet photo 360, and other information 365 about the parent pets, which are items constituting a parent pet information input interface (i.e., the parent pet information input form through which the "producer1" member enters information about the parent pets available for selective mating).

Described below is an embodiment in which the parent pet information form information about the target parent pets is entered through the parent pet information input interface displayed on the customized pet producer terminal 300 where the kind of parent pets, breed, region, gender, name, customized pet price, age, size, weight, photo, bloodline certificate photo, child pet photo, and other information about the parent pets are 'puppy,' 'Border Collie,' 'Seoul,' 'mother pet,' 'mother1,' '350,000KRW,' '1,' '20,' '1,' 'mother1 photo.GIF,' 'mother1 bloodline certificate photo.GIF,' 'mother1 child photo.GIF,' and 'mother 1 had 30 pups over five times.'

First for the kind of parent pets among the items constituting the parent pet information input form interface, the customized pet producer mouse-clicks on the '▼' icon 307 for selecting the kind of parent pets to enter the parent pet information input form information about the target parent pets.

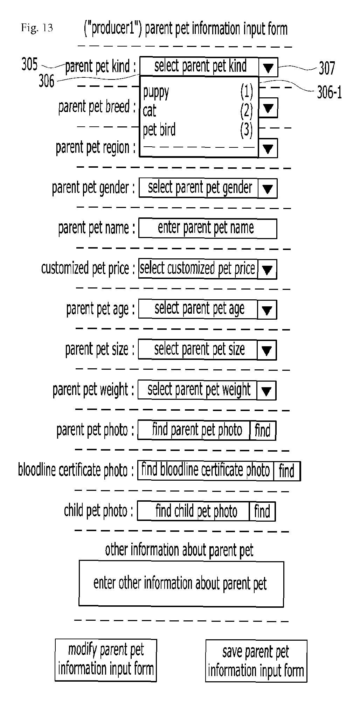

Fig. 13 illustrates an example in which the '▼' icon 307 for selecting the kind of parent pets is clicked on the parent pet information input interface of Fig. 12. Referring to Fig. 13, clicking on the '▼' icon 307 allows a parent pet kind selection box 306-1 to pop up on the parent pet kind input box 306.

The parent pet kind selection box 306-1 lists up kinds of parent pets that may be entered for the kind of the parent pets. Such kinds of parent pets may include puppy 1, cat 2, and pet bird 3. The customized pet producer selects one from the parent pet kinds list.

Various variations may be made to the list of the parent pet kind selection box 306-1. For example, the list may include cow, pig, horse, goat, deer, chicken, dug, fish, or other parent stocks.

In this embodiment, the target parent pets are assumed to be puppy 1 in kind. Accordingly, the customized pet producer selects 'puppy 1' from the parent pet kind list. The 'puppy 1' selected is entered as the parent pet information input form information about the target parent pets in kind.

Referring back to Fig. 12, for the breed 310 of parent pets, the customized pet producer mouse-clicks on the '▼' icon 312 for selecting the breed of parent pets to enter the parent pet information input form information about the target parent pets.

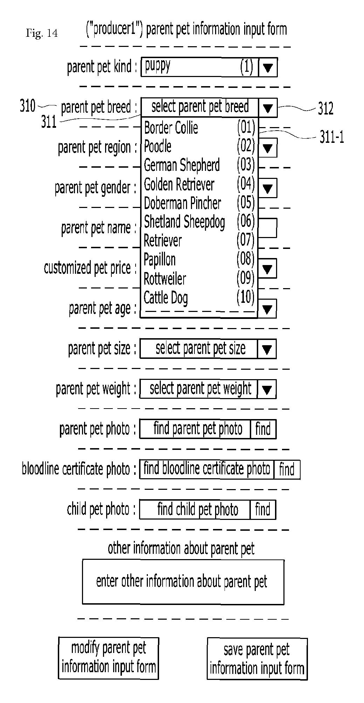

Fig. 14 illustrates an example in which the '▼' icon 312 for selecting the breed of parent pets is clicked on the parent pet information input interface of Fig. 12. Referring to Fig. 14, clicking on the '▼' icon 312 allows a parent pet breed selection box 311-1 to pop up on the parent pet breed input box 311.

The parent pet breed selection box lists up parent pet breeds that may be entered for the breed of the parent pets. Such breeds of parent pets may include Border Collie 01, Poodle 02, German Shepherd 03, Golden Retriever 04, Doberman Pincher 05, Shetland Sheepdog 06, Retriever 07, Papillon 08, Rottweiler 09, and Cattle Dog 10. The customized pet producer selects one from the parent pet breed list.

In this embodiment, the target parent pets are assumed to be Border Collie 01 in breed. Accordingly, the customized pet producer selects 'Border Collie 01' from the parent pet breed list. The 'Border Collie 01' selected is entered as the parent pet information input form information about the target parent pets in breed.

Referring back to Fig. 12, for the region 315 of parent pets, the customized pet producer mouse-clicks on the '▼' icon 317 for selecting the region of parent pets to enter the parent pet information input form information about the target parent pets.

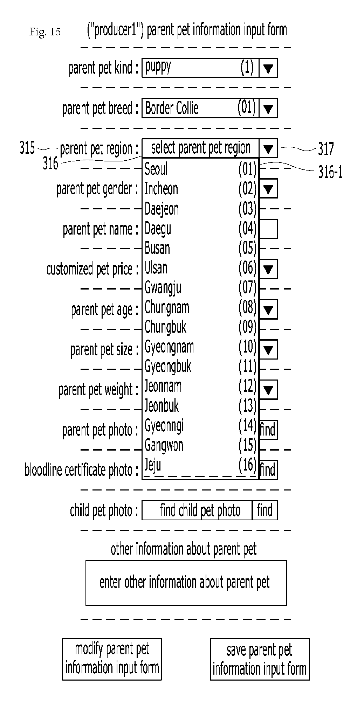

Fig. 15 illustrates an example in which the '▼' icon 317 for selecting the region of parent pets is clicked on the parent pet information input interface of Fig. 12. Referring to Fig. 15, clicking on the '▼' icon 317 allows a parent pet region selection box 316-1 to pop up on the parent pet region input box 316.

The parent pet region selection box lists up parent pet regions that may be entered for the breed of the parent pets. Such regions of the parent pets may include Seoul 01, Incheon 02, Daejeon 03, Daegu 04, Busan 05, Ulsan 06, Gwangju 07, Chungnam 08, Chungbuk 09, Gyeongnam 10, Gyeongbuk 11, Jeonnam 12, Jeonbuk 13, Gyeonngi 14, Gangwon 15, and Jeju 16. The customized pet producer selects one from the parent pet region list.

In this embodiment, the target parent pets are assumed to be Seoul 01 in region. Accordingly, the customized pet producer selects 'Seoul 01' from the parent pet region list. The 'Seoul 01' selected is entered as the parent pet information input form information about the target parent pets in region.

Referring back to Fig. 12, for the gender 320 of parent pets, the customized pet producer mouse-clicks on the '▼' icon 322 for selecting the gender of parent pets to enter the parent pet information input form information about the target parent pets.

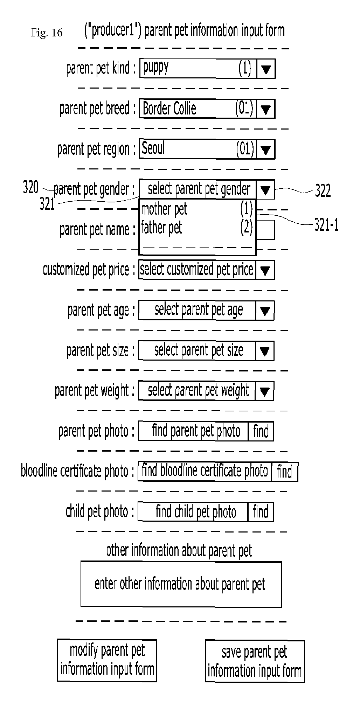

Fig. 16 illustrates an example in which the '▼' icon 322 for selecting the gender of parent pets is clicked on the parent pet information input interface of Fig. 12. Referring to Fig. 16, clicking on the '▼' icon 322 allows a parent pet gender selection box 321-1 to pop up on the parent pet gender input box 321.

The parent pet gender selection box lists up parent pet genders that may be entered for the gender of the parent pets. Such genders of parent pets may include mother pet 1 and father pet 2. The customized pet producer selects one from the parent pet gender list.

In this embodiment, the target parent pets are assumed to be mother pet 1 in gender. Accordingly, the customized pet producer selects 'mother pet 1' from the parent pet gender list. The 'gender 1' selected is entered as the parent pet information input form information about the target parent pets in gender.

Referring back to Fig. 12, for the name 325 of parent pets, the customized pet producer mouse-clicks on a parent pet name input box 326 to enter the parent pet information input form information about the target parent pets.

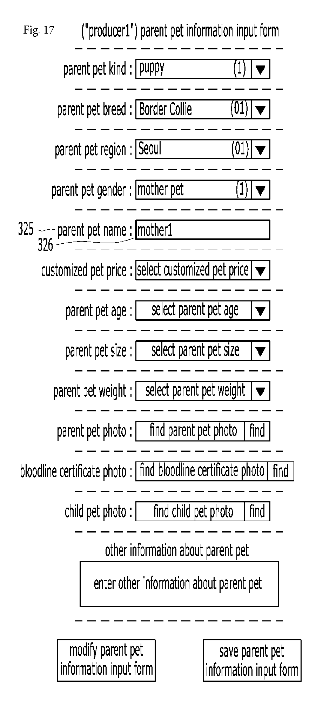

Fig. 17 illustrates an example in which the parent pet name input box 326 is clicked on the parent pet information input interface of Fig. 12 and the name of the parent pet is entered. Referring to Fig. 17, the parent pet name input box 326 is clicked and the name of the parent pet is entered.

In this embodiment, the name of the target parent pet is assumed to be mother 1. Thus, the customized pet producer enters 'mother1" as the name of the parent pet. The 'mother1' entered is entered as the parent pet information input form information about the target parent pets in name.

Referring back to Fig. 12, for the customized pet price 330, the customized pet producer mouse-clicks on the '▼' icon 332 for selecting a customized pet price to enter the parent pet information input form information about the target parent pets.

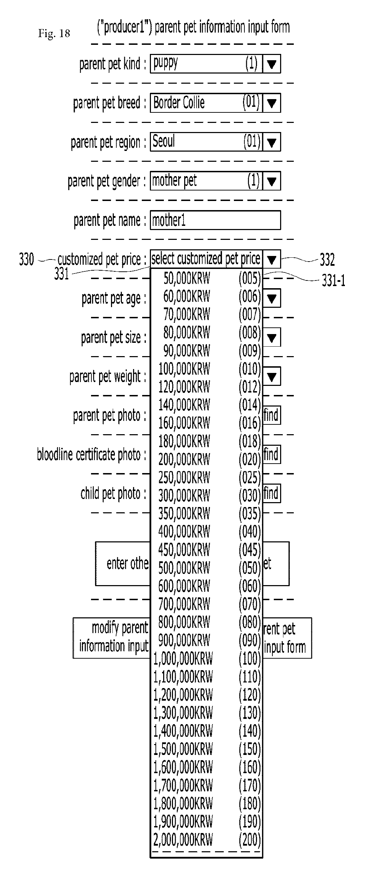

Fig. 18 illustrates an example in which the '▼' icon 332 for selecting a customized pet price is clicked on the parent pet information input interface of Fig. 12. Referring to Fig. 18, clicking on the '▼' icon 332 allows a customized pet prices selection box 331-1 to pop up on the customized pet price input box 331.

The customized pet price selection box lists customized pet prices that may be entered for the customized pet price. Such customized pet prices may include, e.g., 50,000 KRW 005, 60,000 KRW 006, 70,000 KRW 007, 80,000 KRW 008, 90,000 KRW 009, 100,000 KRW 010, 120,000 KRW 012, 140,000 KRW 014, 160,000 KRW 016, 180,000 KRW 018, 200,000 KRW 020, 250,000 KRW 025, 300,000 KRW 030, 350,000 KRW 035, 400,000 KRW 040, 450,000 KRW 045, 500,000 KRW 050, 550,000 KRW 055, 600,000 KRW 060, 700,000 KRW 070, 800,000 KRW 080, 900,000 KRW 090, 1000,000 KRW 100, 1100,000 KRW 110, 1200,000 KRW 120, 1300,000 KRW 130, 1400,000 KRW 140, 1500,000 KRW 150, 1600,000 KRW 160, 1700,000 KRW 170, 1800,000 KRW 180, 1900,000 KRW 190, and 2000,000 KRW 200). The customized pet producer selects one from the customized pet price list.

In this embodiment, the customized pet price for the target parent pet is assumed to be 350,000 KRW 035. Accordingly, the customized pet producer selects '350,000 KRW 035' from the customized pet price list. The '350,000 KRW 035' selected is entered as the parent pet information input form information about the target parent pets in customized pet price.

Referring back to Fig. 12, for the age 335 of parent pets, the customized pet producer mouse-clicks on the '▼' icon 337 for selecting the age of parent pets to enter the parent pet information input form information about the target parent pets.

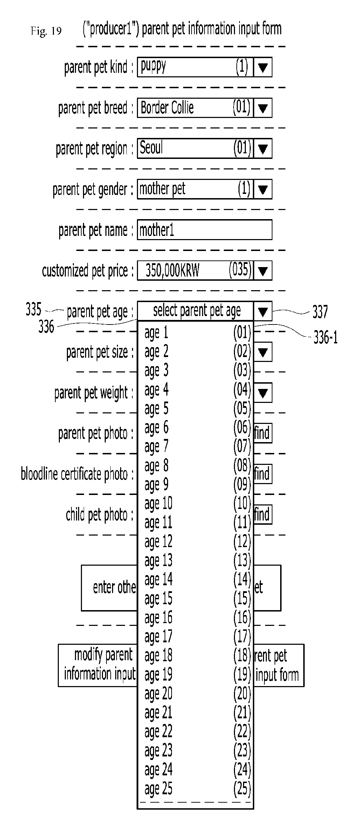

Fig. 19 illustrates an example in which the '▼' icon 337 for selecting the age of parent pets is clicked on the parent pet information input interface of Fig. 12. Referring to Fig. 19, clicking on the '▼' icon 337 allows a parent pet age selection box 336-1 to pop up on the parent pet age input box 336.

The parent pet age selection box lists up parent pet ages that may be entered for the age of the parent pets. Such ages of the parent pet may include, e.g., 1 year old 01, 2 years old 02, 3 years old 03, 4 years old 04, 5 years old 05, 6 years old 06, 7 years old 07, 8 years old 08, 9 years old 09, 10 years old 10, 11 years old 11, 12 years old 12, 13 years old 13, 14 years old 14, 15 years old 15, 16 years old 16, 17 years old 17, 18 years old 18, 19 years old 19, 20 years old 20, 21 years old 21, 22 years old 22, 23 years old 23, 24 years old 24, and 25 years old 25. The customized pet producer selects one from the parent pet age list.

In this embodiment, the target parent pets are assumed to be one year old 01. Accordingly, the customized pet producer selects '1 year old 01' from the parent pet age list. The '1 year old 01' selected is entered as the parent pet information input form information about the target parent pets in age.

Referring back to Fig. 12, for the size 340 of parent pets, the customized pet producer mouse-clicks on the '▼' icon 342 for selecting the size of parent pets to enter the parent pet information input form information about the target parent pets.

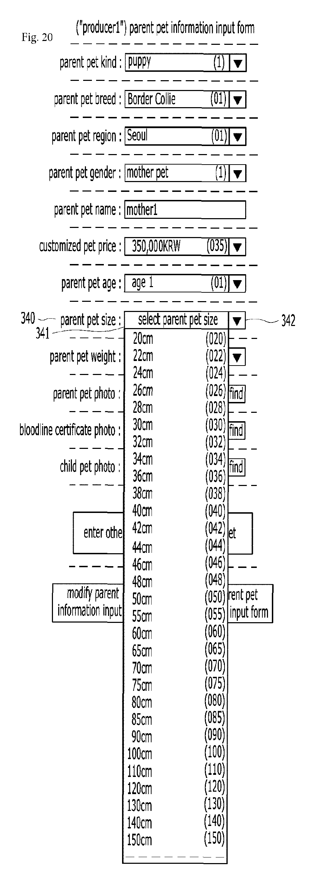

Fig. 20 illustrates an example in which the '▼' icon 342 for selecting the size of parent pets is clicked on the parent pet information input interface of Fig. 12. Referring to Fig. 20, clicking on the '▼' icon 342 allows a parent pet size selection box 341-1 to pop up on the parent pet size input box 341.

The parent pet size selection box lists up parent pet sizes that may be entered for the size of the parent pets. Such sizes of the parent pet may include, e.g., 20cm 020, 22cm 022, 24cm 024, 26cm 026, 28cm 028, 30cm 030, 32cm 032, 34cm 034, 36cm 036, 38cm 038, 40cm 040, 42cm 042, 44cm 044, 46cm 046, 48cm 048, 50cm 050, 55cm 055, 60cm 060, 65cm 065, 70cm 070, 75cm 075, 80cm 080, 850cm 085, 90cm 090, 100cm 100, 110cm 110, 120cm 120, 130cm 130, 140cm 140, and 150cm 150. The customized pet producer selects one from the parent pet size list.

In this embodiment, the size of the target parent pet is assumed to be 20cm. Accordingly, the customized pet producer selects '20cm 020' from the parent pet size list. The '20cm 020' selected is entered as the parent pet information input form information about the target parent pets in size.

Referring back to Fig. 12, for the weight 345 of parent pets, the customized pet producer mouse-clicks on the '▼' icon 347 for selecting the weight of parent pets to enter the parent pet information input form information about the target parent pets.

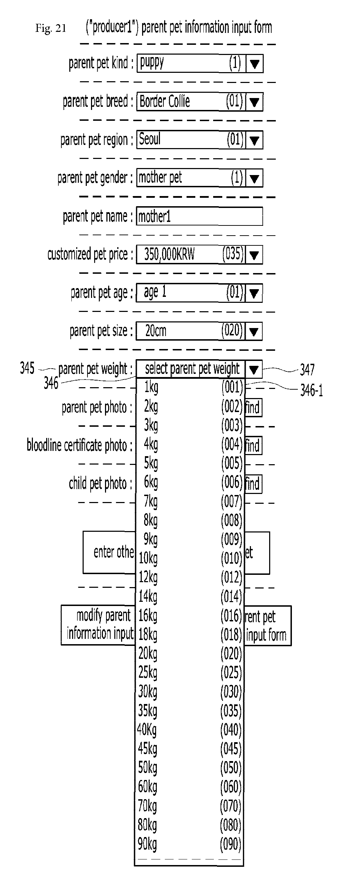

Fig. 21 illustrates an example in which the '▼' icon 347 for selecting the weight of parent pets is clicked on the parent pet information input interface of Fig. 12. Referring to Fig. 21, clicking on the '▼' icon 347 allows a parent pet weight selection box 346-1 to pop up on the parent pet weight input box 346.

The parent pet weight selection box lists up parent pet weights that may be entered for the weight of the parent pets. Such weights of the parent pet may include, e.g., 1kg 001, 2kg 002, 3kg 003, 4kg 004, 5kg 005, 6kg 006, 7kg 007, 8kg 008, 9kg 009, 10kg 010, 12kg 012, 14kg 014, 16kg 016, 18kg 018, 20kg 020, 25kg 025, 30kg 030, 35kg 035, 40kg 040, 45kg 045, 50kg 050, 60kg 060, 70kg 070, 80kg 080, and 90kg 090. The customized pet producer selects one from the parent pet weight list.

In this embodiment, the weight of the target parent pet is assumed to be 1kg. Accordingly, the customized pet producer selects '1kg 001' from the parent pet weight list. The '1kg 001' selected is entered as the parent pet information input form information about the target parent pets in weight.

Referring back to Fig. 12, for the photo 350 of parent pets, the customized pet producer mouse-clicks on the '▼' icon 352 for finding a photo of parent pets to enter the parent pet information input form information about the target parent pets.

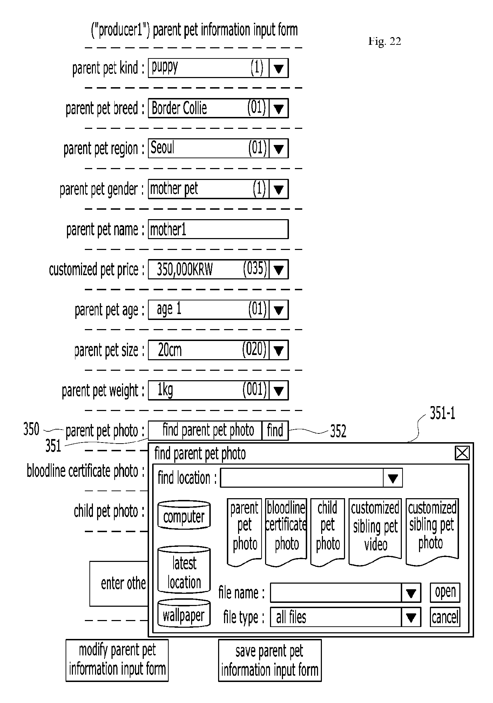

Fig. 22 illustrates an example in which the '▼' icon 352 for finding a photo of parent pets is clicked on the parent pet information input interface of Fig. 12. Referring to Fig. 22, clicking on the '▼' icon 352 allows a parent pet photo search window 351-1 to pop up on the parent pet photo input box 351.

The parent pet photo search window lists up parent pet-related photo and video folders that may be entered for the photo of the parent pets. Such parent pet-related photo and video folders may include, e.g., parent pet photo, bloodline certificate photo, child pet photo, customized sibling pet video, and customized sibling pet photo as information read in via the computer of the customized pet producer terminal 300 as photos and videos taken by the customized pet producer. The customized pet producer selects a parent pet photo folder from among the parent pet-related photo and video folders and chooses one from the list in the parent pet photo folder.

In this embodiment, the parent pet photo of the target parent pet is assumed to be 'mother1.GIF.' Thus, the customized pet producer selects 'mother1.GIF' from the list of parent pet photos. The 'mother1.GIF' selected is entered as the parent pet information input form information about the target parent pets in photo.

Referring back to Fig. 12, for the bloodline certificate photo 355, the customized pet producer mouse-clicks on the icon 357 for finding a bloodline certificate photo to enter the parent pet information input form information about the target parent pets.

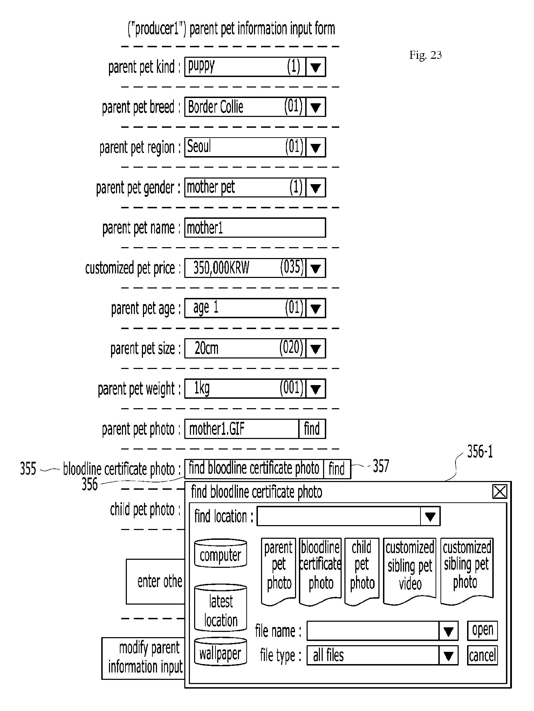

Fig. 23 illustrates an example in which the 'find bloodline certificate photo' icon 357 is clicked on the parent pet information input interface of Fig. 12. Referring to Fig. 23, clicking on the 'find bloodline certificate photo' icon 357 allows a bloodline certificate photo search window 356-1 to pop up on the bloodline certificate photo input box 356.

The bloodline certificate photo search window lists up parent pet-related photo and video folders that may be entered for the photo of the parent pets. Such parent pet-related photo and video folders may include, e.g., parent pet photo, bloodline certificate photo, child pet photo, sibling pet video, and sibling pet photo as information read in via the computer of the customized pet producer terminal 300 as photos and videos taken by the customized pet producer. The customized pet producer selects a bloodline certificate photo folder from among the parent pet-related photo and video folders and chooses one from the list in the bloodline certificate photo folder.

In this embodiment, the bloodline certificate photo of the target parent pet is assumed to be 'mother1BloodlineCertificate.GIF.' Thus, the customized pet producer selects 'mother1BloodlineCertificate.GIF' from the list of bloodline certificate photos. The 'mother1BloodlineCertificate.GIF' selected is entered as the parent pet information input form information about the target parent pets in bloodline certificate photo.

Referring back to Fig. 12, for the child pet photo 360, the customized pet producer mouse-clicks on the icon 362 for finding a child pet photo to enter the parent pet information input form information about the target parent pets.

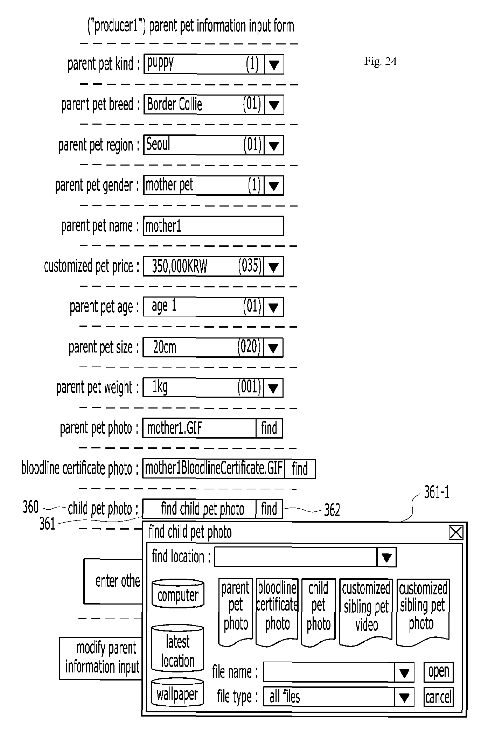

Fig. 24 illustrates an example in which the 'find child pet photo' icon 362 is clicked on the parent pet information input interface of Fig. 12. Referring to Fig. 24, clicking on the 'find child pet photo' icon 362 allows a child pet photo search window 361-1 to pop up on the child pet photo input box 361.

The child pet photo search window lists up parent pet-related photo and video folders that may be entered for the photo of the parent pets. Such parent pet-related photo and video folders may include, e.g., parent pet photo, bloodline certificate photo, child pet photo, sibling pet video, and sibling pet photo as information read in via the computer of the customized pet producer terminal 300 as photos and videos taken by the customized pet producer. The customized pet producer selects a child pet photo folder from among the parent pet-related photo and video folders and chooses one from the list in the child pet photo folder.

In this embodiment, the child pet photo of the target parent pet is assumed to be 'mother1child.GIF.' Thus, the customized pet producer selects 'mother1child.GIF' from the list of child pet photos. The 'mother1child.GIF' selected is entered as the parent pet information input form information about the target parent pets in child pet photo.

Referring back to Fig. 12, for the other information 365 about the parent pets, the customized pet producer mouse-clicks on an 'other information about parent pet' input box 366 to enter the parent pet information input form information about the target parent pets.

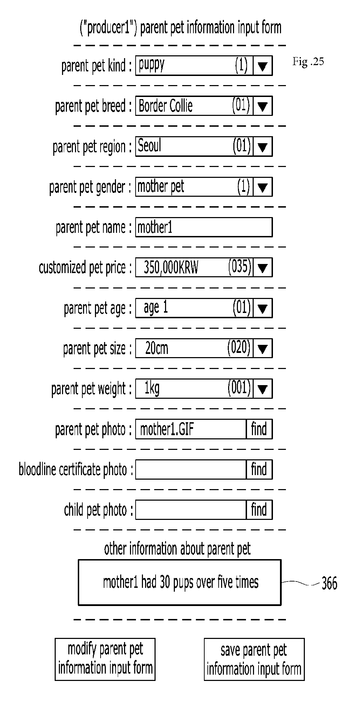

Fig. 25 illustrates an example in which the 'other information about parent pet' input box 366 is clicked on the parent pet information input interface of Fig. 12 and various pieces of information are entered. Referring to Fig. 25, the 'other information about parent pet' input box 366 is clicked and various pieces of information are entered.

In the instant embodiment, other information about the target parent pet is assumed to be 'mother1 had 30 pups over five times.' Accordingly, the customized pet producer enters 'mother1 had 30 pups over five times' as the other information about the parent pet. The entered information, 'mother1 had 30 pups over five times,' is entered as the parent pet information input form information about the target parent pet for other information about the parent pet.

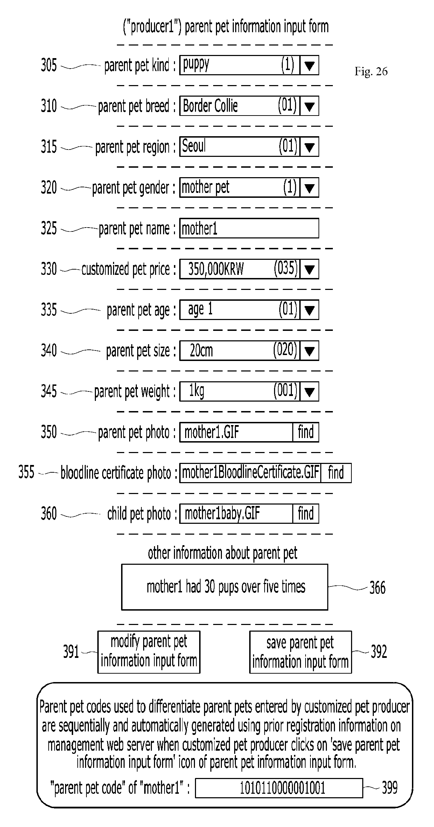

Fig. 26 illustrates an example in which, after all the parent pet information input form information has been entered through the parent pet information input interface of Fig. 12, a 'save parent pet information input form' icon 392 is clicked. Referring to Fig. 26, the customized pet producer may click on a 'modify parent pet information input form' icon 391 and thus modify anytime the information. Upon completing the entry of the parent pet information input form information, the customized pet producer clicks on a 'save parent pet information input form' icon 392.

Then, the customized pet producer terminal 300 transmits the parent pet information input form information about the target parent pet, which has been entered for the items 305, 310, 315, 320, 325, 330, 335, 340, 350, 355, 360, and 365, to the pet selling/buying server 100 (S120). In other words, the terminal 300 of the "producer1" member who is the customized pet producer transmits, to the pet selling/buying server 100, the parent pet information input form information indicating that the parent pet kind among the 'puppy 1' values entered for the parent pet kind is 'puppy,' and the kind code for the parent pet is '1,' the parent pet breed value among the values of 'Border Collie 01' entered for the parent pet breed is 'Border Collie' and the parent pet breed code value is '01,' the parent pet region value among the 'Seoul 01' values entered for the parent pet region is 'Seoul' and the parent pet region code value is '01,' the parent pet gender value among the 'mother pet 1' values entered for the parent pet gender is 'mother pet' and the parent pet gender code value is '1,' 'mother1' entered for the parent pet name, the customized pet price value among the '350,000KRW 035' values entered for the customized pet price is '350,000KRW' and the customized pet price code value is '035,' the parent pet age value among the '1 year old 01' values entered for the parent pet age is 'one year old' and the parent pet age code value is '01,' the parent pet size value among the '20cm 020' values entered for the parent pet size is '20cm' and the parent pet size code value is '020,' the parent pet weight value among the '1kg 001' values entered for the parent pet weight is '1kg' and the parent pet weight code value is '001,' 'mother1.GIF' entered for the parent pet photo, 'mother1BloodlineCertificate.GIF' entered for the bloodline certificate photo, 'mother1child.GIF' entered for the child pet photo, and 'mother1 had 30 pups over five times' entered for the other information about the parent pet. At this time, a parent pet code 399 for 'mother1' to distinguish 'mother1,' which is available for selective mating and entered by the "producer1" member, from other parent pets is automatically generated as '1010110000001001.'

For example, '1' from the parent pet kind code value, '01' from the parent pet breed code value, '01' from the parent pet region code value, '1' from the parent pet gender code value, and '0000001' from the member code value for the "producer1" member are listed in order, and whenever the "producer1" member additionally registers a parent pet, a numerical code starting from '001' is assigned so that the parent pet code, '1010110000001001,' is automatically generated for parent pet, mother1, as registered by the "producer1" member, and is, together with the parent pet information about 'mother1' entered by the "producer1" member, input to the producer information DB 160 of the pet selling/buying server 100. The parent pet code is a unique code used to differentiate the parent pets that the customized pet producer or others register when the customized pet producer selectively mates pets and trades online through the website for users.

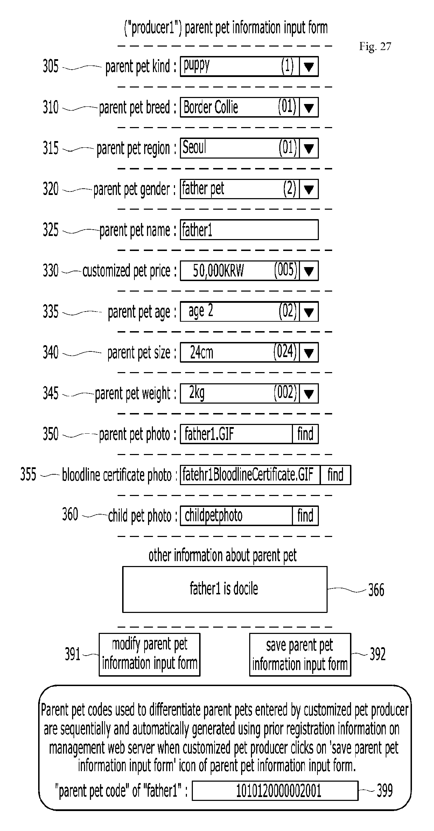

Fig. 27 illustrates an example in which, after all the parent pet information input form information has been entered through the parent pet information input interface (i.e., the parent pet information input form where another customized pet producer, "producer2," enters information about a parent pet available for selective mating), the 'save parent pet information input form' icon 392 is clicked.

Referring to Fig. 27, upon completing the entry of the parent pet information input form information, the customized pet producer clicks on a 'save parent pet information input form' icon 392. Then, the customized pet producer terminal 300 transmits the parent pet information input form information about the target parent pet, which has been entered for the items 305, 310, 315, 320, 325, 330, 335, 340, 350, 355, 360, and 365, to the pet selling/buying server 100.

In other words, the terminal 300 of the "producer2" member who is another customized pet producer transmits, to the pet selling/buying server 100, the parent pet information input form information indicating that the parent pet kind value among the 'puppy 1' values entered for the parent pet kind is 'puppy,' and the parent pet kind code value is '1,' the parent pet breed value among the 'Border Collie 01' values entered for the parent pet breeder is 'Border Collie' and the parent pet breed code value is '01,' the parent pet region value among the 'Seoul 01' values entered for the parent pet region is 'Seoul' and the parent pet region code value is '01,' the parent pet gender value among the 'father pet 2' values entered for the parent pet gender is 'father pet' and the parent pet gender code value is '2,' 'father1' entered for the parent pet name, the customized pet price value among the '50,000KRW 005' values entered for the customized pet price is '50,000KRW' and the customized pet price code value is '005,' the parent pet age value among the '1 year old 01' values entered for the parent pet age is 'one year old' and the parent pet age code value is '01,' the parent pet size value among the '22cm 022' values entered for the parent pet size is '22cm' and the parent pet size code value is '022,' the parent pet weight value among the '2kg 002' values entered for the parent pet weight is '2kg' and the parent pet weight code value is '002,' 'father1.GIF' entered for the parent pet photo, 'father1BloodlineCertificate.GIF' entered for the bloodline certificate photo, 'fatherlchild.GIF' entered for the child pet photo, and 'father1 is docile' entered for the other information about the parent pet. At this time, a parent pet code 399 for 'father1' to distinguish 'father1,' which is available for selective mating and entered by the "producer2" member, from other parent pets is automatically generated as '1010120000002001.'

For example, '1' from the parent pet kind code value, '01' from the parent pet breed code value, '01' from the parent pet region code value, '2' from the parent pet gender code value, and '0000002' from the member code value for the "producer2" member are listed in order, and whenever the "producer2" member additionally registers a parent pet, a numerical code starting from '001' is assigned so that the parent pet code, '1010120000002001,' is automatically generated for parent pet, father1, as registered by the "producer2" member, and is, together with the parent pet information about 'father1' entered by the "producer2" member, input to the producer information DB 160 of the pet selling/buying server 100. The parent pet code is a unique code used to differentiate the parent pets that the customized pet producer or others register when the customized pet producer selectively mates pets and trades online through the website for users.

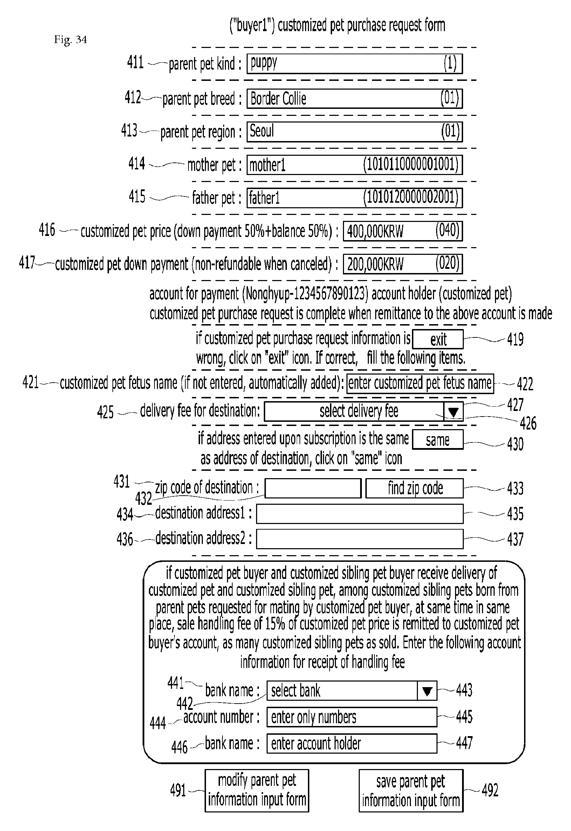

The pet selling/buying server 100 receives the parent pet information input form information (of Figs. 12 to 27) from the customized pet producer terminal 300. The received parent pet information input form information is stored in the producer information DB 160 of the pet selling/buying server 100. Then, the parent pet information input form information is transmitted to the parent pet search window of the customized pet buyer terminal 400 (S125). The customized pet search window (of Figs. 28 to 33) illustrated is for a process in which after a desired parent pet is retrieved, information is entered to a customized pet purchase request form (of Figs. 34 to 36 or 37 to 40).

Figs. 28 to 33 are views illustrating examples of a parent pet search window enabling a search for information about parent pets available for selective mating entered by a customized pet producer on a customized pet buyer terminal.

Referring to Figs. 28 to 33, as shown in Fig. 28, the parent pet search interface (i.e., a parent pet search window where the "buyer1" member searches for information about parent pets available for selective mating) provides parent pet information in such a manner as to allow parent pets of the same kind, the same breed, or the same region to first be selected given the parent pet kind 401, parent pet breed 403, and parent pet region 405 among the information about parent pets available for selective mating, entered by the customized pet producer, thereby allowing for the optimal customized pet to be produced.

Described below is an embodiment in which, among father and mother pets whose kind, breed, and region are 'puppy,' 'Border Collie,' and 'Seoul,' respectively, 'mother1' and 'father1' are chosen as the target mother pet and target father pet, respectively, and the customized pet buyer selects the target mother pet and the target father pet and requests to buy a customized pet on the interface input screen webpage (the parent pet search window where the "buyer1" member searches for information about parent pets available for selective mating) displayed on the customized pet buyer terminal 400

The customized pet buyer mouse-clicks on the '▼' icon 402 for selecting the kind of parent pets to select the kind of the parent pet for the parent pet kind 401 among the items constituting the parent pet information provided from the customized pet producer.

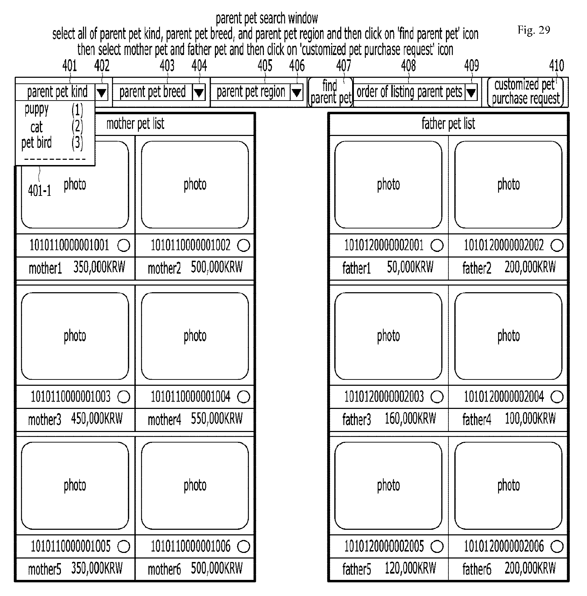

Fig. 29 illustrates an example in which the '▼' icon 402 for selecting the kind of parent pets is clicked on the parent pet search interface of Fig. 28. Referring to Fig. 29, clicking on the '▼' icon 402 allows a parent pet kind selection box 401-1 to pop up on the parent pet kind input box 401.

The parent pet kind selection box 401-1 lists up kinds of parent pets that may be output for the kind of the parent pets. Such kinds of parent pets may include puppy 1, cat 2, and pet bird 3. The customized pet buyer selects one from the parent pet kinds list.

In this embodiment, the target parent pets are assumed to be puppy 1 in kind. Accordingly, the customized pet buyer selects 'puppy 1' from the parent pet kind list. Of the 'puppy 1' selected, only '1' which is the parent pet kind code value is selected as the parent pet search window information about the target parent pet in kind.

Referring back to Fig. 28, for the breed 403 of parent pets, the customized pet buyer mouse-clicks on the '▼' icon 404 for selecting the breed of parent pets to enter the parent pet search window information about the target parent pets.

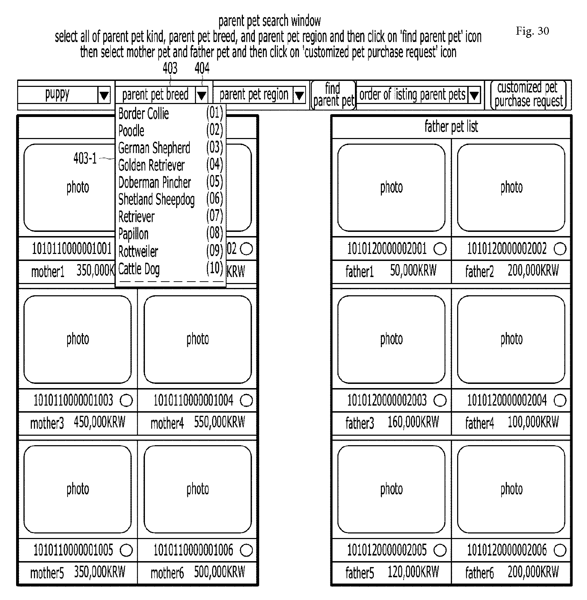

Fig. 30 illustrates an example in which a '▼' icon 404 for selecting the breed of the parent pet is clicked on the customized pet buyer interface input screen webpage (the parent pet search window where the "buyer1" member searches for information about the parent pets available for selective mating). Referring to Fig. 30, clicking on the '▼' icon 404 allows a parent pet breed selection box 403-1 to pop up on the parent pet breed input box 403.

The parent pet breed selection box 403-1 lists up breeds of parent pets that may be output for the breed of the parent pets. Such breeds of parent pets include, i.e., Border Collie 01, Poodle 02, German Shepherd 03, Golden Retriever 04, Doberman Pincher 05, Shetland Sheepdog 06, Retriever 07, Papillon 08, Rottweiler 09, and Cattle Dog 10. The customized pet buyer selects one from the parent pet breed list.

In this embodiment, the target parent pets are assumed to be Border Collie 01 in breed. Accordingly, the customized pet buyer selects 'Border Collie 01' from the parent pet breed list. Of the 'Border Collie 01' selected, only '01' which is the parent pet breed code value is selected as the parent pet search window information about the target parent pet in breed.

Referring back to Fig. 28, for the region 405 of parent pets, the customized pet buyer mouse-clicks on the '▼' icon 406 for selecting the region of parent pets to enter the parent pet search window information about the target parent pets.

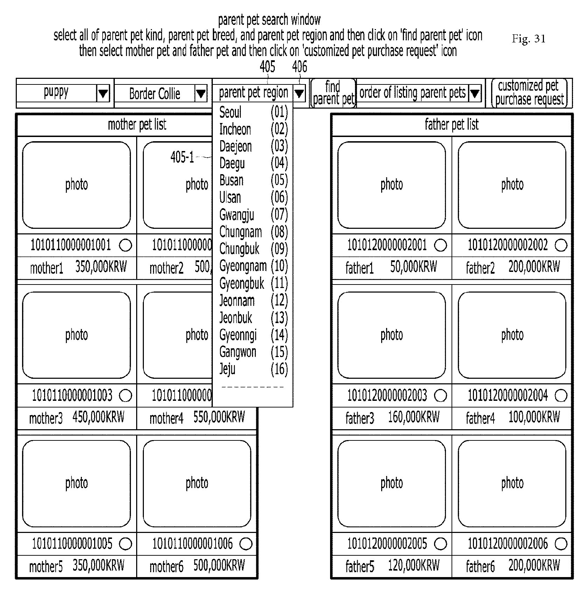

Fig. 31 illustrates an example in which the '▼' icon 406 for selecting the region of parent pets is clicked on the parent pet search interface of Fig. 28. Referring to Fig. 31, clicking on the '▼' icon 406 allows a parent pet region selection box 405-1 to pop up on the parent pet region input box 405.

The parent pet region selection box 405-1 lists up regions of parent pets that may be output for the region of the parent pets. Such regions of the parent pets include, e.g., Seoul 01, Incheon 02, Daejeon 03, Daegu 04, Busan 05, Ulsan 06, Gwangju 07, Chungnam 08, Chungbuk 09, Gyeongnam 10, Gyeongbuk 11, Jeonnam 12, Jeonbuk 13, Gyeonngi 14, Gangwon 15, and Jeju 16. The customized pet buyer selects one from the parent pet region list.

In this embodiment, the target parent pets are assumed to be Seoul 01 in region. Accordingly, the customized pet buyer selects 'Seoul 01' from the parent pet region list. Of the 'Seoul 01' selected, only '01' which is the parent pet region code value is selected as the parent pet search window information about the target parent pet in region.

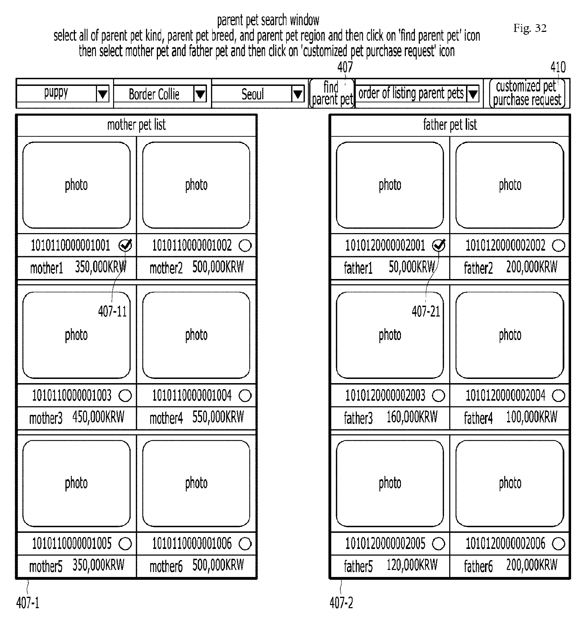

Fig. 32 illustrates an example in which, after all the parent pet search window information has been entered through the parent pet search interface of Fig. 28, a 'find parent pet' icon 407 is clicked. Referring to Fig. 32, the customized pet buyer, upon completing the selection on the parent pet search window, clicks on the 'find parent pet' icon 407. Then, the customized pet buyer terminal 400 transmits the parent pet search window information entered for the items 401, 403, and 405 to the pet selling/buying server 100. In other words, the customized pet buyer terminal 400 transmits the parent pet search window information, such as '1' entered for the parent pet kind, '01' entered for the parent pet breed, and '01' entered for the parent pet region, to the pet selling/buying server 100. Then, the pet selling/buying server 100 compares '1,' '01', and '01,' which have been received from the customized pet buyer, with the parent pet code value entered by the customized pet producer and stored in the producer information DB 160, from the first digit to the fifth, and outputs to the 'mother pet list' output box 407-1 on the customized pet buyer terminal 400 if the sixth digit of the parent pet code is '1' among the items that match for all the five digits, and if '2,' outputs to the 'father pet list' output box 407-2.

In the instant embodiment, the mother pet 407-11 and father pet 407-21 requested for purchase of the target customized pet are assumed to be mother1 and father1, respectively. Thus, the customized pet buyer selects 'mother1 (1010120000001001)' from the mother pet list and 'father1 (1010120000001001)' from the father pet list. The 'mother1' and 'father1' selected are selected as a mother pet and a father pet for the target customized pet which the customized pet buyer requests to purchase.

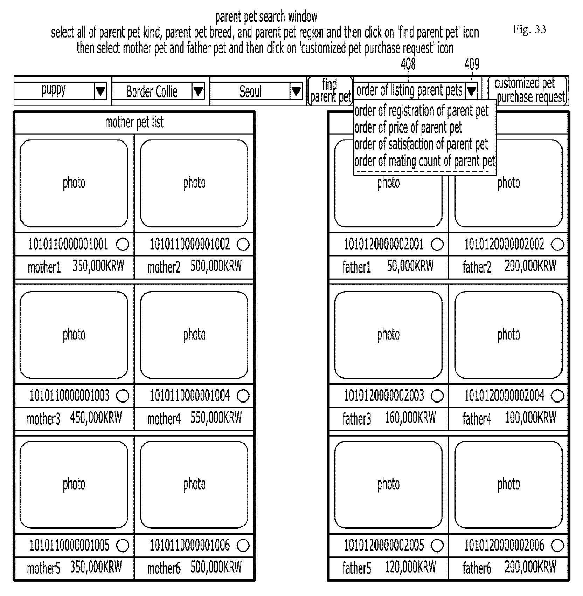

Additionally, referring back to Fig. 28, for the order 408 of listing parent pets, the customized pet buyer may mouse-click on an icon '▼' 409 for selecting the order of listing parent pets to select the order of listing parent pets. Referring to Fig. 33, clicking on the '▼' icon 409 allows a parent pet listing order selection box 408-1 to pop up on the parent pet listing order input box 408. Such parent pet listing orders include order of registration of parent pet 1, order of parent pet price 2, order of parent pet satisfaction 3, and order of parent pet mating count 4.

Figs. 34 to 41 are views illustrating examples of an interface input screen for customized pet buying application information, including information about parent pets available for selective mating, for applying for customized pet purchase after the parent pet information is searched on a customized pet buyer terminal.

Referring to Figs. 34 to 41, Fig. 34 illustrates an example in which 'mother1 407-11' is selected from a 'mother pet list' output box 407-1 and 'father1 407-21' is selected from a 'father pet list' output box 407-2 on the customized pet buyer interface (i.e., the parent pet search window where the "buyer1" member searches for information about parent pets available for selective mating) and the 'customized pet purchase request' icon 410 is then clicked.

Referring to Fig. 34, if the customized pet purchase request form information is wrong, the customized pet buyer may re-select the customized pet purchase request form information anytime by clicking on the 'exit' icon 419. However, if the information selected by the customized pet buyer is correct, a customized pet purchase request interface (i.e., a customized pet purchase request form by which the "buyer 1" member requests purchase after clicking on the 'customized pet purchase request' icon on the parent pet search window) allows the customized pet buyer to enter the customized pet purchase request form information for the already selected items, i.e., parent pet kind 411, parent pet breed 412, parent pet region 413, mother pet 414, father pet 415, customized pet price 416, customized pet down payment 417, among the items constituting the customized pet purchase request form information, and those required to be added, such as the customized pet fetus name 421, destination delivery fee 425, destination zip code 431, destination address 1 434, destination address2 436, bank name 441, account number 444, and account holder 446.

Now described is an embodiment in which, where the customized pet fetus name, destination delivery fee, destination zip code, destination address 1, destination address2, bank name, account number, and account holder are 'Mikey,' '50,000KRW for the same region as parent pet,' '07345,' '50, 63-ro, Yeongdeungpo-gu, Seoul,' '63 Square,' 'Industrial Bank,' '33333333333,' and 'buyer1,' respectively, the customized pet buyer enters the customized pet purchase request form information about the target customized pet through the customized pet purchase request interface displayed on the customized pet buyer terminal 400.

First for the customized pet fetus name 421 among the items constituting the customized pet purchase request form information, the customized pet buyer mouse-clicks on the customized pet fetus name input box 422 to enter the customized pet purchase request form information about the target customized pet.

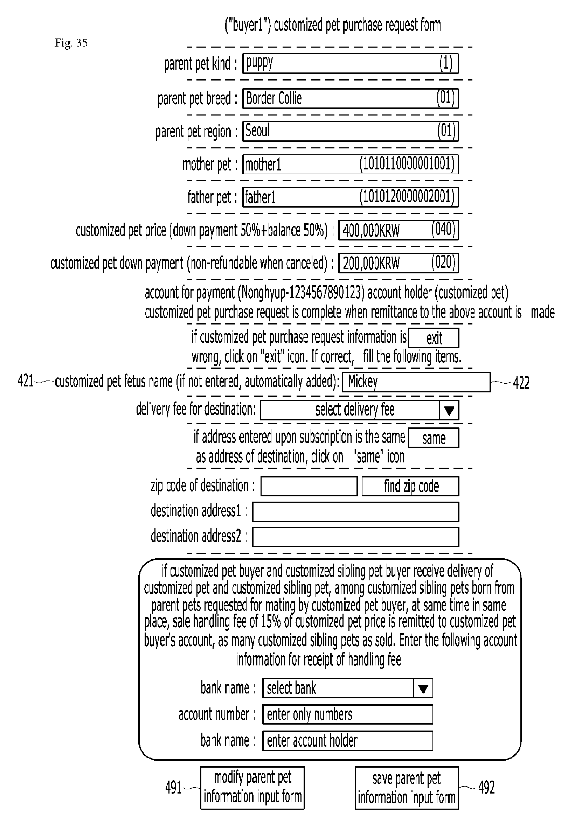

Referring to Fig. 35, for the customized pet fetus name 421, the customized pet buyer mouse-clicks on the customized pet fetus name input box 422 to enter the customized pet purchase request form information about the target customized pet through the customized pet purchase request interface. Referring to Fig. 35, the customized pet fetus name input box 422 is clicked and the fetus name of the customized pet is entered.

In this embodiment, the customized pet fetus name for the target parent pet is assumed to be Mikey. Accordingly, the customized pet buyer enters 'Mikey' to the customized pet fetus name. 'Mikey' entered is input as the customized pet purchase request form information about the target customized pet for the customized pet fetus name.

Referring back to Fig. 34, for the destination delivery fee 425, the customized pet buyer mouse-clicks on the '▼' icon 427 for selecting a fee for delivery to the destination to enter customized pet purchase request form information about the target customized pet.

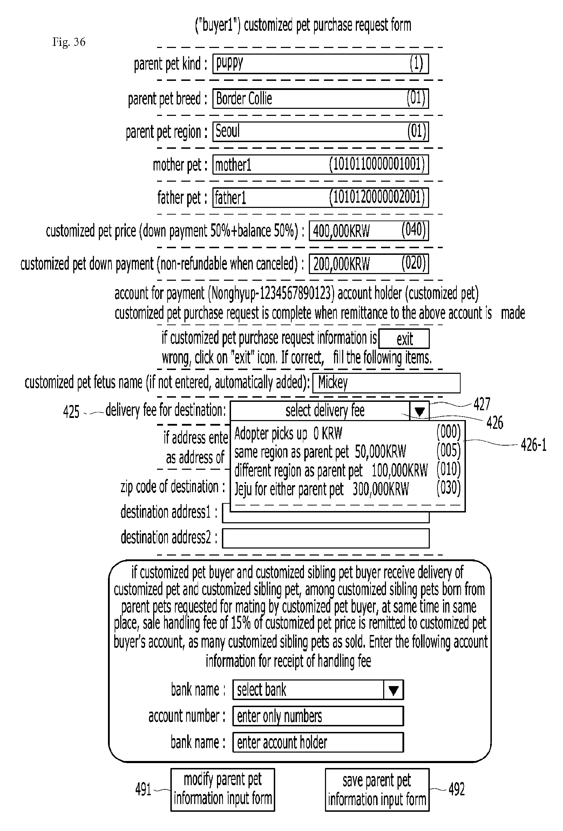

Fig. 36 illustrates an example in which the '▼' icon 427 for selecting a fee for delivery to the destination is clicked on the customized pet purchase request interface of Fig. 34. Referring to Fig. 36, clicking on the '▼' icon 427 allows a destination delivery fee selection box 426-1 to pop up on the destination delivery fee input box 426.

The destination delivery fee selection box 426-1 lists up kinds of destination delivery fees that may be entered for the kind of the destination delivery fee. Such kinds of destination delivery fees may include, e.g., '0 KRW for pickup 000,' '50,000KRW for the same region as parent pet 005,' '100,000KRW for different regions from parent pet 010,' and '300,000KRW for Jeju island 030.' The customized pet buyer selects one from the list of destination delivery fee kinds.

In the instant embodiment, the kind of the destination delivery fee for the target customized pet is assumed to be '50,000KRW for the same region as parent pet 005.' Accordingly, the customized pet buyer selects '50,000KRW for the same region as parent pet 005' from the list of destination delivery fee kinds. The selected item, i.e., '50,000KRW for the same region as parent pet 005' is entered as the customized pet purchase request form information about the target customized pet for the kind of destination delivery fee.

Referring back to Fig. 34, the customized pet buyer clicks on 'same' icon 430 if the address registered when he applied for membership is the same as the address of the destination, and if different otherwise, needs to directly enter rather than clicking on the 'same' icon 430.

In this embodiment, the address of the destination for the target customized pet is assumed to be the same as the address registered when he applied for membership. Thus, the customized pet buyer clicks on the 'same' icon 430.

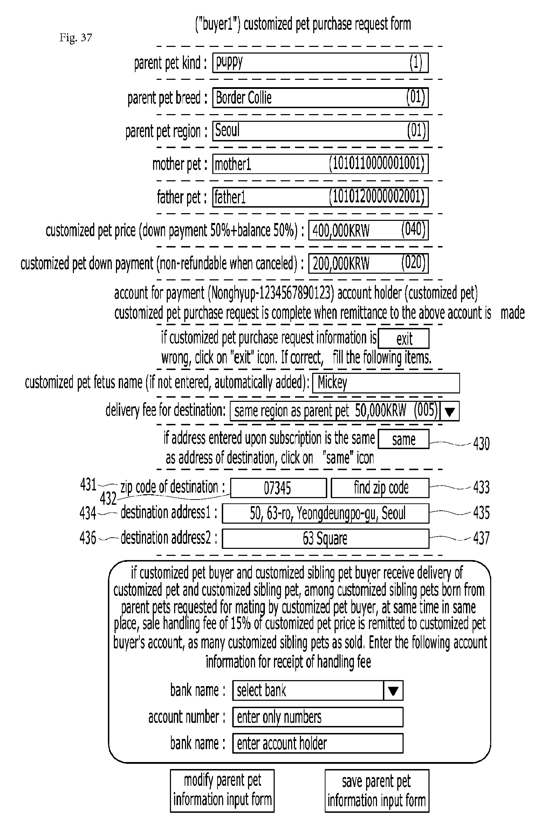

Fig. 37 illustrates an example in which the 'same' icon 430 is clicked on the customized pet purchase request interface of Fig. 34. Referring to Fig. 37, clicking on the 'same' icon 430 allows '07345,' '50, 63-ro, Yeongdeungpo-gu, Seoul,' and '63 Square' to be input to the destination zip code input box 431, destination address 1 input box 434, and destination address2 input box 436, respectively.

Referring back to Fig. 34, for the name 441 of the bank for receiving handling fee for sale of customized sibling pet, the customized pet buyer mouse-clicks on the '▼' icon 443 for selecting a bank name to enter customized pet purchase request form information about the target customized parent pet.

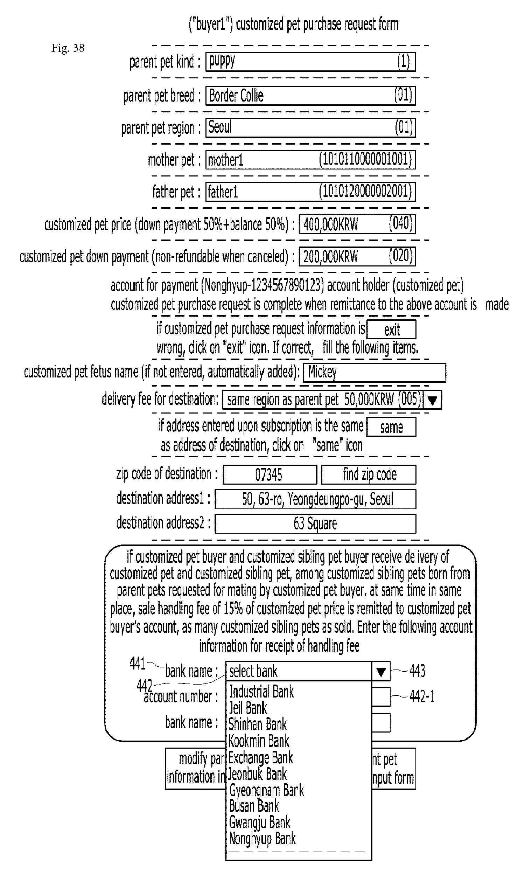

Fig. 38 illustrates an example in which the '▼' icon 443 for selecting a bank name is clicked on the customized pet purchase request interface of Fig. 34. Referring to Fig. 38, clicking on the '▼' icon 442 allows a bank name selection box 442-1 to pop up on the bank name selection input box 442.

The bank name selection box lists up bank names that may be entered for the bank name. Such bank names may include, e.g., Industrial Bank, Jeil Bank, Shinhan Bank, Kookmin Bank, Exchange Bank, Jeonbuk Bank, Gyeongnam Bank, Busan Bank, Gwangju Bank, and Nonghyup Bank. The customized pet buyer selects one from the bank name list.

In this embodiment, the kind of the bank name for receiving handling fee for sale of customized sibling pet for the target customized pet is assumed to be Industrial Bank. Thus, the customized pet buyer selects 'Industrial Bank' from the bank name list. 'Industrial Bank' selected is input as the customized pet purchase request form information about the target customized pet for the kind of bank.

Referring back to Fig. 34, for the account number 444 for receiving handling fee for sale of customized sibling pet, the customized pet buyer mouse-clicks on the account number input box 445 to enter customized pet purchase request form information about the target customized parent pet.

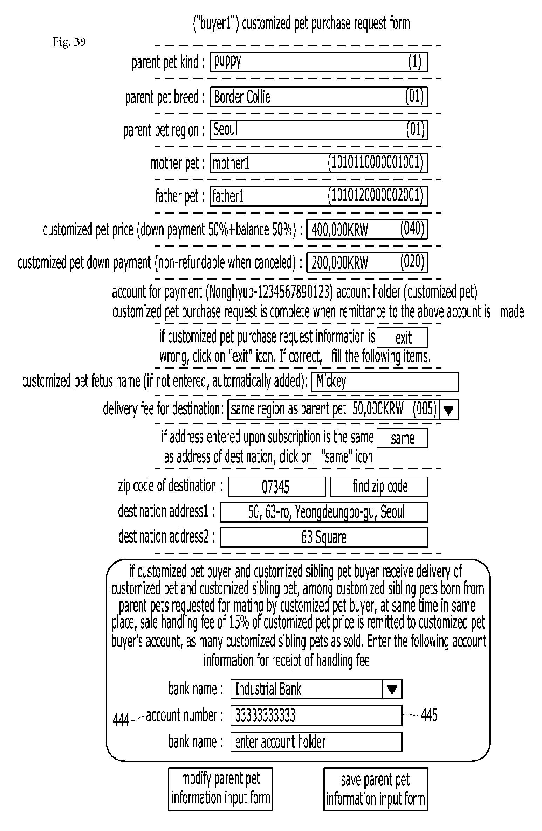

Fig. 39 illustrates an example in which the account number input box 445 is clicked on the customized pet purchase request interface of Fig. 34 and an account number is entered. Referring to Fig. 39, the account number input box 445 is clicked and the account information is entered.

In this embodiment, the account number for receiving handling fee for sale of customized sibling pet for the target customized pet is assumed to be 33333333333. Accordingly, the customized pet buyer enters 33333333333 to the account number. '33333333333' entered is input as the customized pet purchase request form information about the target customized pet for the account number.

Referring back to Fig. 34, for the account holder 446 for receiving handling fee for sale of customized sibling pet, the customized pet buyer mouse-clicks on the account number input box 447 to enter customized pet purchase request form information about the target customized parent pet.

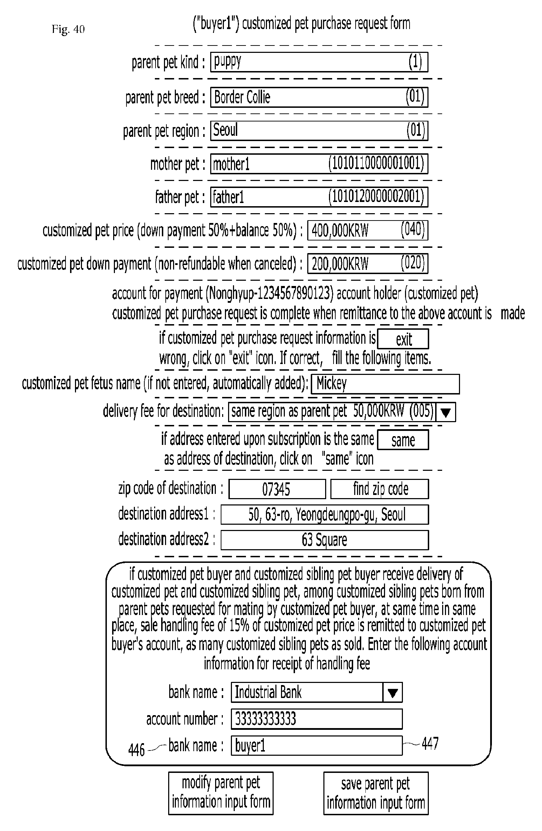

Fig. 40 illustrates an example in which the account holder input box 447 is clicked on the customized pet purchase request interface of Fig. 34 and an account holder is entered. Referring to Fig. 40, the account holder input box 447 is clicked and the account holder is entered.

In this embodiment, the account holder for receiving handling fee for sale of customized sibling pet for the target customized pet is assumed to be buyer 1. Accordingly, the customized pet buyer enters 'buyer1' to the account holder. 'Buyer1' entered is input as the customized pet purchase request form information about the target customized pet for the account holder.

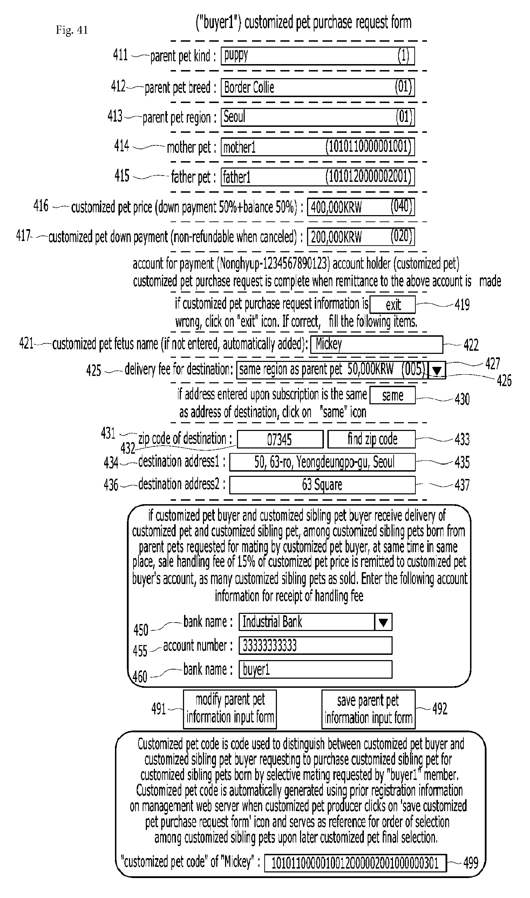

Fig. 41 illustrates an example in which all the customized pet purchase request form information is entered through the customized pet purchase request interface and the 'customized pet purchase request form input' icon 492 is then clicked.

Referring to Fig. 41, the customized pet buyer may click on a 'modify customized pet purchase request form' icon 491 and thus modify anytime the information entered. The customized pet buyer, upon completing entry of the customized pet purchase request form information, clicks on the 'save customized pet purchase request form' icon 492. Then, the customized pet producer terminal 400 transmits the parent pet information input form information about the target parent pet, which has been entered for the items 411, 310, 315, 417, 325, 421, 425, 431, 436, 441, 444, and 446, to the pet selling/buying server 100.

In other words, the terminal 400 of the "buyer 1" member who is the customized pet buyer transmits, to the pet selling/buying server 100, the customized pet purchase request form information indicating that the parent pet kind value and parent pet kind code value of the value 'puppy 1' entered for the kind of the parent pet are 'puppy' and '1,' respectively, the parent pet breed value and parent pet breed code value of the value 'Border Collie 01' entered for the breed of the parent pet are 'Border Collie' and '01,' the parent pet region value and parent pet region code value of the value 'Seoul 01' entered for the region of the parent pet are 'Seoul' and '01,' the mother pet value and mother pet code value of the value 'mother1(1010110000001001)' entered for the mother pet are 'mother1' and '1010110000001001,' respectively, the father pet value and father pet code value of the value 'father1(1010120000002001)' entered for the father pet are 'father1' and '1010120000002001,' respectively, the customized pet price value and customized pet price code value of the value '400,000KRW 040' entered for the customized pet price are '400,000KRW' and '040,' respectively, the customized pet down payment value and customized pet down payment code value of the value '200,000KRW 020' entered for the customized pet down payment are '200,000KRW' and '020,' respectively, 'Mikey' entered for the customized pet fetus name, the destination delivery fee value and destination delivery fee code value of the value '50,000KRW for the same region as parent pet 005' entered for the destination delivery fee are '50,000KRW for the same region as parent pet' and '005,' respectively, '07345' entered for the zip code, '50, 63-ro, Yeongdeungpo-gu, Seoul' entered for address1, '63 Square' entered for address2, 'Industrial Bank' entered for the bank name, '33333333333' entered for the account number, and 'buyer1' entered for the account holder (S130).

At this time, the pet selling/buying server 100 automatically generates a customized pet code 499 which is used to distinguish the customized pet, 'Mikey', requested by the "buyer1" member, from customized pets requested by other members, e.g., 101011000000100120000002001000000301,' using the customized pet purchase request form information when the customized pet buyer clicks on the 'save customized pet purchase request form' icon 492 on the customized pet purchase request form.

That is, for 'Mikey', the pet selling/buying server 100 automatically generates the customized pet code '101011000000100120000002001000000301' by sequentially listing '1010110000001001' which comes from the parent pet code 1010110000001001 for mother1 which is generated when the "producer1" member registers the mother pet 'mother1' as a parent pet available for selective mating, '20000002001' which comes from the parent pet code '1010120000002001' with the first five digits excluded therefrom, which is generated when the "producer2" member registers the father pet 'father1' as a parent pet available for selective mating, and '0000003' which comes from the member code 0000003 for the "buyer1" member, followed by adding '01' so as to distinguish between customized pet and customized sibling pet among customized sibling pets while serving as a reference for order of selection when finally selecting the customized pet and the customized sibling pet, and the pet selling/buying server 100 then stores the generated customized pet code, as customized pet purchase information for 'Mikey,' in the buyer information DB 170 of the pet selling/buying server 100.

The pet selling/buying server 100 receives the customized pet purchase request form (of Figs. 28 to 41) information from the customized pet buyer terminal 400. The received customized pet purchase request form information is stored in the buyer information DB 170 of the pet selling/buying server 100. Then, if the customized pet buyer remits the down payment for the customized pet, the customized pet purchase request form information is sent to the customized pet producer terminal 300 and mating of the parent pets is requested based on the customized pet purchase request form information, and then entry of customized sibling pet information is requested (S145).

The customized pet/customized sibling pet information entry form (of Figs. 42 to 47) illustrated involves a process a process in which the customized pet producer who receives a request for mating for the customized pet from the pet selling/buying server 100 enters customized sibling pet information including whether the parent pets mate, whether the mother pet gives birth, and the growth of customized sibling pets born.

Figs. 42 to 47 illustrate examples of interface input screens for customized sibling pet information which is information about the pregnancy and birth of the mother pet, and growth of customized sibling pets and mating information for the parent pets requested for mating by the customized pet buyer on the customized pet producer terminal.

Fig. 42 illustrates an example of an interface input screen webpage (a customized pet/customized sibling pet information entry form entered by the "producer1" member upon initiating mating for the customized pet) displayed on the customized pet producer terminal 300. Referring to Fig. 42, if not the customized pet/customized sibling pet information entry form selected, the customized pet producer may reselect a customized pet/customized sibling pet information entry form anytime by clicking on an 'exit' icon 509. However, if the information is information selected by the customized pet producer, the interface input screen webpage (a customized pet/customized sibling pet information entry form entered by the "producer1" member upon initiating mating for the customized pet) displayed on the customized pet producer terminal 300 allows the customized pet producer to enter customized pet/customized sibling pet information form information for those already selected by the customized pet buyer among the items constituting the customized pet/customized sibling pet information entry form information--the already selected items including customized pet fetus name 501, parent pet kind 502, parent pet breed 503, parent pet region 504, mother pet 505, father pet 506, customized pet price 507, and customized sibling pet price 508--and information that should be additionally entered by the customized pet producer, including mating or not 510, date of mating 520, due date 530, date of birth 535, date scheduled for delivery 540, date of delivery 545, final selection date 550, customized sibling pet count 555, customized sibling pet video 560, customized sibling pet01 photo 571, customized sibling pet02 photo 572, customized sibling pet03 photo 573, customized sibling pet04 photo 574, customized sibling pet05 photo 575, customized sibling pet06 photo 576, customized sibling pet07 photo 577, customized sibling pet08 photo 578, customized sibling pet09 photo 579, and other information 580 about customized sibling pet.

Now described is an embodiment in which the customized pet producer enters the customized pet/customized sibling pet information entry form information about the target customized pet through the interface input screen webpage (the customized pet/customized sibling pet information entry form entered as the "producer1" memebr starts mating for the customized pet) displayed on the customized pet producer terminal 300, where mating or not, date of mating, due date, date of birth, date scheduled for delivery, date of delivery, final selection date, customized sibling pet count, customized sibling pet video, customized sibling pet01 photo, customized sibling pet02 photo, customized sibling pet03 photo, customized sibling pet04 photo, customized sibling pet05 photo, customized sibling pet06 photo, customized sibling pet07 photo, customized sibling pet08 photo, customized sibling pet09 photo, and other information about customized sibling pet, which are information required to be additionally input for the target customized pet, are 'birth,' 'year 2015,' 'November,' 'first day,' 'year 2016,' 'January,' 'first day,' 'year 2016,' 'January,' 'second day,' 'year 2016,' 'March,' 'first day,' 'year 2016,' 'March,' 'third day,' '9,' 'MikeyCustomizedSiblingPet.avi,' 'MikeyCustomizedSiblingPet01.gif,' 'MikeyCustomizedSiblingPet02.gif,' 'MikeyCustomizedSiblingPet03.gif,' 'MikeyCustomizedSiblingPet04.gif,' 'MikeyCustomizedSiblingPet05.gif,' 'MikeyCustomizedSiblingPet06.gif,' 'MikeyCustomizedSiblingPet07.gif,' 'MikeyCustomizedSiblingPet08.gif,' 'MikeyCustomizedSiblingPet09.gif,' and 'nine healthy brothers.'

First, for 'mating or not' 510 among the items constituting the customized pet/customized sibling pet information entry form information, the customized pet producer mouse-clicks on the 'birth?' icon 510 to enter the customized pet/customized sibling pet information entry form information for the target customized pet.

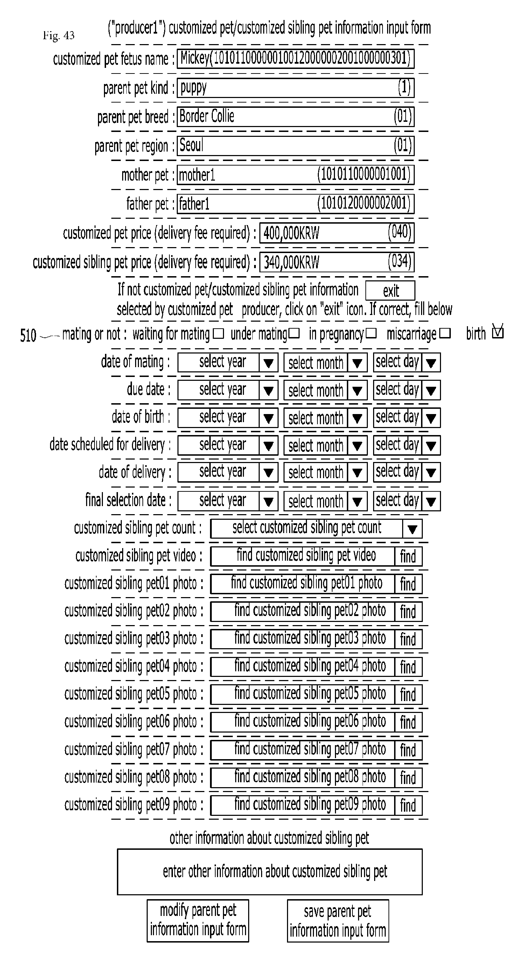

Fig. 43 illustrates an example in which the 'birth' icon 510 in mating or not is clicked on the customized pet producer interface input screen webpage (the customized pet/customized sibling pet information entry form entered when the "producer1" member starts mating for the customized pet) of Fig. 42.

In this embodiment, the mating-or-not for the target customized pet is assumed to be 'birth?' Thus, the customized pet producer selects 'birth?' as mating or not. For mating or not, 'Birth?' selected is entered as the customized pet/customized sibling pet information entry form information for the target customized pet.

Referring back to Fig. 42, for the date of mating 520, the customized pet producer mouse-clicks on the '▼' icon 522 for selecting the date of mating to enter the customized pet/customized sibling pet information entry form information for the target customized pet.

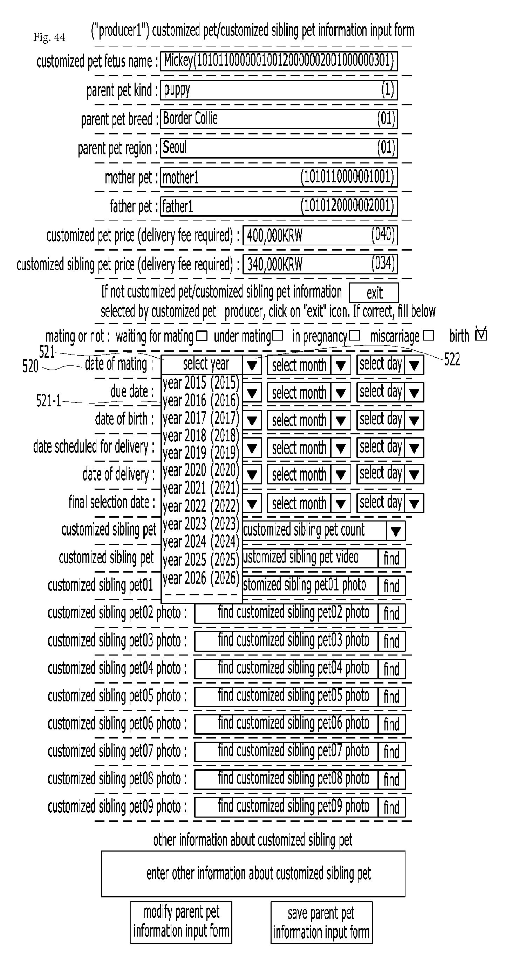

Fig. 44 illustrates an example in which the the '▼' icon 522 for selecting the year of mating is clicked on the customized pet producer interface input screen webpage (the customized pet/customized sibling pet information entry form entered when the "producer1" member starts mating for the customized pet) of Fig. 42. Referring to Fig. 44, clicking on the '▼' icon 522 allows a year-of-mating selection box 521-1 to pop up on the year-of-mating input box 521.

The year-of-mating selection box 521-1 lists up years of mating that may be entered for the year-of-mating. The years of mating include, e.g., 2015 (2015), 2016 (2016), 2017 (2017), 2018 (2018), 2019 (2019), 2020 (2020), 2021 (2021), 2022 (2022), 2023 (2023), 2024 (2024), 2025 (2025), and 2026 (2026). The customized pet producer selects one from the year-of-mating list.

In this embodiment, the year-of-mating for the target customized pet is assumed to be 2015. Accordingly, the customized pet producer selects '2015 (2015)' from the year-of-mating list. For year-of-mating, '2015 (2015)' selected is entered as the customized pet/customized sibling pet information entry form information for the target customized pet.

Referring back to Fig. 42, for the date of mating 520, the customized pet producer mouse-clicks on the '▼' icon 524 for selecting the month of mating to enter the customized pet/customized sibling pet information entry form information for the target customized pet.

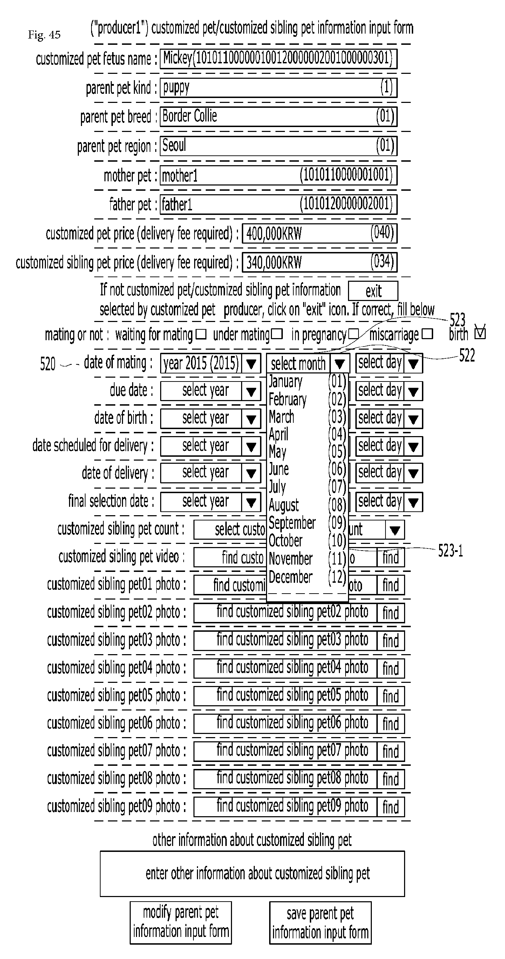

Fig. 45 illustrates an example in which the the '▼' icon 524 for selecting the month of mating is clicked on the customized pet producer interface input screen webpage (the customized pet/customized sibling pet information entry form entered when the "producer1" member starts mating for the customized pet) of Fig. 42. Referring to Fig. 44, clicking on the '▼' icon 524 allows a month-of-mating selection box 523-1 to pop up on the month-of-mating input box 523.

The month-of-mating selection box 523-1 lists up months of mating that may be entered for the month-of-mating. The months of mating include, e.g., January 01, February 02, March 03, April 04, May 05, June 06, July 07, August 08, September 09, October 10, November 11, and December 12. The customized pet producer selects one from the month-of-mating list.

In this embodiment, the month-of-mating for the target customized pet is assumed to be November. Accordingly, the customized pet producer selects November 11' from the month-of-mating list. For month-of-mating, 'November 11' selected is entered as the customized pet/customized sibling pet information entry form information for the target customized pet.

Referring back to Fig. 42, for the date of mating 520, the customized pet producer mouse-clicks on the '▼' icon 526 for selecting the day of mating to enter the customized pet/customized sibling pet information entry form information for the target customized pet.

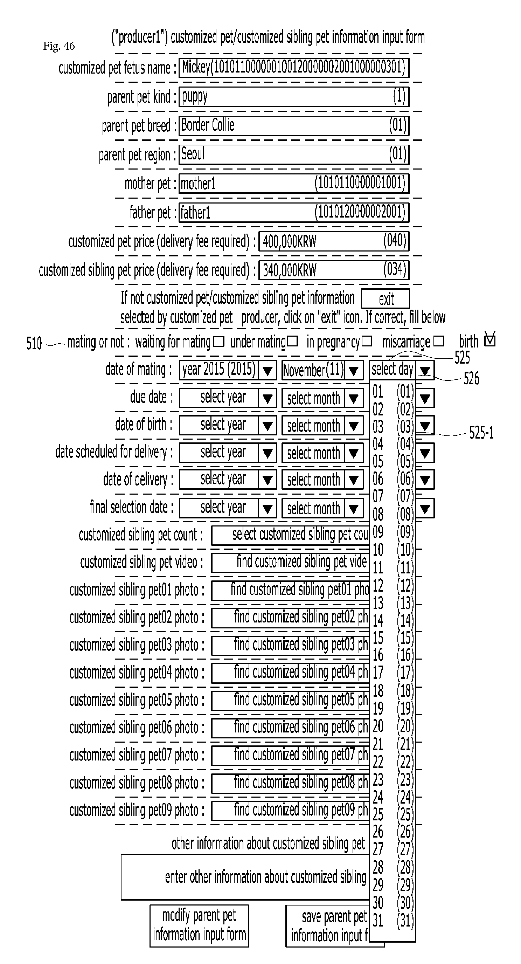

Fig. 46 illustrates an example in which the the '▼' icon 526 for selecting the day of mating is clicked on the customized pet producer interface input screen webpage (the customized pet/customized sibling pet information entry form entered when the "producer1" member starts mating for the customized pet) of Fig. 42. Referring to Fig. 44, clicking on the '▼' icon 526 allows a day-of-mating selection box 525-1 to pop up on the day-of-mating input box 525.

The day-of-mating selection box 525-1 lists up days of mating that may be entered for the day-of-mating. The days of mating include, e.g., 01 (01), 02 (02), 03 (03), 04 (04), 05 (05), 06 (06), 07 (07), 08 (08), 09 (09), 10 (10), 11 (11), 12 (12), 13 (13), 14 (14), 15 (15), 16 (16), 17 (17), 18 (18), 19 (19), 20 (20), 21 (21), 22 (22), 23 (23), 24 (24), 25 (25), 26 (26), 27 (27), 28 (28), 29 (29), 30 (30), and 31 (31). The customized pet producer selects one from the day-of-mating list.

In this embodiment, the day-of-mating for the target customized pet is assumed to be 01. Accordingly, the customized pet producer selects '01 (01)' from the day-of-mating list. For day-of-mating, '01 (01)' selected is entered as the customized pet/customized sibling pet information entry form information for the target customized pet.

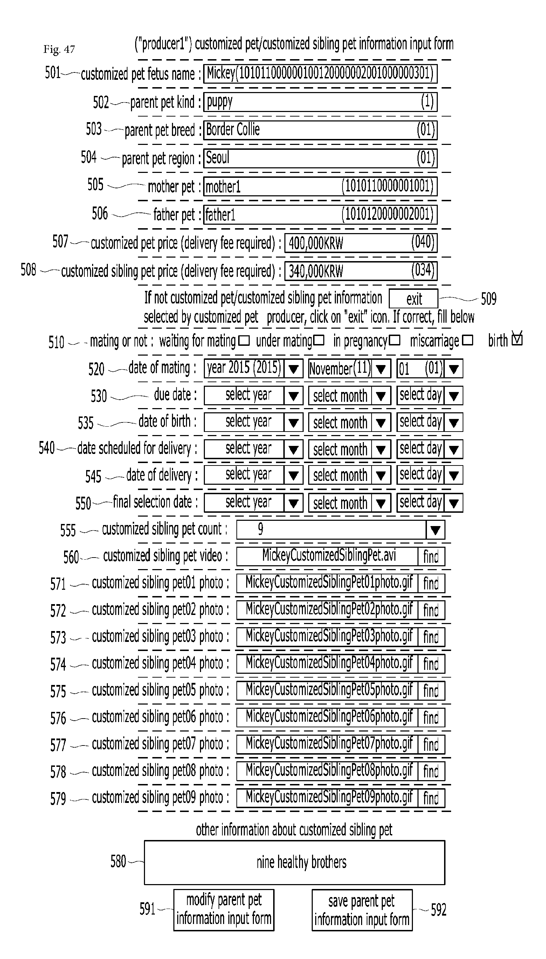

Fig. 47 illustrates an example in which, after all of the other information items of the customized pet/customized sibling pet information entry form, which have not been entered above (as set forth in Figs. 42, 43, 44, 45, and 46) on the customized pet producer interface input screen webpage (the customized pet/customized sibling pet information entry form entered when the "producer1" member starts mating for the customized pet) of Fig. 42, are entered, the 'input customized pet/customized sibling pet information entry form' icon 592 is clicked. Referring to Fig. 47, upon completing the entry of the customized pet/customized sibling pet information entry form information, the customized pet producer clicks on the 'input customized pet/customized sibling pet information entry form' icon 592. Then, the customized pet producer terminal 300 transmits the customized pet/customized sibling pet information entry form information about the target customized pet, which has been entered for the items 501 to 507, 510, 520, 530, 535, 540, 545, 550, 560, and 571 to 580, to the pet selling/buying server 100. That is, the customized pet/customized sibling pet information entry form information indicating that the customized pet fetus name value and customized pet code value of the value 'Mickey(101011000000100120000002001000000301)' entered for the customized pet fetus name are 'Mickey' and '101011000000100120000002001000000301,' respectively, the parent pet kind value and parent pet kind code value of the value 'puppy 1' entered for the parent pet kind are 'puppy' and '1,' respectively, the parent pet breed value and parent pet breed code value of the value 'Border Collie 01' entered for the parent pet breed are 'Border Collie' and '01,' respectively, the parent pet region value and parent pet region code value of the value 'Seoul 01' entered for the parent pet region are 'Seoul' and '01,' respectively, the mother pet value and mother pet code value of the value 'mother1(1010110000001001)' entered for the mother pet are 'mother1' and '1010110000001001', respectively, the father pet value and father pet code value of the value 'father1(1010120000002001)' entered for the father pet are 'father1' and '1010120000002001,' respectively, the customized pet price value and customized pet price code value of the value '400,000KRW(040)' entered for the customized pet price are '400,000KRW' and '040,' respectively, the customized sibling pet price value and customized sibling pet price code value of the value '340,000KRW(034)' entered for the customized sibling pet price are '340,000KRW' and '032,' respectively, 'birth' for mating-or-no, the date-of-mating value and date-of-mating code value of the value '2015(2015) 11(11) 01(01)' entered for the date of mating are '2015-11-01' and '20151101,' respectively, the due date value and due date code value of the value '2016(2016) 01(01) and (01)' entered for the due date are '2016-01-01' and '20160101,' respectively, the date-of-birth value and date-of-birth code value of the value '2016(2016) 01(01) 02(02)' entered for the date of birth are '2016-01-02' and '20160102,' respectively, the scheduled delivery date value and scheduled delivery date code value of the value '2016(2016) 03(03) 01(01)' are '2016-03-01' and '02160301,' respectively, the date-of-delivery value and date-of-delivery code value of the value '2016(2016) 03(03) 03(03)' entered for the date of delivery are '2016-03-03' and '20160303,' respectively, the customized sibling pet count value and customized sibling pet count code value of the value '9(09)' entered for the customized sibling pet count are '9' and '09,' respectively, 'Mickey CustomizedSiblingPet.avi' for the customized sibling pet video, 'Mickey CustomizedSiblingPet01.gif for the customized sibling pet01 photo, 'Mickey CustomizedSiblingPet02.gif for the customized sibling pet02 photo, 'Mickey CustomizedSiblingPet03.gif for the customized sibling pet03 photo, 'Mickey CustomizedSiblingPet04.gif for the customized sibling pet04 photo, 'Mickey CustomizedSiblingPet05.gif for the customized sibling pet05 photo, 'Mickey CustomizedSiblingPet06.gif for the customized sibling pet06 photo, 'Mickey CustomizedSiblingPet07.gif for the customized sibling pet07 photo, 'Mickey CustomizedSiblingPet08.gif for the customized sibling pet08 photo, 'Mickey CustomizedSiblingPet09.gif for the customized sibling pet09 photo, and 'nine healthy brothers' for the other information about customized sibling pet, and the received customized pet/customized sibling pet information entry form information is input, as the customized pet mating information about Mickey, in the producer information DB 160.

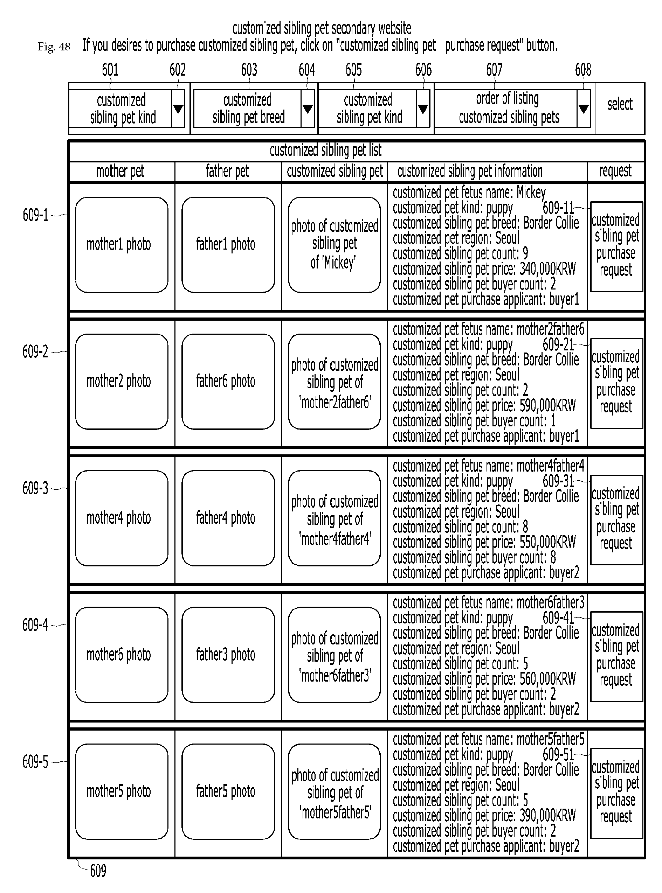

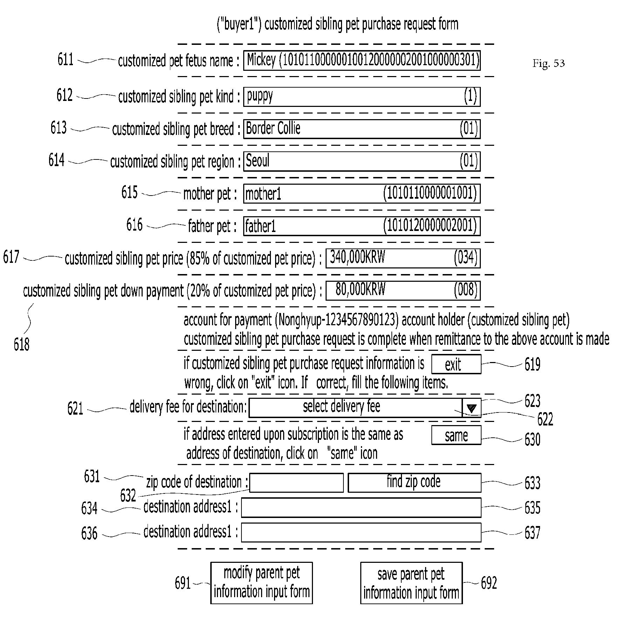

The pet selling/buying server 100 receives the customized pet/customized sibling pet information entry form (of Figs. 42 to 47) information from the customized pet producer terminal 300. The received customized pet/customized sibling pet information entry form information is stored in the producer information DB 160 of the pet selling/buying server 100. Then, the pet selling/buying server 100 transmits the customized sibling pet information, which includes whether the parent pets mate, whether the mother pet gives birth, and the growth of customized sibling pets born and which is received from the customized pet producer, from the producer information DB 160 to the customized pet buyer terminal 400 and the customized sibling pet buyer terminal 500 or the customized sibling pet search window of the customized sibling pet buyer terminal 500 (S155). The customized sibling pet search interface (of Figs. 48 to 52) illustrated is for a process in which after a desired customized sibling pet is retrieved, information is entered to a customized sibling pet purchase request form (of Figs. 53 to 57).

Figs. 48 to 52 illustrate examples of customized sibling pet search windows for searching for information about customized sibling pets that may be bought among the customized sibling pets remaining after the customized pet buyer and customized sibling pet buyer purchase on the customized sibling pet buyer terminal.

Referring to Figs. 48 to 52, Fig. 48 is a view illustrating an example of a customized sibling pet search interface (i.e., a customized sibling pet search window where the "buyer1" member searches for customized sibling pet information) displayed on the customized sibling pet buyer terminal 500. Referring to Fig. 48, the interface input screen webpage (the customized sibling pet search window where the "buyer1" member searches for customized sibling pet information) provides customized sibling pet information to allow for requesting to purchase a customized sibling pet when the customized sibling pet buyer looking at the process of growth of customized sibling pets born by the customized pet buyer's request for selective mating discovers his desired customized sibling pet.

Described below is an embodiment in which upon purchasing the customized sibling pet of 'Mickey' among customized sibling pets whose kind, breed, and region are 'puppy,' 'Border Collie,' and 'Seoul,' respectively, the customized sibling pet buyer selects and applies for the target customized sibling pet through the interface input screen webpage (the customized sibling pet search window where the "buyer 1" member searches for customized sibling pet information) displayed on the customized sibling pet buyer terminal 500.

The customized sibling pet buyer mouse-clicks on the '▼' icon 602 for selecting the kind of customized sibling pet to select the kind of the customized sibling pet for the customized sibling pet kind 601 among the items constituting the customized sibling pet information provided from the customized pet producer.

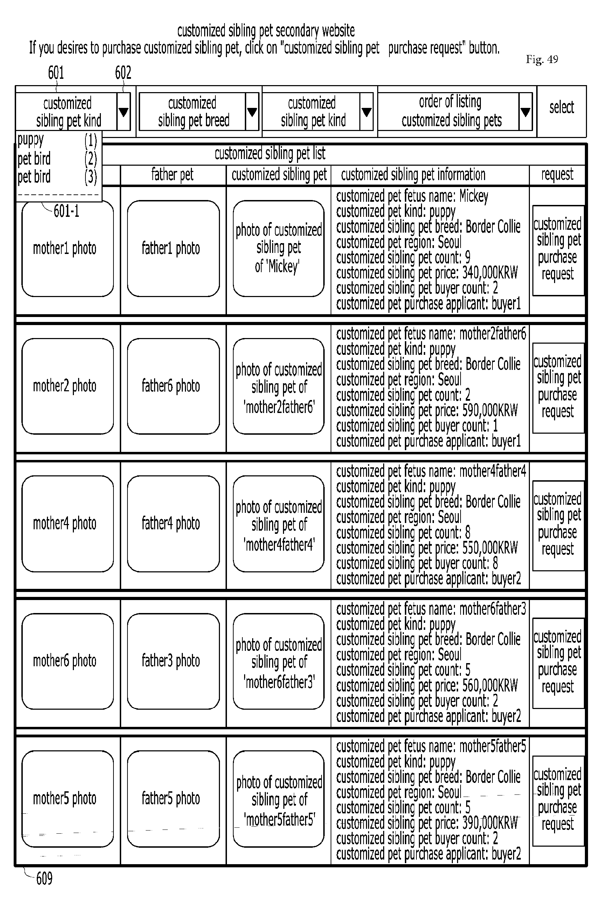

Fig. 49 illustrates an example in which the '▼' icon 602 for selecting the kind of customized sibling pet is clicked on the customized sibling pet search interface of Fig. 48. Referring to Fig. 49, clicking on the '▼' icon 602 allows a customized sibling pet kind selection box 601-1 to pop up on the customized sibling pet kind input box 601.

The customized sibling pet kind selection box 601-1 lists up kinds of customized sibling pet that may be output for the kind of the customized sibling pet. Such kinds of customized sibling pet may include, e.g., puppy 1, cat 2, and pet bird 3. The customized sibling pet buyer selects one from the customized sibling pet kind list.

In this embodiment, the kind of the target customized sibling pet is assumed to be puppy 1. Accordingly, the customized sibling pet buyer selects 'puppy 1' from the customized sibling pet kind list. Of the 'puppy 1' selected, only '1' which is the customized sibling pet kind code value is selected as the customized sibling pet search window information about the target customized sibling pet.

Then, the customized sibling pet buyer terminal 500 transmits the customized sibling pet search window information entered for the item 601 to the pet selling/buying server 100. That is, the customized sibling pet buyer terminal 500 transmits the customized sibling pet search window information, i.e., '1,' entered for the customized sibling pet kind to the pet selling/buying server 100. Then, the pet selling/buying server 100 compares the value, '1,' received from the customized sibling pet buyer with the first digit of the customized pet code value entered by the customized pet producer and stored in the producer information DB 160, and pops up the customized sibling pet information about the customized pet with a matching item on the 'customized sibling pet list' output box 609 of the customized sibling pet buyer terminal 500.

However, since the instant embodiment regards the case where among customized sibling pets whose kind, breed, and region are 'puppy,' 'Border Collie,' and 'Seoul,' respectively, the customized sibling pet of 'Mickey' is purchased, the customized sibling pet buyer subsequently mouse-clicks on the '▼' icon 604 for selecting the customized sibling pet breed to enter the customized sibling pet search window information of the customized sibling pet breed 603 for the target customized sibling pet.

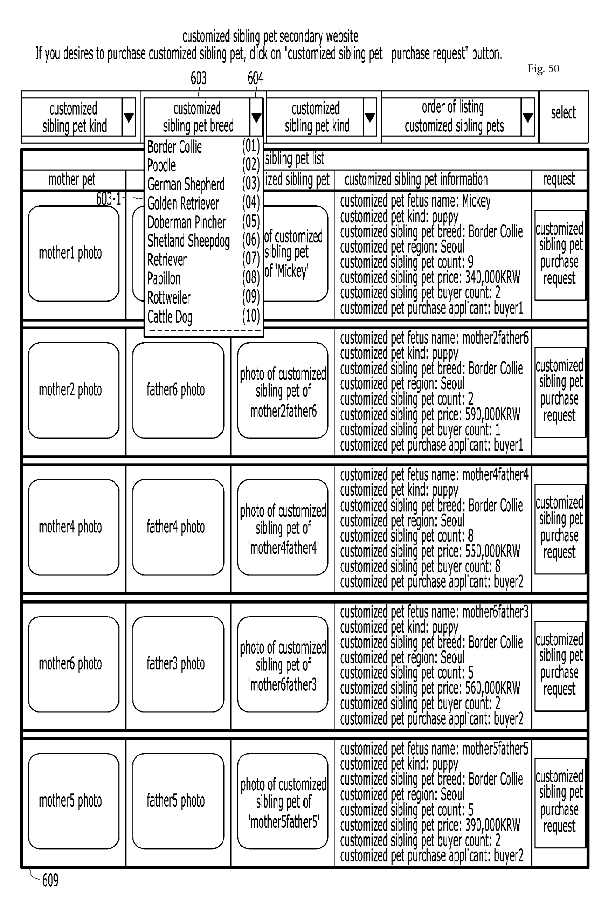

Fig. 50 illustrates an example in which the '▼' icon 604 for selecting the breed of customized sibling pet is clicked on the customized sibling pet search interface of Fig. 48. Referring to Fig. 50, clicking on the '▼' icon 604 allows a customized sibling pet breed selection box 603-1 to pop up on the customized sibling pet breed input box 603.

The customized sibling pet breed selection box 603-1 lists up breeds of customized sibling pet that may be output for the breed of the customized sibling pet. Such breeds of customized sibling pet include, i.e., Border Collie 01, Poodle 02, German Shepherd 03, Golden Retriever 04, Doberman Pincher 05, Shetland Sheepdog 06, Retriever 07, Papillon 08, Rottweiler 09, and Cattle Dog 10. The customized sibling pet buyer selects one from the customized sibling pet breed list.

In this embodiment, the breed of the target customized sibling pet is assumed to be Border Collie 01. Accordingly, the customized sibling pet buyer selects 'Border Collie 01' from the customized sibling pet breed list. Of the 'Border Collie 01' selected, only '01' which is the customized sibling pet breed code value is selected as the customized sibling pet search window information of the customized sibling pet breed about the target customized sibling pet. Then, the customized sibling pet buyer terminal 500 transmits the customized sibling pet search window information entered for the items 601 and 603 to the pet selling/buying server 100. That is, the customized sibling pet buyer terminal 500 transmits the customized sibling pet search window information, i.e., '1,' entered for the customized sibling pet kind and '01' entered for the customized sibling pet breed to the pet selling/buying server 100. Then, the pet selling/buying server 100 compares the values, '1' and '01,' received from the customized sibling pet buyer with the first through third digits of the customized pet code value entered by the customized pet producer and stored in the producer information DB 160, and pops up the customized sibling pet information about the customized pet with an item matching for all the numbers on the 'customized sibling pet list' output box 609 of the customized sibling pet buyer terminal 500.

However, since the instant embodiment regards the case where among customized sibling pets whose kind, breed, and region are 'puppy,' 'Border Collie,' and 'Seoul,' respectively, the customized sibling pet of 'Mickey' is purchased, the customized sibling pet buyer subsequently mouse-clicks on the '▼' icon 606 for selecting the customized sibling pet region to enter the customized sibling pet search window information of the customized sibling pet region 605 for the target customized sibling pet.

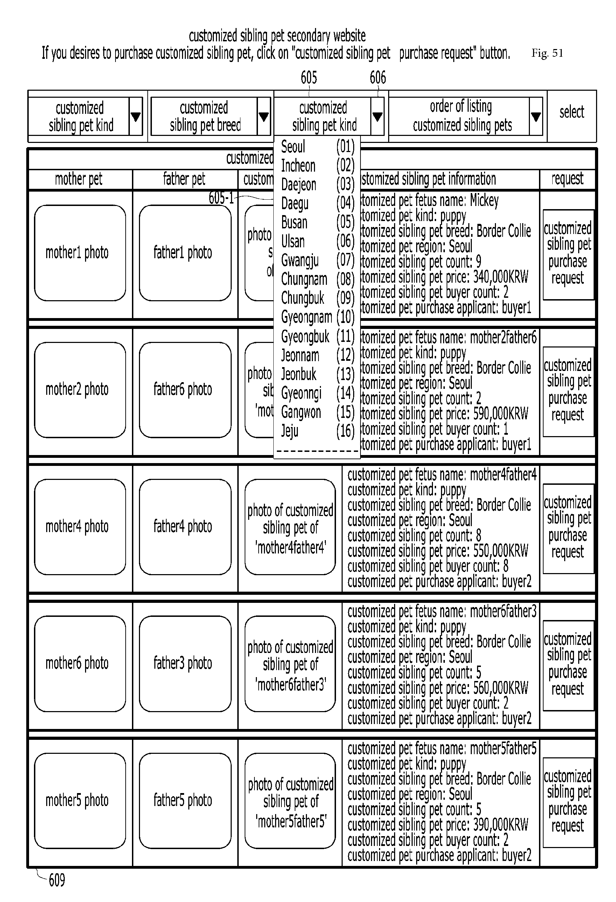

Fig. 51 illustrates an example in which the '▼' icon 606 for selecting the region of customized sibling pet is clicked on the customized sibling pet search interface of Fig. 48. Referring to Fig. 51, clicking on the '▼' icon 606 allows a customized sibling pet region selection box 605-1 to pop up on the customized sibling pet region input box 605.

The customized sibling pet region selection box 605-1 lists up regions of customized sibling pet that may be output for the region of the customized sibling pet. Such regions of the customized sibling pet include, e.g., Seoul 01, Incheon 02, Daejeon 03, Daegu 04, Busan 05, Ulsan 06, Gwangju 07, Chungnam 08, Chungbuk 09, Gyeongnam 10, Gyeongbuk 11, Jeonnam 12, Jeonbuk 13, Gyeonngi 14, Gangwon 15, and Jeju 16. The customized sibling pet buyer selects one from the customized sibling pet region list.

In this embodiment, the region of the target customized sibling pet is assumed to be Seoul 01. Accordingly, the customized sibling pet buyer selects 'Seoul 01' from the customized sibling pet region list. Of the 'Seoul 01' selected, only '01' which is the customized sibling pet region code value is selected as the customized sibling pet search window information of the customized sibling pet region about the target customized sibling pet. Then, the customized sibling pet buyer terminal 500 transmits the customized sibling pet search window information entered for the items 601, 603, and 605 to the pet selling/buying server 100. That is, the customized sibling pet buyer terminal 500 transmits the customized sibling pet search window information, i.e., '1,' entered for the customized sibling pet kind, '01' entered for the customized sibling pet breed, and '01' entered for the customized sibling pet region to the pet selling/buying server 100. Then, the pet selling/buying server 100 compares the values, '1,' '01,' and '01,' received from the customized sibling pet buyer with the first through fifth digits of the customized pet code value entered by the customized pet producer and stored in the producer information DB 160, and pops up the customized sibling pet information about the customized pet with an item matching for all the numbers on the 'customized sibling pet list' output box 609 of the customized sibling pet buyer terminal 500.

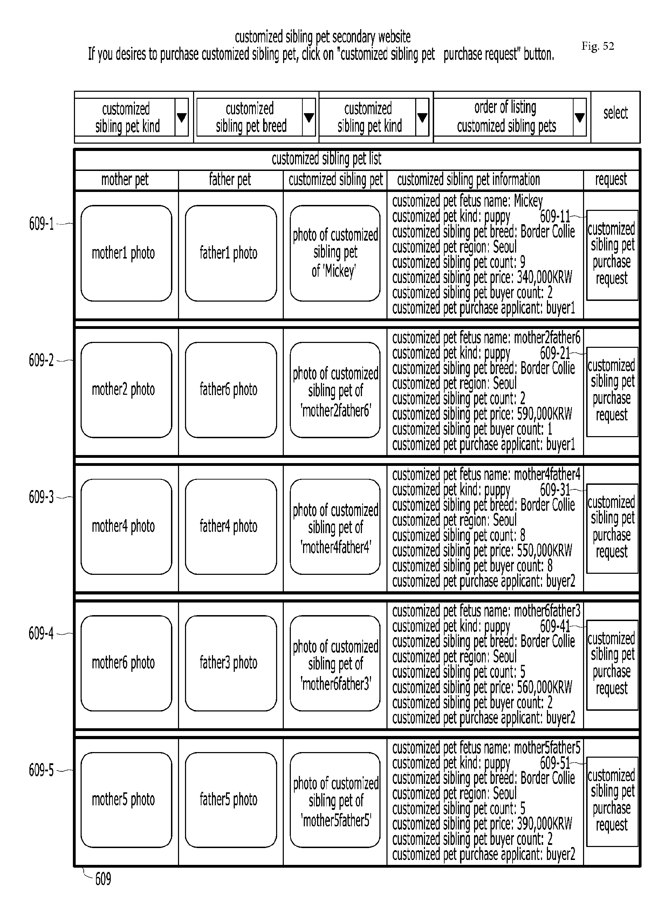

Fig. 52 shows an example of information on the producer information DB 160 of the pet selling/buying server 100 which meets all the conditions, i.e., 'puppy 1' entered for the customized sibling pet kind, 'Border Collie 01' entered for the customized sibling pet breed, and 'Seoul 01' entered for the customized sibling pet region, as selected by the customized sibling pet buyer on the customized sibling pet search interface of Fig. 48.

In the instant embodiment, the customized sibling pet requested for purchase of the target customized sibling pet is assumed to be 'Mickey.' Thus, the customized sibling pet buyer mouse-clicks on the 'request to buy customized sibling pet' icon 609-11 on the 'Mickey' information box 609-1, which indicates that the customized pet fetus name is 'Mickey,' in the 'customized sibling pet list' output box 609.

Figs. 53 to 57 illustrate examples of interface input screens about customized sibling pet purchase request information for requesting to buy among customized sibling pets available for purchase on the customized sibling pet buyer terminal.

Referring to Figs. 53 to 57, Fig. 53 illustrates an example in which the 'request to buy customized sibling pet' icon 609-11 on the information box 609-1 regarding the customized pet fetus name 'Mickey' of the 'customized sibling pet list' output box 609 is clicked on the customized sibling pet search interface of Fig. 48. Referring to Fig. 53, if the customized sibling pet purchase request form information is wrong, the customized sibling pet buyer may re-select the customized pet purchase request form information anytime by clicking on the 'exit' icon 619. However, if the information selected by the customized sibling pet buyer is correct, the customized sibling pet buyer interface (i.e., a customized sibling pet purchase request form by which the "buyer1" member requests purchase after clicking on the 'customized sibling pet purchase request' icon on the customized sibling pet search window) allows the customized sibling pet buyer to enter the customized sibling pet purchase request form information for the already selected items, i.e., customized pet fetus name 611, customized sibling pet kind 612, customized sibling pet breed 613, customized sibling pet region 614, mother pet 615, father pet 616, customized sibling pet price 617, customized sibling pet down payment 618, among the items constituting the customized sibling pet purchase request form information, and those required to be added, such as destination delivery fee 621, destination zip code 631, destination address1 634, and destination address2 636.

Now described is an embodiment in which, where the destination delivery fee, destination zip code, destination address1, and destination address2 are '50,000KRW for the same region as parent pet,' '07345,' '50, 63-ro, Yeongdeungpo-gu, Seoul,' and '63 Square,' respectively, the customized sibling pet buyer enters the customized sibling pet purchase request form information about the target customized sibling pet through the interface input screen webpage (the customized sibling pet purchase request form where the "buyer1" member requests purchase after clicking on the 'customized sibling pet purchase request' icon on the customized sibling pet search window) displayed on the customized sibling pet buyer terminal 500.

First, for the destination delivery fee 621 among the items constituting the customized sibling pet purchase request form information, the customized sibling pet buyer mouse-clicks on the '▼' icon 623 for selecting a fee for delivery to the destination to enter customized sibling pet purchase request form information about the target customized sibling pet.

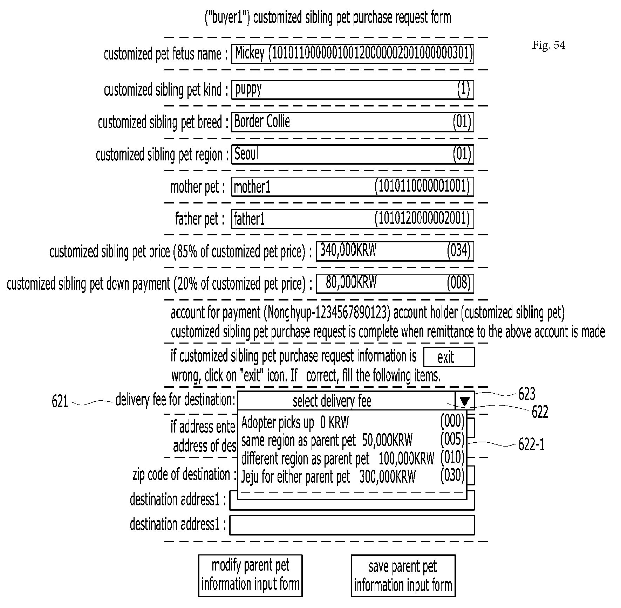

Fig. 54 illustrates an example in which the '▼' icon 623 for selecting the destination delivery fee is clicked on the customized sibling pet buyer interface input screen webpage (the customized sibling pet purchase request form where the "buyer1" member requests purchase after clicking on the 'customized sibling pet purchase request' icon on the customized sibling pet search window) of Fig. 53. Referring to Fig. 54, clicking on the '▼' icon 623 allows a destination delivery fee selection box 622-1 to pop up on the destination delivery fee input box 622.

The destination delivery fee selection box 622-1 lists up kinds of destination delivery fees that may be entered for the kind of the destination delivery fee. Such kinds of destination delivery fees may include, e.g., '0 KRW for pickup 000,' '50,000KRW for the same region as parent pet 005,' '100,000KRW for different regions from parent pet 010,' and '300,000KRW for Jeju island 030.' The customized sibling pet buyer selects one from the list of destination delivery fee kinds.

In the instant embodiment, the kind of the destination delivery fee for the target customized sibling pet is assumed to be '50,000KRW for the same region as parent pet 005.' Accordingly, the customized sibling pet buyer selects '50,000KRW for the same region as parent pet 005' from the list of destination delivery fee kinds. The selected item, i.e., '50,000KRW for the same region as parent pet 005' is entered as the customized sibling pet purchase request form information about the target customized sibling pet for the kind of destination delivery fee.

Referring back to Fig. 53, the customized sibling pet buyer clicks on 'same' icon 630 if the address registered when he applied for membership is the same as the address of the destination, and if different otherwise, needs to directly enter rather than clicking on the 'same' icon 630.

In this embodiment, the address of the destination for the target customized sibling pet is assumed to be the same as the address registered when he applied for membership. Thus, the customized sibling pet buyer clicks on the 'same' icon 630.

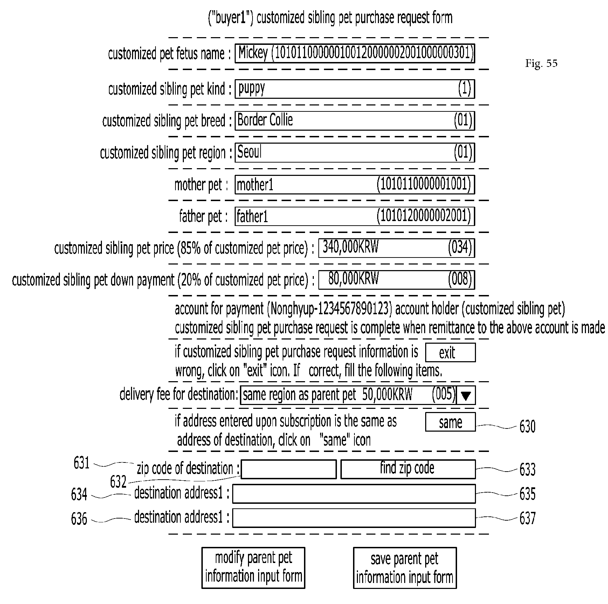

Fig. 55 illustrates an example in which the 'same' icon 630 is clicked on the customized sibling pet buyer interface input screen webpage (the customized sibling pet purchase request form where the "buyer1" member requests purchase after clicking on the 'customized sibling pet purchase request' icon on the customized sibling pet search window) of Fig. 53. Referring to Fig. 55, clicking on the 'same' icon 630 allows '07345,' '50, 63-ro, Yeongdeungpo-gu, Seoul,' and '63 Square' to be input, as the customized sibling pet purchase request form information for the target customized sibling pet, to the destination zip code input box 631, destination address 1 input box 634, and destination address2 input box 636, respectively.

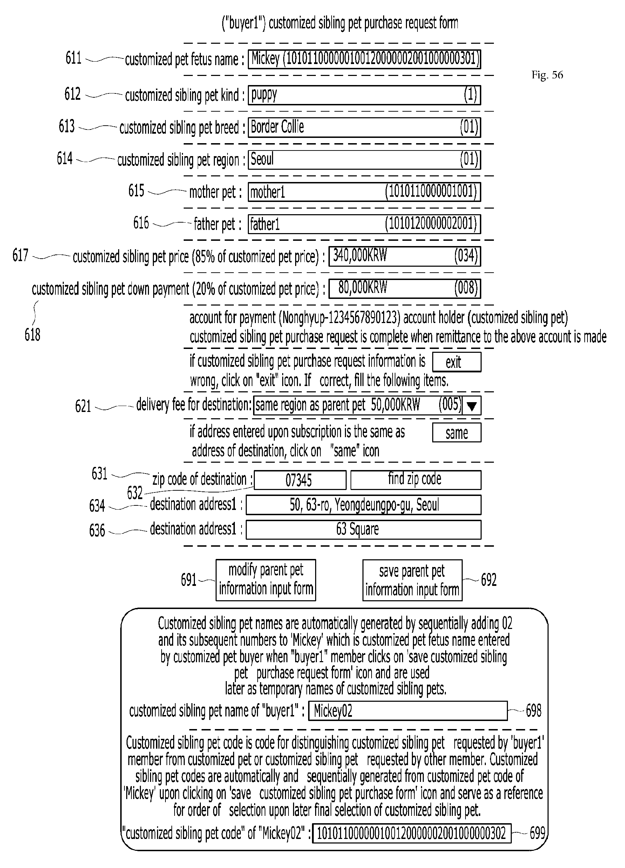

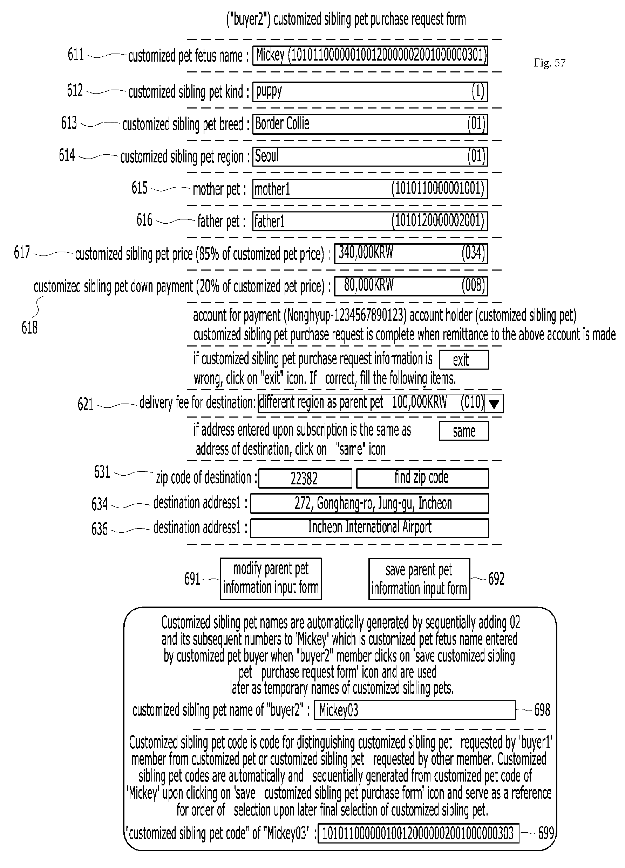

Fig. 56 illustrates an example in which, after all the customized sibling pet purchase request form information is entered, the 'save customized sibling pet purchase request form' icon 692 is clicked on the customized sibling pet buyer interface input screen webpage (the customized sibling pet purchase request form where the "buyer1" member requests purchase after clicking on the 'customized sibling pet purchase request' icon on the customized sibling pet search window) of Fig. 53. Referring to Fig. 56, the customized sibling pet buyer may click on a 'modify customized sibling pet purchase request form' icon 691 and thus modify anytime the information entered. Upon completing the entry of the customized sibling pet purchase request form information, the customized sibling pet buyer clicks on the 'save customized sibling pet purchase request form' 692. Then, the customized sibling pet producer terminal 500 transmits the customized sibling pet purchase request form information about the target customized sibling pet, which has been entered for the items 611, 612, 613, 614, 615, 616, 617, 618, 621, 631, 634, and 636, to the pet selling/buying server 100. In other words, the terminal 500 of the "buyer1" member who is the customized sibling pet buyer transmits, to the pet selling/buying server 100, the customized sibling pet purchase request form information indicating that the customized pet fetus name value and customized pet code value of the value 'Mickey(101011000000100120000002001000000301)' entered for the customized pet fetus name are 'Mickey' and '101011000000100120000002001000000301,' respectively, the customized sibling pet kind value and customized sibling pet kind code value of the value 'puppy 1' entered for the customized sibling pet kind are 'puppy' and '1,' respectively, the customized sibling pet breed value and customized sibling pet breed code value of the value 'Border Collie 01' entered for the customized sibling pet breed are 'Border Collie' and '01,' respectively, the customized sibling pet region value and customized sibling pet region code value of the value 'Seoul 01' entered for the customized sibling pet region are 'Seoul' and '01,' the mother pet value and mother pet code value of the value 'mother1 (1010110000001001)' entered for the mother pet are 'mother1' and '1010110000001001,' respectively, the father pet value and father pet code value of the value 'father1(1010120000002001)' entered for the father pet are 'father1' and '1010120000002001,' respectively, the customized sibling pet price value and customized sibling pet price code value of the value '340,000KRW 034' entered for the customized sibling pet price are '340,000KRW' and '032,' respectively, the customized sibling pet down payment value and customized sibling pet down payment code value of the value '60,000KRW 006' entered for the customized sibling pet down payment are '60,000KRW' and '006,' respectively, the destination delivery fee value and destination delivery fee code value of the value '50,000KRW for the same region as parent pet 005' entered for the destination delivery fee are '50,000KRW for the same region as parent pet' and '005,' respectively, '07345' entered for the destination zip code, '50, 63-ro, Yeongdeungpo-gu, Seoul' entered for destination address1, and '63 Square' entered for destination address2 (S171). At this time, upon clicking on the 'save customized sibling pet purchase request form' icon 692 for the customized sibling pet name and customized sibling pet code requested by the "buyer1" member, the pet selling/buying server 100 compares '101011000000100120000002001,' which is a 27-digit number obtained by excluding the last nine digits from the customized pet code value '101011000000100120000002001000000301' for 'Mickey' with the first 27 digits of each of the customized sibling pet code values--i.e., with the last nine digits excluded therefrom--which are stored in the buyer information DB 170 of the pet selling/buying server 100, using the customized sibling pet purchase request form information. If there is no match, the pet selling/buying server 100 adds a two-digit number, '02,' behind each of the customized pet fetus name and the 27-digit number (the last nine digits excluded) of the customized sibling pet code value '101011000000100120000002001000000301', thereby automatically generating 'Mickey02' as the customized sibling pet name and '101011000000100120000002001000000302' as the customized sibling pet code value. However, if there is a match, the pet selling/buying server 100 automatically generates the customized sibling pet name by combining the customized pet fetus name 'Mickey' with the sum of '1' and the code value with the larget last two digits of the 36-digit customized sibling pet code value that matches, and the pet selling/buying server 100 automatically generates the 36-digit customized sibling pet code by combining the 27-digit (last nine-digit excluded) value, i.e., '101011000000100120000002001,' of the customized pet code value '101011000000100120000002001000000301' for 'Mickey' with the sum of '1' and the code value with the largest last two digits of the 36-digit customized sibling pet code value that matches the seven-digit member code value '0000003' of the "buyer1" member. Then, the pet selling/buying server 100 stores the customized sibling pet name and the customized sibling pet code, as customized sibling pet purchase information, in the buyer information DB 170 of the pet selling/buying server 100. However, for the "buyer1" member, there is assumed to be no matching customized sibling pet code value, and thus, 'Mickey02' and '101011000000100120000002001000000302' are stored as the customized sibling pet name value and the customized sibling pet code value, respectively. Then, it is stored, as the customized sibling pet purchase information for the "buyer1" member who is the customized sibling pet buyer, in the buyer information DB 170 of the pet selling/buying server 100. Fig. 57 illustrates an embodiment in which other customized sibling pet purchase information is entered to the buyer information DB 170 of the pet selling/buying server 100 so as to efficiently describe the method implemented on a computer for selective mating and online sale, which is an online sale method according to an embodiment of the present invention.

Fig. 57 illustrates an example in which, after all the customized sibling pet purchase request form information is entered, the 'save customized sibling pet purchase request form' icon 692 is clicked on another customized sibling pet buyer interface input screen webpage (the customized sibling pet purchase request form where the "buyer2" member requests purchase after clicking on the 'customized sibling pet purchase request' icon on the customized sibling pet search window). Referring to Fig. 57, the customized sibling pet buyer may click on a 'modify customized sibling pet purchase request form' icon 691 and thus modify anytime the information entered. Upon completing the entry of the customized sibling pet purchase request form information, the customized sibling pet buyer clicks on the 'save customized sibling pet purchase request form' 692. Then, the customized sibling pet producer terminal 500 transmits the customized sibling pet purchase request form information about the target customized sibling pet, which has been entered for the items 611 to 618, 621, 631, 634, and 636, to the pet selling/buying server 100. In other words, the terminal 500 of the "buyer2" member who is the customized sibling pet buyer transmits, to the pet selling/buying server 100, the customized sibling pet purchase request form information indicating that the customized pet fetus name value and customized pet code value of the value 'Mickey(101011000000100120000002001000000301)' entered for the customized pet fetus name are 'Mickey' and '101011000000100120000002001000000301,' respectively, the customized sibling pet kind value and customized sibling pet kind code value of the value 'puppy 1' entered for the customized sibling pet kind are 'puppy' and '1,' respectively, the customized sibling pet breed value and customized sibling pet breed code value of the value 'Border Collie 01' entered for the customized sibling pet breed are 'Border Collie' and '01,' respectively, the customized sibling pet region value and customized sibling pet region code value of the value 'Seoul 01' entered for the customized sibling pet region are 'Seoul' and '01,' the mother pet value and mother pet code value of the value 'mother1(1010110000001001)' entered for the mother pet are 'mother1' and '1010110000001001,' respectively, the father pet value and father pet code value of the value 'father1(1010120000002001)' entered for the father pet are 'father1' and '1010120000002001,' respectively, the customized sibling pet price value and customized sibling pet price code value of the value '340,000KRW 034' entered for the customized sibling pet price are '340,000KRW' and '032,' respectively, the customized sibling pet down payment value and customized sibling pet down payment code value of the value '60,000KRW 006' entered for the customized sibling pet down payment are '60,000KRW' and '006,' respectively, the destination delivery fee value and destination delivery fee code value of the value '100,000KRW for different region from parent pet 010' entered for the destination delivery fee are '100,000KRW for different region as parent pet' and '010,' respectively, '22382' entered for the destination zip code, '272, Gonghang-ro, Jung-gu, Incheon' entered for destination address1, and 'Incheon International Airport' entered for destination address2 (S171). At this time, the pet selling/buying server 100 assumes that there are matching customized sibling pet code values for the "buyer2" member and that the largest code value of the customized sibling pet code values is '101011000000100120000002001000000302,' automatically generates 'Mickey03' as the customized sibling pet name for the "buyer2" member by combining the customized pet fetus name value, 'Mickey,' with '03' which is obtained by adding '1' to the last two digits '02' of the 36-digit customized sibling pet code value and automatically generates '101011000000100120000002001000000403' as the 36-digit customized sibling pet code for 'Mickey03' by sequentially listing the 27-digit value '101011000000100120000002001' which is obtained by excluding the last nine digits from the customized pet code value '101011000000100120000002001000000301' for 'Mickey,' the nine-digit value '0000004' of the member code value for the "buyer2" member, and a two-digit value '03' which is obtained by adding '1' to the last two digits, '02,' of the 36-digit customized sibling pet code value for the "buyer1" member, and then the pet selling/buying server 100 enters the customized sibling pet name and customized sibling pet code, as customized sibling pet purchase information about 'Mickey03' in the buyer information DB 170 of the pet selling/buying server 100. Then, it is stored, as the customized sibling pet purchase information for the "buyer2" member who is the customized sibling pet buyer, in the buyer information DB 170 of the pet selling/buying server 100.

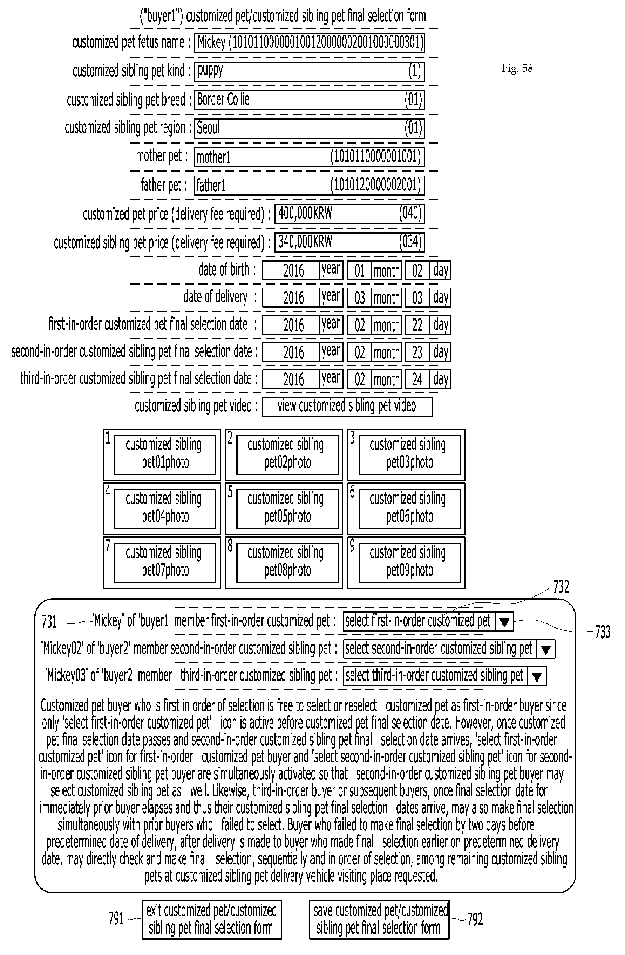

The pet selling/buying server 100 receives the customized sibling pet purchase request form (of Figs. 53, 54, 55, 56, and 57) information from the customized sibling pet buyer terminal 500. The received customized sibling pet purchase request form information is stored in the buyer information DB 170 of the pet selling/buying server 100. Then, if the customized sibling pet buyer pays for the customized sibling pet down payment, the customized sibling pet purchase request information is transmitted to the customized pet producer terminal 300. It is assumed below that the "buyer 1" member who is the customized pet buyer simultaneously buys two pets, i.e., the customized pet and a customized sibling pet, and enters the customized pet final selection information and the customized sibling pet final selection information and that the "buyer2" member who is the customized sibling pet buyer buys one customized sibling pet and does not enter the customized sibling pet final selection information. The customized pet/customized sibling pet final selection form (of Figs. 58, 59, and 60) illustrated regards a process in which the "buyer1" member who is the buyer of the customized pet which is to be first chosen in final selection among the customized sibling pets enters customized pet final selection information from the pet selling/buying server 100, and the customized pet/customized sibling pet final selection form (of Figs. 71, 62, and 63) illustrated subsequently regards a process in which the "buyer1" member who is the buyer of the customized sibling pet which is to be second chosen in final selection among the customized sibling pets enters the customized sibling pet final selection information from the pet selling/buying server 100.

Figs. 58 to 60 are views illustrating examples of interface input screens for information for final selection of a favorite customized pet among customized sibling pets on the customized pet buyer terminal.

Fig. 58 is a view illustrating an example of a customized pet and customized sibling pet final selection interface displayed on the customized pet buyer terminal 400. Referring to Fig. 58, the customized pet and customized sibling pet final selection interface displayed on the customized pet buyer terminal 400 allows the customized pet buyer to enter customized pet/customized sibling pet final selection form information for the first-in-order customized pet 731 which the "buyer1" member who is the customized pet buyer is supposed to select among the items constituting the customized pet/customized sibling pet final selection form information.

Described below is an embodiment in which where 'customized sibling pet07' is first to be selected by adding a target customized pet, the customized pet buyer enters the customized pet/customized sibling pet final selection form information for the target customized pet through the interface input screen webpage (the customized pet/customized sibling pet final selection form where the "buyer1" member enters upon starting the final selection of the customized pet) displayed on the customized pet buyer terminal 400.

For the first-in-order customized pet 731 among the items constituting the customized pet/customized sibling pet final selection form information, the customized pet buyer mouse-clicks on the '▼' icon 733 for selecting the first-in-order customized pet to enter the customized pet/customized sibling pet final selection form information for the target customized pet.

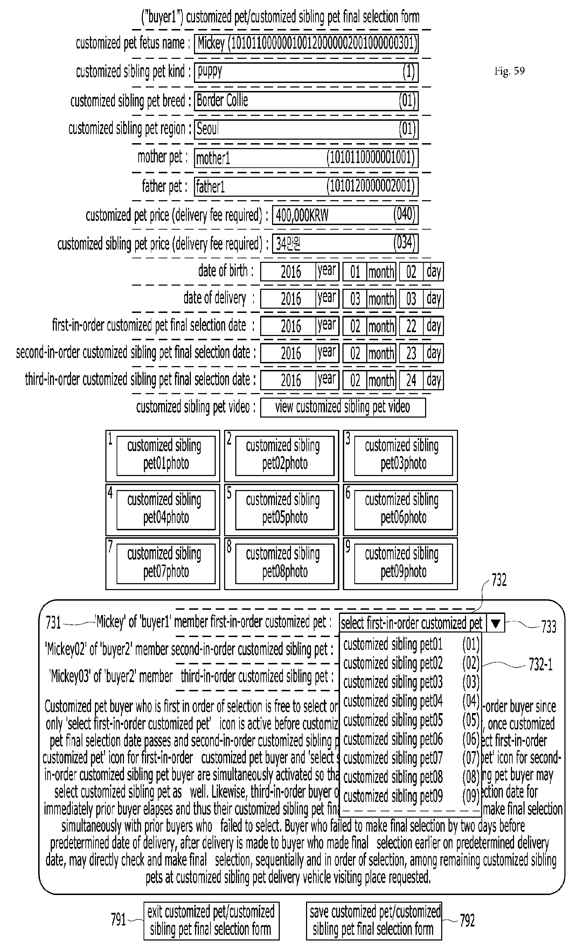

Fig. 59 illustrates an example in which the the '▼' icon 733 for selecting the first-in-order customized pet is clicked on the interface input screen webpage (the customized pet/customized sibling pet final selection form where the "buyer1" member enters upon starting the final selection of the customized pet) displayed on the customized pet buyer terminal 400 of Fig. 58. Referring to Fig. 59, clicking on the '▼' icon 733 allows a first-in-order customized pet selection box 732-1 to pop up on the first-in-order customized pet input box 732.

The first-in-order customized pet selection box 732-1 lists up first-in-order customized pets that may be entered for the first-in-order customized pet. The first-in-order customized pets include, e.g., customized sibling pet01 01, customized sibling pet02 02, customized sibling pet03 03, customized sibling pet04 04, customized sibling pet05 05, customized sibling pet06 06, customized sibling pet07 07, customized sibling pet08 08, and customized sibling pet09 09. The customized pet buyer selects one from the first-in-order customized pet list.

In this embodiment, the first-in-order customized pet for the target customized pet is assumed to be customized sibling pet07. Accordingly, the customized pet buyer selects 'customized sibling pet07 07' from the first-in-order customized pet list. 'Customized sibling pet07 07' selected is entered as the customized pet/customized sibling pet final selection form information of the first-in-order customized pet for the target customized pet.

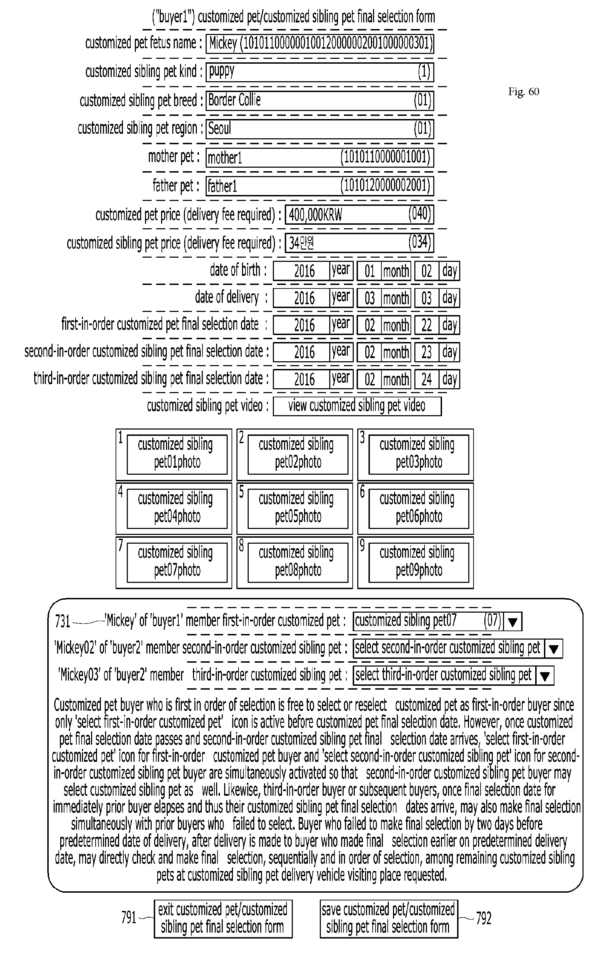

Fig. 60 illustrates an example in which after the customized pet/customized sibling pet final selection form information is entered through the interface input screen webpage (the customized pet/customized sibling pet final selection form where the "buyer1" member enters upon starting the final selection of the customized pet) displayed on the customized pet buyer terminal 400 of Fig. 58, the 'save customized pet/customized sibling pet final selection form' 792 is clicked. Referring to Fig. 60, the customized pet buyer may exit entry of information anytime by clicking on an 'exit customized pet/customized sibling pet final selection form' icon 791. Upon completing the entry of the customized pet/customized sibling pet final selection form information, the customized pet buyer clicks on the 'save customized pet/customized sibling pet final selection form' 792. Then, the customized pet buyer terminal 400 transmits the customized pet/customized sibling pet final selection form information, about the target customized pet, entered for the item 731 to the pet selling/buying server 100. In other words, the terminal 400 of the "buyer1" member who is the customized pet buyer transmits the customized pet/customized sibling pet final selection form information indicating that the first-in-order customized pet value and first-in-order customized pet code value of the value 'customized sibling pet07 07' entered for the first-in-order customized pet are 'customized sibling pet07' and '07,' respectively, to the pet selling/buying server 100 (S176). Then, it is stored, as the customized pet final selection information for the "buyer1" member who is the customized pet buyer, in the buyer information DB 170 of the pet selling/buying server 100. Illustrated next is a process in which as the date for final selection of the second-in-order customized sibling pet, by the second-in-order customized sibling pet buyer, arrives, the customized sibling pet final selection is entered from the pet selling/buying server 100.

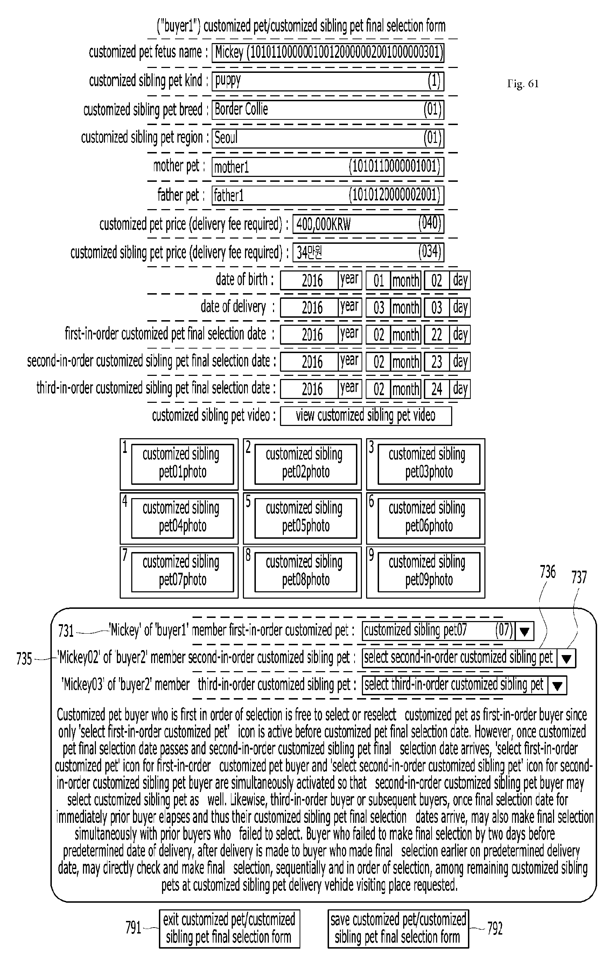

Figs. 61 to 63 are views illustrating examples of interface input screens for information of final selection of the favorite customized sibling pet among the customized sibling pets remaining after the customized pet buyer and the customized sibling pet buyer purchase on the customized sibling pet buyer terminal 500.

Referring to Figs. 61 to 63, Fig. 61 is a view illustrating an example of the interface input screen webpage (the customized pet/customized sibling pet final selection form where the "buyer 1" member enters upon starting the final selection of the customized sibling pet) displayed on the customized sibling pet buyer terminal 500. Referring to Fig. 61, the interface input screen webpage (the customized pet/customized sibling pet final selection form where the "buyer1" member enters upon starting the final selection of the customized sibling pet) displayed on the customized sibling pet buyer terminal 500 allows the customized sibling pet buyer to enter the customized pet/customized sibling pet final selection form information for the second-in-order customized sibling pet 735 that is supposed to be selected by the "buyer1" member who is the customized sibling pet buyer among the items constituting the customized pet/customized sibling pet final selection form information.

Described below is an embodiment in which where 'customized sibling pet04' is second to be selected by adding a target customized sibling pet, the customized sibling pet buyer enters the customized pet/customized sibling pet final selection form information for the target customized sibling pet through the customized pet and customized sibling pet final selection interface (i.e., the customized pet/customized sibling pet final selection form where the "buyer1" member enters upon starting the final selection of the customized sibling pet) displayed on the customized sibling pet buyer terminal 500.

For the second-in-order customized sibling pet 735 among the items constituting the customized pet/customized sibling pet final selection form information, the customized pet buyer mouse-clicks on the '▼' icon 737 for selecting the second-in-order customized sibling pet to enter the customized pet/customized sibling pet final selection form information for the target customized sibling pet.

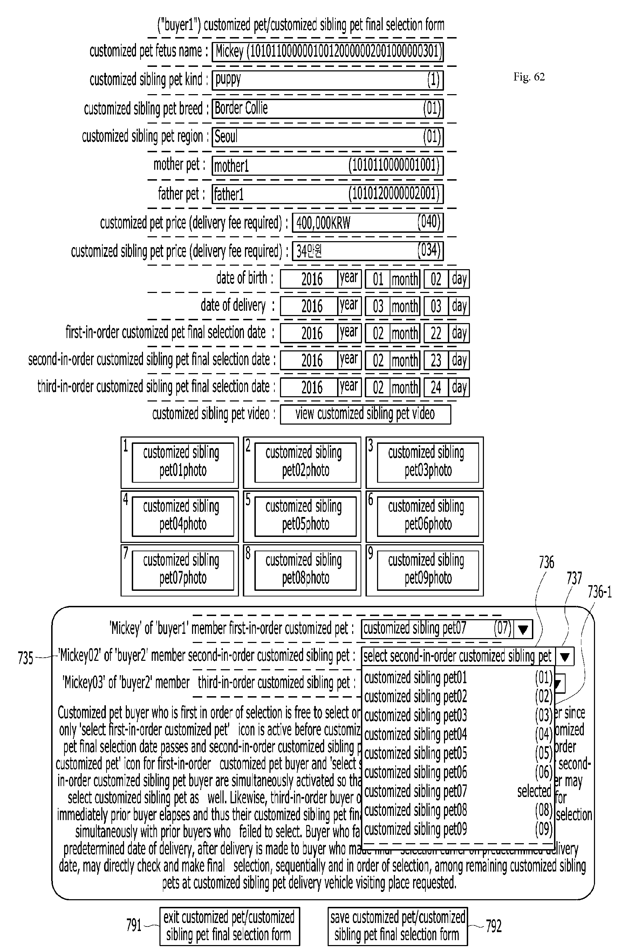

Fig. 62 illustrates an example in which the '▼' icon 737 for selecting the second-in-order customized sibling pet is clicked on the customized pet and customized sibling pet final selection interface displayed on the customized sibling pet buyer terminal 500 of Fig. 61. Referring to Fig. 61, clicking on the '▼' icon 737 allows a second-in-order customized sibling pet selection box 736-1 to pop up on the second-in-order customized sibling pet input box 736.

The second-in-order customized sibling pet selection box 736-1 lists up second-in-order customized sibling pets that may be entered for the second-in-order customized sibling pet. The second-in-order customized sibling pets include, e.g., customized sibling pet01 01, customized sibling pet02 02, customized sibling pet03 03, customized sibling pet04 04, customized sibling pet05 05, customized sibling pet06 06, selection complete, customized sibling pet08 08, and customized sibling pet09 09. The customized sibling pet buyer selects one from the second-in-order customized sibling pet list.

In this embodiment, the second-in-order customized sibling pet for the target customized sibling pet is assumed to be customized sibling pet04. Accordingly, the customized sibling pet buyer selects 'customized sibling pet04 04' from the second-in-order customized sibling pet list. 'Customized sibling pet04 04' selected is entered as the customized pet/customized sibling pet final selection form information of the second-in-order customized sibling pet for the target customized sibling pet.

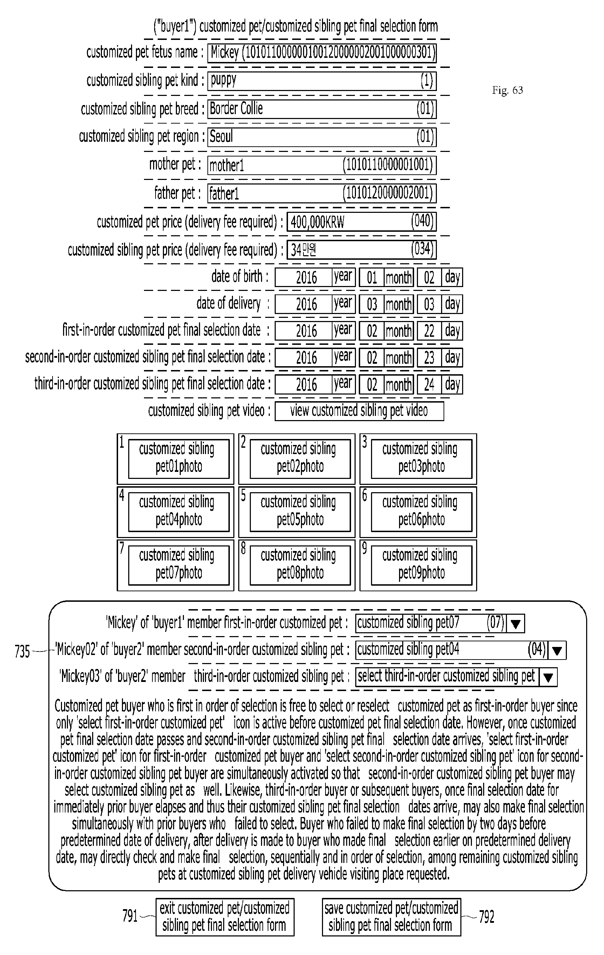

Fig. 63 illustrates an example in which after the customized pet/customized sibling pet final selection form information is entered to the customized pet and customized sibling pet final selection interface displayed on the customized sibling pet buyer terminal 500 of Fig. 61, the 'save customized pet/customized sibling pet final selection form' icon 792 is clicked.

Referring to Fig. 63, the customized sibling pet buyer may exit entry of information anytime by clicking on an 'exit customized pet/customized sibling pet final selection form' icon 791. Upon completing the entry of the customized pet/customized sibling pet final selection form information, the customized sibling pet buyer clicks on the 'save customized pet/customized sibling pet final selection form' 792.

Then, the customized sibling pet buyer terminal 500 transmits the customized pet/customized sibling pet final selection form information, about the target customized sibling pet, entered for the item 735 to the pet selling/buying server 100. In other words, the terminal 500 of the "buyer1" member who is the customized sibling pet buyer transmits the customized pet/customized sibling pet final selection form information indicating that the second-in-order customized sibling pet value and second-in-order customized sibling pet code value of the value 'customized sibling pet04 04' entered for the second-in-order customized sibling pet are 'customized sibling pet04' and '04,' respectively, to the pet selling/buying server 100 (S176).

Then, it is stored, as the customized sibling pet final selection information for the "buyer1" member who is the customized sibling pet buyer, in the buyer information DB 170 of the pet selling/buying server 100. For the buyers for whom the customized pet final selection information and customized sibling pet final selection information have been received by two days before the delivery date, customized sibling pet delivery vehicles, on the delivery dates, go to the places, that the buyers requested, in order of final selection, and if the buyers check, take, and pay for the balances, then all the process is finished (S182).

However, for the buyers, e.g., the "buyer2" member, for whom the customized pet and customized sibling pet final selection information has not been received by two days before the delivery date, delivery is made in order of reception of the final selection information. Then, the buyers, e.g., the "buyer2" member, for whom the final selection information has not been received, if they directly make final selection among the unselected, remaining customized sibling pets, take, and pay for the balances, at the customized sibling pet delivery vehicles that visit the places requested by the buyers in order of customized sibling pet final selection, all the process is then ended (S181).

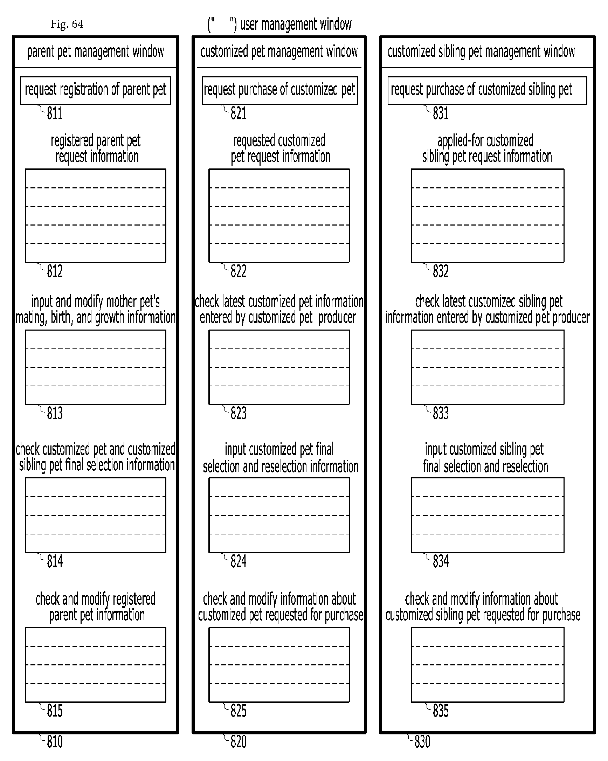

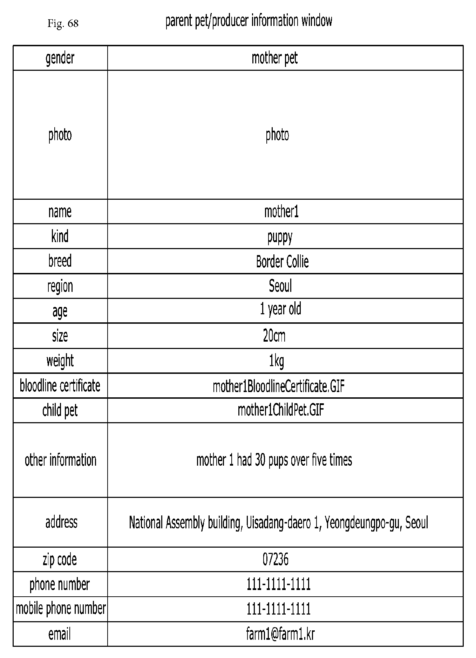

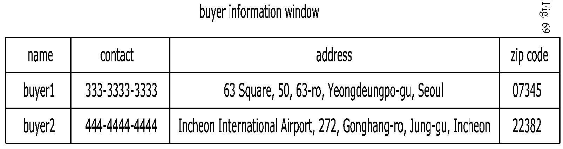

Figs. 64 to 69 are views illustrating examples of interface input screens for information for sale/purchase and management of pets on the website for users by the customized pet producer, customized pet buyer, and customized sibling pet buyer on the customized pet producer terminal, the customized pet buyer terminal, and the customized sibling pet buyer terminal.

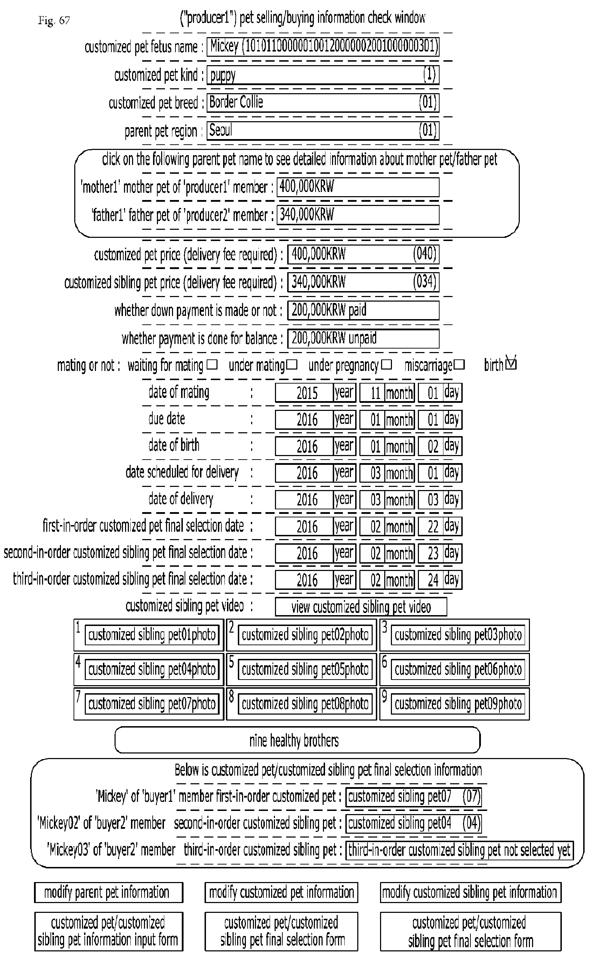

Fig. 64 is a view illustrating an example of a pet selling/buying management interface displayed on the user terminal 200. Referring to Fig. 64, the pet selling/buying management interface displayed on the customized pet producer terminal 300 allows the user to manage parent pets, such as linking to the parent pet information input form (Fig. 12) by clicking on the 'parent pet registration request' icon 811 in the parent pet management window 810 which is the first window among the items constituting the user management window information, linking to the pet selling/buying information check window (Fig. 67) by clicking on an item listed on the 'registered parent pet request information' output box 812, linking toi the customized pet/customized sibling pet information input form (Fig. 42) by clicking on one item listed on the 'mother pet mating, birth, growth information input and modification' output box 813, linking to the customized pet/customized sibling pet information input form (Fig. 42) by clicking one item listed on the 'customized pet and customized sibling pet buyer and final selection information check' output box 814, linking to the pet selling/buying information check window (Fig. 67) by clicking on one item listed on the 'customized pet and customized sibling pet final selection information check' output box 814, and linking to the parent pet information input form (Fig. 26) by clicking on one item listed on the 'check and modify registered parent pet information' output box 815. Through the customized pet management window 820 which is the second window, the user may manage the customized pet, such as linking to the customized pet search window (Fig. 28) by clicking on the 'request to buy customized pet' icon 821, linking to the pet selling/buying information check window (Fig. 67) by clicking on one item listed on the 'requested customized pet information' output box 822, linking to the pet selling/buying information check window (Fig. 67) by clicking on one item listed on the 'check latest customized pet information entered by customized pet producer' output box 823, linking to the customized pet/customized sibling pet final selection form (Fig. 58) by clicking on one item listed on the 'input customized pet final selection and reselection information' output box 824, and linking to the pet selling/buying information check window (Fig. 67) by clicking on one item listed on the 'check and modify information about customized pet requested for purchase' output box 825. Through the customized sibling pet management window 830 which is the third window, the user may manage the customized sibling pet, such as linking to the customized sibling pet search interface by clicking on the 'request to buy customized sibling pet' icon 831, linking to the pet selling/buying information check window (Fig. 67) by clicking on one item listed on the 'requested customized sibling pet information' output box 832, linking to the pet selling/buying information check window (Fig. 67) by clicking on one item listed on the 'check latest customized sibling pet information entered by customized pet producer' output box 833, linking to the customized pet/customized sibling pet final selection form (Fig. 58) by clicking on one item listed on the 'input customized sibling pet final selection and reselection information' output box 834, and linking to the pet selling/buying information check window (Fig. 67) by clicking on one item listed on the 'check and modify information about customized sibling pet requested for purchase' output box 835. Now described is an embodiment in which the "producer1" member and the "buyer 1" member use the user management window information.

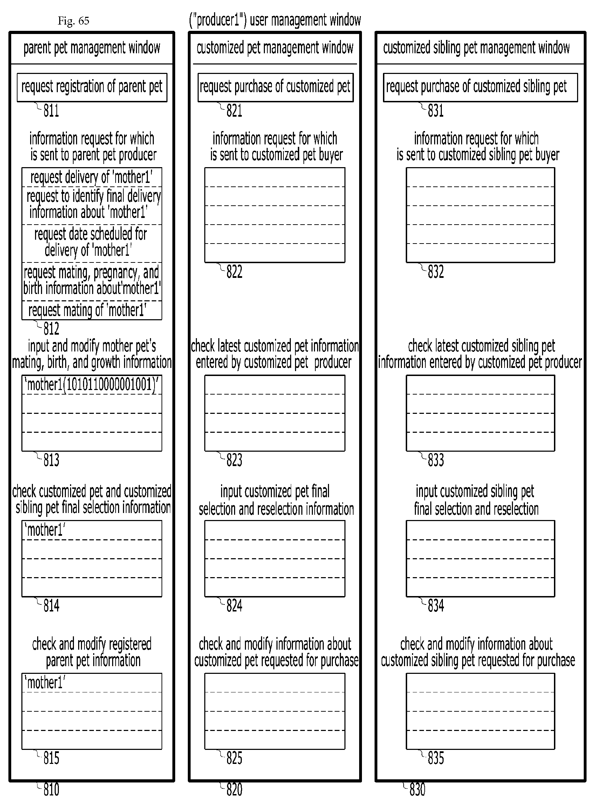

Referring to Fig. 65, if the "producer1" member accesses the user pet selling/buying management interface (i.e., the user management window for the "producer1" member's pet selling/buying management) displayed on the customized pet producer terminal 300, the member code value '0000001' is called in from the membership management DB 150 that the pet selling/buying server 100 provides. Then, in the 'registered parent pet request information' output box 812 formed in the first parent pet management window 810 of the user management window (Fig. 64), the member code value '0000001' for the "producer1" member is compared with the seven digits, from the seventh digit to the eleventh digit or from the 18th digit to the 24th digit, of the 36-digit customized pet code in the request information DB 180 of the pet selling/buying server 100, the request information value of the matching item is listed in the output box in order of latest registration date. In the 'input and modify parent pet mating, birth, and growth information' output box 813, the member code value '0000001' for the "producer1" member is compared with the digits, from the seventh digit to the 11th digit, of the 16-digit parent pet code in the producer information DB 160 of the pet selling/buying server 100, and parent pet name values of the mother pet items with the seventh digit of '1' in the 16-digit parent pet code value among the matching items are listed in their respective output boxes in order of latest registration. In the 'customized pet and customized sibling pet buyer and final selection information check' output box 814 and the 'check and modify registered parent pet information' output box 815, the member code value '0000001' of the "producer1" member is compared with the digits, from the 11th digit to the 13th digit, of the 16-digit parent pet code in the producer information DB 160 of the pet selling/buying server 100, and parent pet name values of matching items are listed in their respective output boxes in order of latest registration.

For example, if the list output from the 'registered parent pet request information' output box 812 configured in the parent pet management window 812 is 'mother1' [request mating], 'mother1' [request mating, pregnancy, birth information], 'mother1' [request scheduled delivery date information], and 'mother1' [request to check final delivery information], 'mother1' [request delivery] by the "producer1" member on the user pet selling/buying management interface displayed on the customized pet producer terminal 300, and for 'mother1' [request mating] among such pieces of information, the "buyer1" member selects 'mother1(1010110000001001)' which is registered by the "producer1" member as parent pet information available for selective mating and 'father1(1010120000002001)' which is registered by the "producer2" member as parent pet information available for selective mating, among the information stored in the producer information DB 160 provided by the pet selling/buying server 100, requests to purchase the customized pet, and pays for the customized pet down payment, then the pet selling/buying server 100 stores, in the request information DB 180 provided by the pet selling/buying server 100, 'mother1' as the name value, '1010110000001001' as the parent pet code value, and 'request mating' as the request information value, using the information 'mother1 (1010110000001001)' and 'father1' as the name value, '1010120000002001' as the parent pet code value, and 'request mating' as the request information value, using the information 'father1(1010120000002001).' Then, when the "producer1" member accesses the user pet selling/buying management interface, the member code value '0000001' for the "producer1" member is compared with the seven digits, from the seventh digit to the 13th digit, of the 16-digit parent pet code in the request information DB 180 provided by the pet selling/buying server 100, and request information values with the matching items are listed in order of latest registration dates in the 'registered parent pet request information' output box 812 configured in the parent pet management window 810 that is the first one among the piece of the user management window (Fig. 64).

In the 'requested customized pet request information' output box 822 configured as the second one in the customized pet management window 820, the member code value '0000001' for the "producer1" member is compared with the digits, from the 28th digit to the 34th digit, of the 36-digit customized pet code in the request information DB 180 provided by the pet selling/buying server 100, and request information values with the matching value are listed in order of latest registration dates. In the 'check latest customized pet information entered by customized pet producer' output box 823, the 'input customized pet final selection and reselection information' output box 824, and the 'check and modify customized pet information requested for purchase' output box 825, the member code value '0000001' for the "producer1" member is compared with the digits, from the 28th digit to the 34th digit, of the 36-digit customized pet code in the buyer information DB 160 of the pet selling/buying server 100, and customized pet fetus names with the matching item are listed in order of latest registration dates in their respective output boxes.

In the 'requested customized sibling pet request information' output box 832 configured as the third one in the customized sibling pet management window 830, the member code value '0000001' for the "producer1" member is compared with the digits, from the 28th digit to the 34th digit, of the 36-digit customized sibling pet code in the request information DB 180 provided by the pet selling/buying server 100, and request information values with the matching item are listed in order of latest registration dates. In the 'check latest customized sibling pet information entered by customized pet producer' output box 833, the 'input customized sibling pet final selection and reselection information' output box 834, and the 'check and modify customized sibling pet information requested for purchase' output box 835, the member code value '0000001' for the "producer1" member is compared with the digits, from the 28th digit to the 34th digit, of the 36-digit customized pet code in the buyer information DB 160 of the pet selling/buying server 100, and customized sibling pet name values with the matching value are listed in order of latest registration dates in their respective output boxes.

In this embodiment, the "producer1" member has only registered 'mother1,' which is a parent pet available for selective mating, as the parent pet. Thus, in the user pet selling/buying management interface displayed on the customized pet producer terminal 300, the request information value of 'mother1' is listed on the 'registered parent pet request information' output box 812 configured in the parent pet management window 810, 'mother1(1010110000001001)' is listed on the 'input and modify mother pet's mating, birth, and growth information' output box 813, 'mother1(1010110000001001)' is listed on the 'check customized pet and customized sibling pet final selection information' output box 814, and 'mother1(1010110000001001)' is listed on the 'check and modify registered parent pet information' output box 815. However, since neither the customized pet nor the customized sibling pet has been purchased, and thus, there is no matching value, no value is listed in the customized pet management window 820 and the customized sibling pet management window 830. For example, if the "producer1" member clicks on 'mother1(1010110000001001)' from the list output on the 'check and modify registered parent pet information' output box 815 configured in the parent pet management window 810 in the user pet selling/buying management interface displayed on the customized pet producer terminal 300, the parent pet code value '1010110000001001' for 'mother1' is compared with the digits, from the seventh digit to the 11th digit, of the 16-digit parent pet code in the producer information DB 160 of the pet selling/buying server 100, and parent pet information with the matching item is output on the parent pet information input form (Fig. 26) window in the user pet selling/buying management interface displayed on the customized pet producer terminal 300.

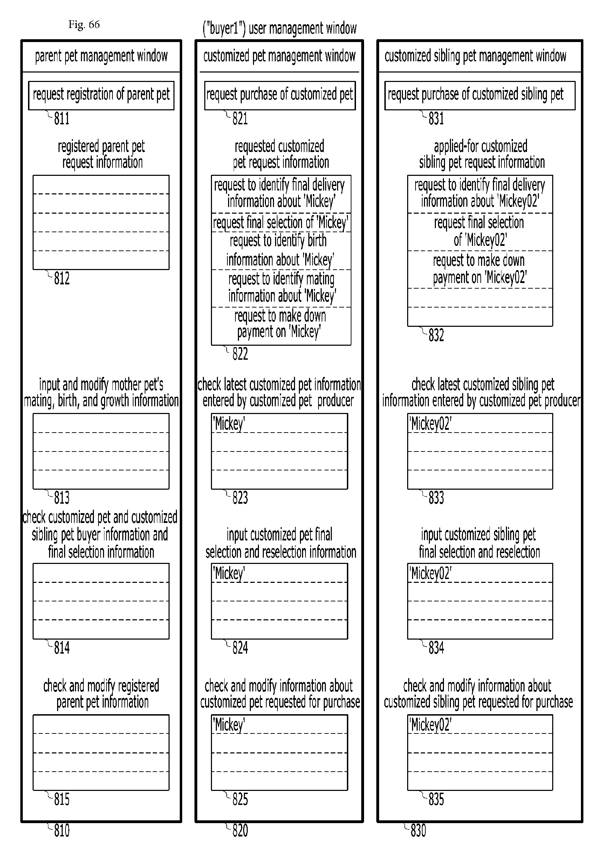

Referring to Fig. 66, if the "buyer1" member accesses the user pet selling/buying management interface displayed on the customized pet buyer terminal 400, the member code value '0000003' for the "buyer1" member is called in from the membership management DB 150 that the pet selling/buying server 100 provides. Then, in the 'registered parent pet request information' output box 812 formed in the first parent pet management window 810 of the user management window (Fig. 64), the member code value '0000003' for the "buyer1" member is compared with the seven digits, from the seventh digit to the eleventh digit or from the 18th digit to the 24th digit, of the 36-digit customized pet code in the request information DB 180 of the pet selling/buying server 100, the request information value of the matching item is listed in the output box in order of latest registration date. In the 'input and modify parent pet mating, birth, and growth information' output box 813, the member code value '0000003' for the "buyer1" member is compared with the digits, from the seventh digit to the 11th digit, of the 16-digit parent pet code in the producer information DB 160 of the pet selling/buying server 100, and parent pet name values of the mother pet items with the seventh digit of '1' in the 16-digit parent pet code value among the matching items are listed in their respective output boxes in order of latest registration. In the 'customized pet and customized sibling pet buyer and final selection information check' output box 814 and the 'check and modify registered parent pet information' output box 815, the member code value '0000003' of the "buyer1" member is compared with the digits, from the 11th digit to the 13th digit, of the 16-digit parent pet code in the producer information DB 160 of the pet selling/buying server 100, and parent pet name values of matching items are listed in their respective output boxes in order of latest registration.

In the 'requested customized pet request information' output box 822 configured as the second one in the customized pet management window 820, the member code value '0000003' for the "buyer1" member is compared with the digits, from the 28th digit to the 34th digit, of the 36-digit customized pet code in the request information DB 180 provided by the pet selling/buying server 100, and request information values with the matching value are listed in order of latest registration dates. In the 'check latest customized pet information entered by customized pet producer' output box 823, the 'input customized pet final selection and reselection information' output box 824, and the 'check and modify customized pet information requested for purchase' output box 825, the member code value '0000003' for the "buyer1" member is compared with the digits, from the 28th digit to the 34th digit, of the 36-digit customized pet code in the buyer information DB 160 of the pet selling/buying server 100, and customized pet fetus names with the matching item are listed in order of latest registration dates in their respective output boxes.

In the 'requested customized sibling pet request information' output box 832 configured as the third one in the customized sibling pet management window 830, the member code value '0000003' for the "buyer1" member is compared with the digits, from the 28th digit to the 34th digit, of the 36-digit customized sibling pet code in the request information DB 180 provided by the pet selling/buying server 100, and request information values with the matching item are listed in order of latest registration dates. In the 'check latest customized sibling pet information entered by customized pet producer' output box 833, the 'input customized sibling pet final selection and reselection information' output box 834, and the 'check and modify customized sibling pet information requested for purchase' output box 835, the member code value '0000003' for the "buyer1" member is compared with the digits, from the 28th digit to the 34th digit, of the 36-digit customized pet code in the buyer information DB 160 of the pet selling/buying server 100, and customized sibling pet name values with the matching value are listed in order of latest registration dates in their respective output boxes.

In the instant embodiment, the "buyer1" member has requested to buy 'Mickey' which is the customized pet and 'Mickey02" which is the customized sibling pet. Thus, since the "buyer1" member has registered no parent pet available for selective mating, no value is listed in the parent pet management window 810 configured in the user management window (Fig. 65) in the user pet selling/buying management interface displayed on the customized pet buyer terminal 400.

However, the request information value for 'Mickey' is listed in the 'requested customized pet request information' output box 822 in the customized pet management window 820, 'Mickey(101011000000100120000002001000000301)' is listed in the 'check latest customized pet information entered by customized pet producer' output box 823, 'Mickey(101011000000100120000002001000000301)' is listed in the 'input customized pet final selection and reselection information' output box 824, and 'Mickey(101011000000100120000002001000000301)' is listed in the 'check and modify customized pet information requested for purchase' output box 825. Likewise, the request information value for 'Mickey02' is listed in the 'requested customized sibling pet request information' output box 822 in the customized sibling pet management window 830, 'Mickey02(101011000000100120000002001000000302)' is listed in the 'check latest customized sibling pet information entered by customized pet producer' output box 833, 'Mickey02(101011000000100120000002001000000302)' is listed in the 'input customized sibling pet final selection and reselection information' output box 834, and 'Mickey02(101011000000100120000002001000000302)' is listed in the 'check and modify customized sibling pet information requested for purchase' output box 835. For example, if the "buyer1" member clicks on 'Mickey02(101011000000100120000002001000000302)' from the list output on the 'check latest customized sibling pet information entered by customized pet producer' output box 833 configured in the customized sibling pet management window 830 in the user pet selling/buying management interface displayed on the customized sibling pet buyer terminal 500, then, in the user pet selling/buying management interface displayed on the customized sibling pet buyer terminal 500, '0000001' which is from the seventh digit to the 11th digit of the 36-digit customized sibling pet code value, '101011000000100120000002001000000302,' for 'Mickey02' is compared with the digits, from the seventh digit to the 11th digit, of the 16-digit parent pet code in the producer information DB 160 of the pet selling/buying server 100, and the customized pet producer information, the customized pet buyer information with the item for which the first 34 digits, '1010110000001001200000020010000003,' of the 36-digit customized sibling pet code value, '101011000000100120000002001000000302,' for 'Mickey02' match the first 34 digits of the 36-digit customized pet code value in the buyer information DB 170 of the pet selling/buying server 100, and the customized sibling pet buyer information with the item for which the first 34 digits, '1010110000001001200000020010000003,' of the 36-digit customized sibling pet code value, '101011000000100120000002001000000302,' for 'Mickey02' match the first 34 digits of the 36-digit customized sibling pet code value in the buyer information DB 170 of the pet selling/buying server 100 are output to their respective items of the customized sibling pet purchase request information. Further, as an example, if the "buyer2" member clicks on one item listed on the 'input customized pet final selection and reselection information' output box 834, it is linked to the customized pet/customized sibling pet final selection form (Fig. 58). At this time, as the information about the "buyer1" member which is the item for which the first 34 digits '1010110000001001200000020010000003' of the 36-digit customized pet code value '101011000000100120000002001000000403' for 'Mickey03' which is the customized sibling pet requested for purchase by the "buyer2" member match the first 34 digits of the 36-digit customized pet code value in the buyer information DB 170 of the pet selling/buying server 100, "buyer1," "Mickey," and "customized sibling pet07 07" are output, as the name value, the customized pet fetus name, and the first-in-order customized pet value, respectively, to corresponding positions 731 and 732 for the first-in-order customized pet; as the information about the "buyer1" member for whom the value, from the 35th digit to the 36th digit, of the 36-digit customized sibling pet code value of the customized sibling pet buyer information with the item for which the first 34 digits of the 36-digit customized sibling pet code value in the buyer information DB 170 of the pet selling/buying server 100 match, is '02,' "buyer1," "Mickey02," and "customized sibling pet04 04," are output, as the name value, customized sibling pet name value, and second-in-order customized sibling pet value, respectively, to corresponding positions 734 and 735 of the second-in-order customized sibling pet; as the information about the "buyer2" member for whom the value, from the 35th digit to the 36th digit, of the 36-digit customized sibling pet code value of the customized sibling pet buyer information with the item for which the first 34 digits of the 36-digit customized sibling pet code value in the buyer information DB 170 of the pet selling/buying server 100 match, is '03,' "buyer2," and "Mickey03" are output, as the name value and customized sibling pet name value, respectively, to a corresponding position 737 of the third-in-order customized sibling pet, the selection boxes 738 and 739 are activated so that only the third-in-order customized sibling pet can be finally selected, while the first-in-order customized pet selection box 733 and the second-in-order customized sibling pet selection box 736 are not activated.

As such, in the online, per-buyer customized pet selective mating and selling/buying system, if the producer enters parent pets available for selective mating to the online website, the buyer retrieves the parent pets entered, requests selective mating, and buys a born pet on the online website. Thus, as compared with the conventional art in which the producer randomly mates parent pets and sells born pets to buyers, the producer may sell various kinds of pets at relatively low prices without overstock.

The present invention may provide a pet selling/buying method that may address the problem that some pet buyers, although desiring various buying selections for pets, cannot but to choose ones among pets already born, save purchase costs for pets through selective mating and hence customized production, and lower the rate of diseases and death.

If payment is made S181 and S182, the pet selling/buying server 100 may transfer the customized sibling pet sale handling fee to the account of the customized pet buyer. Thus, the customized pet buyer may directly make a profit by receiving the handling fee. If the customized pet buyer and the customized sibling pet buyer run a pet hospital, pet shop, or other relevant business, they may indirectly make a profit from customers. They may also secure higher reliability from customers visiting their shops to buy pets by providing customized pets or customized sibling pets of a good bloodline.

The pet selling/buying method of the present invention is also applicable to stock or all other kinds of animals as well as pets. In this case, the items constituting the body information about the target animal may be modified to fit the animal, and the selective mating and buying method may also be modified accordingly.

For pigs as an example, a buyer searches for parent pigs available for selective mating, which have been entered online by a pig producer, and requests mating. If the parent pigs produce piglets, the buyer may buy the piglets alive, or after growing in the buyer's desired rearing method and to a desired size and slaughtering them, buy the meat.

Although specific embodiments of the present invention have been described above, various changes may be made thereto without departing from the scope of the present invention. Thus, the scope of the present invention should not be limited to the above-described embodiments, and should rather be defined by the following claims and equivalents thereof.

As such, it should be appreciated that although the present invention has been shown and described in connection with a limited number of embodiments thereof, various changes in form or detail may be made thereto by those skilled in the art. Thus, the spirit of the present invention should be grasped only by the appended claims, and all equivalents or modifications thereto belong to the caregory of the spirit of the present invention.

## Claims

1. A method for selling and buying a pet, executed on a pet selling/buying server, the method comprising the steps of:
providing a customized pet down payment request message to a customized pet buyer terminal upon receiving customized pet purchase request information containing a mother pet and a father pet from the customized pet buyer terminal;
requesting to mate the father pet and the mother pet by providing the customized pet purchase request information to a corresponding customized pet producer terminal upon receiving customized pet down payment information from the customized pet buyer terminal;
receiving information according to the mating of the father pet and the mother pet from the customized pet producer terminal and providing the information to the customized pet buyer terminal;
providing information about customized sibling pets born by the mating of the father pet and the mother pet from the customized pet producer terminal to the customized pet buyer terminal and a customized sibling pet buyer terminal; and
processing sale and purchase upon receiving customized sibling pet final selection information from the customized pet buyer terminal or receiving customized sibling pet purchase request information from the customized sibling pet buyer terminal.

2. The method of claim 1, wherein the step of processing the sale and purchase upon receiving receiving the customized sibling pet final selection information from the customized pet buyer terminal or receiving the customized sibling pet purchase request information from the customized sibling pet buyer terminal includes the steps of:
receiving the customized sibling pet purchase request information about other customized sibling pets than a customized pet selected by the customized pet buyer from among the customized sibling pets from the customized sibling pet buyer terminal;
providing a customized sibling pet down payment request message to the customized sibling pet buyer terminal;
upon receiving customized sibling pet down payment information from the customized sibling pet buyer terminal, providing the customized sibling pet final selection information to the customized sibling pet buyer terminal; and
processing the sale and purchase according to the customized sibling pet final selection information received from the customized sibling pet buyer terminal.

3. The method of claim 1, wherein the step of processing the sale and purchase upon receiving receiving the customized sibling pet final selection information from the customized pet buyer terminal or receiving the customized sibling pet purchase request information from the customized sibling pet buyer terminal includes the steps of:
upon receiving the customized pet and customized sibling pet final selection information from the customized pet buyer terminal or the customized sibling pet buyer terminal, providing a message to request delivery of the customized pet and the customized sibling pet via a customized sibling pet delivery vehicle on a predetermined delivery date to the customized pet producer terminal; and
after receiving the customized pet and the customized sibling pet from the customized sibling pet delivery vehicle, receiving a payment for a balance for the customized pet and the customized sibling pet from the customized pet buyer or the customized sibling pet buyer.

4. The method of claim 1, further comprising the step of remitting a portion of price of the customized pet corresponding to the number of customized sibling pets to an account of the customized pet buyer if there are users who purchase the customized sibling pets.

5. A pet selling/buying server, comprising:
a producer information DB storing information about parent pets that may be selectively mated and registered by a customized pet producer and information about customized sibling pets born by selective mating performed by the customized sibling pet;
a buyer information DB storing information about a customized pet for which a customized pet buyer requests selective mating and information about a customized sibling pet for which a customized sibling pet buyer requests for selective mating;
a member information DB storing membership information about each of a normal user, the customized pet producer, the customized pet buyer, and the customized sibling pet buyer;
a request information DB used to exchange necessary information among the customized pet producer, the customized pet buyer, and the customized sibling pet buyer; and
a controller providing a customized pet down payment request message to a terminal of the customized pet buyer upon receiving customized pet purchase request information containing a mother pet and a father pet, which are retrieved via the producer information DB, from the customized pet buyer terminal, requesting to mate the father pet and the mother pet by providing the customized pet purchase request information to a corresponding terminal of the customized pet producer upon receiving customized pet down payment information from the customized pet buyer terminal, storing the information about the customized pet for which the mating is requested in the buyer information DB, receiving information according to the mating of the father pet and the mother pet from the customized pet producer terminal and providing the information to the customized pet buyer terminal, providing information about customized sibling pets born by the mating of the father pet and the mother pet from the customized pet producer terminal to the customized pet buyer terminal and a terminal of the customized sibling pet buyer, and processing sale and purchase using the member information DB upon receiving customized sibling pet final selection information from the customized pet buyer terminal or receiving customized sibling pet purchase request information from the customized sibling pet buyer terminal.

6. The pet selling/buying server of claim 5, wherein the controller receives the customized sibling pet purchase request information about other customized sibling pets than a customized pet selected by the customized pet buyer from among the customized sibling pets from the customized sibling pet buyer terminal, provides a customized sibling pet down payment request message to the customized sibling pet buyer terminal, and upon receiving customized sibling pet down payment information from the customized sibling pet buyer terminal, provides the customized sibling pet final selection information to the customized sibling pet buyer terminal, and processes the sale and purchase according to the customized sibling pet final selection information received from the customized sibling pet buyer terminal.

7. The pet selling/buying server of claim 5, wherein the controller, upon receiving the customized pet and customized sibling pet final selection information from the customized pet buyer terminal or the customized sibling pet buyer terminal, provides a message to request delivery of the customized pet via a customized sibling pet delivery vehicle on a predetermined delivery date to the customized pet producer terminal, and after receiving the customized pet and the customized sibling pet from the customized sibling pet delivery vehicle, receives a payment for a balance for the customized pet and the customized sibling pet from the customized pet buyer or the customized sibling pet buyer.

8. The pet selling/buying server of claim 5, wherein the controller remits a portion of price of the customized pet corresponding to the number of customized sibling pets to an account of the customized pet buyer if there are users who purchase the customized sibling pets.
